(19) Europäisches Patentamt / European Patent Office / Office européen des brevets

(11) **EP 3 115 965 B1**

(12) **EUROPEAN PATENT SPECIFICATION**

(45) Date of publication and mention of the grant of the patent:
**26.09.2018 Bulletin 2018/39**

(51) Int Cl.:
*G06T 7/00* (2017.01)  *G06T 7/40* (2017.01)

(21) Application number: **16174586.4**

(22) Date of filing: **15.06.2016**

(54) **DETECTION DEVICE, DISPARITY VALUE DERIVING DEVICE, OBJECT RECOGNIZING DEVICE, DEVICE CONTROL SYSTEM, DETECTION METHOD, AND PROGRAM**

DETEKTIONSVORRICHTUNG, DISPARITÄTSWERTABLEITUNGSVORRICHTUNG, OBJEKTERKENNUNGSVORRICHTUNG, VORRICHTUNGSSTEUERUNGSSYSTEM, DETEKTIONSVERFAHREN UND PROGRAMM

DISPOSITIF DE DÉTECTION, DISPOSITIF DE DÉRIVATION DE VALEUR DE DISPARITÉ, DISPOSITIF DE RECONNAISSANCE D'OBJET, SYSTÈME DE COMMANDE DE DISPOSITIF, PROCÉDÉ DE DÉTECTION ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2015 JP 2015121475**
**28.07.2015 JP 2015148992**
**12.04.2016 JP 2016079780**

(43) Date of publication of application:
**11.01.2017 Bulletin 2017/02**

(73) Proprietor: **Ricoh Company, Ltd.**
**Tokyo 143-8555 (JP)**

(72) Inventors:
• **SEKIGUCHI, Hiroyoshi**
  **Tokyo, 143-8555 (JP)**
• **WATANABE, Eita**
  **Tokyo, 143-8555 (JP)**
• **MOTOHASHI, Naoki**
  **Tokyo, 143-8555 (JP)**

(74) Representative: **Schwabe - Sandmair - Marx Patentanwälte Rechtsanwalt Partnerschaft mbB**
**Joseph-Wild-Straße 20**
**81829 München (DE)**

(56) References cited:

• **HAYES K C JR ET AL: "Texture coarseness: Further experiments", IEEE TRANSACTIONS ON SYSTEMS, MAN AND CYBERNETICS, IEEE INC. NEW YORK, US, vol. SMC-4, no. 5, 1 September 1974 (1974-09-01), pages 467-472, XP008085092,**
• **MITCHELL ET AL: "A Max-Min Measure for Image Texture Analysis", IEEE TRANSACTIONS ON COMPUTERS., vol. C-26, no. 4, 1 April 1977 (1977-04-01), pages 408-414, XP055315784, US ISSN: 0018-9340, DOI: 10.1109/TC.1977.1674850**
• **A. ROSENFELD: "A Note on Automatic Detection of Texture Gradients", IEEE TRANSACTIONS ON COMPUTERS., vol. C-24, no. 10, 1 October 1975 (1975-10-01), pages 988-991, XP055315776, US ISSN: 0018-9340, DOI: 10.1109/T-C.1975.224106**
• **Bizhan Nikravan: "IMAGE DATA ACQUISITION, PROCESSING AND OBJECT RECOGNITION FOR USE IN A MACHINE VISION SYSTEM", PhD thesis - Department of Mechanical Engineering, 1 August 1987 (1987-08-01), XP055315760, Leeds Retrieved from the Internet: URL:http://etheses.whiterose.ac.uk/332/1/uk_bl_ethos_378045.pdf [retrieved on 2016-11-02]**
• **ROSENFELD AZRIEL ET AL: "VISUAL TEXTURE ANALYSIS", IP.COM JOURNAL, IP.COM INC., WEST HENRIETTA, NY, US, 29 March 2007 (2007-03-29), XP013119061, ISSN: 1533-0001**

EP 3 115 965 B1

- MITTAL AJAY ET AL: "Obstacle detection by means of stereo feature matching", 2014 IEEE INTERNATIONAL CONFERENCE ON IMAGE PROCESSING (ICIP), IEEE, 27 October 2014 (2014-10-27), pages 1618-1622, XP032966865, DOI: 10.1109/ICIP.2014.7025324 [retrieved on 2015-01-28]

**Description**

BACKGROUND OF THE INVENTION

1. Field of the Invention

The present invention relates to a detection device, a disparity value deriving device, an object recognizing device, a device control system, a detection method, and a program.

2. Description of the Related Art

Typically, in the safety of vehicles, from a viewpoint of the degree of protection of pedestrians and the protection of drivers and passengers at the time of collisions between the pedestrians and the vehicles, body structures of the vehicles have been developed. However, in recent years, according to the developments of information processing technologies and image processing technologies, technologies for detecting persons and vehicles at high speed have been developed. By applying such technologies, vehicles have already been developed which prevent collisions in advance by automatically applying the brakes before the vehicles collide with objects. In order to automatically apply the brakes, it is necessary to accurately measure distances up to objects such as a person and the other vehicles, and, for this reason, ranging with use of millimeter wave radar, a laser radar as well as raging with use of a stereo camera are practically used.

By acquiring a disparity image by using a stereo camera including an imaging unit that acquires two images by performing imaging from two mutually-different viewpoints, the three-dimensional position and the three-dimensional size of an object such as a person or one of the other vehicles are accurately detected, and a distance up to the object can be measured. In order to acquire disparity of a certain pixel in a captured image, a matching process for determining a position, at which a pixel corresponding to a certain pixel in a reference image used as the reference is positioned, within a search range of a comparison image is performed. Then, after all the matching processes for the search range end, a position at which the degree of matching is highest is determined as a most probable disparity value.

However, in the process of acquiring the disparity of an object having a pattern of repetition (hereinafter, referred to as a repeated pattern) in the external view or the shape, such as a building window, a tile wall, or a fence as an image, and calculating the disparity of the object; there are cases where two or more matching positions appear, and there are cases where a most probable disparity value is incorrectly determined. In a case where such a phenomenon occurs, for example, an incorrect distance of an object (having a repeated pattern) that is actually located far is measured as if the object is closely located. In the case, for example, in a system automatically applying the brakes to a vehicle in a case where an object located at a short distance is detected through ranging with use of a stereo camera, a so-called "erroneous application", in which the brakes are incorrectly applied at a location at which the brakes do not need to be applied, is caused.

Regarding harmful effects according to a repeated pattern, a technology in which a comparison unit that detects a repeated pattern by generating a reference image and comparing the generated reference image with an input image is arranged has been proposed (Japanese Patent No. 5409237).

The present invention has an object to provide a detection device capable of detecting a pattern with a relatively low load of image processing.

MITCHELL ET AL: "A Max-Min Measure for Image Texture Analysis", IEEE TRANSACTIONS ON COMPUTERS., vol. C-26, no. 4, 1 April 1977 (1977-04-01), pages 408-414, XP055315784, US ISSN: 0018-9340, DOI: 10.1109/TC.1977.1674850, describes a technique for image texture analysis which uses the relative frequency of local extremes in grey level as the principal measure. This method is invariant to multiplicative gain changes (such as caused by changes in illumination level or film processing) and is invariant to image resolution and sampling rate of the image is not undersampled. The algorithm described is computationally simple and can be implemented in hardware for real-time analysis. Comparisons are made between this method and the spatial dependence method of texture analysis using 49 samples of each of eight textures.

In the publication of HAYES K C JR ET AL: "Texture coarseness: Further experiments", IEEE TRANSACTIONS ON SYSTEMS, MAN AND CYBERNETICS, IEEE INC. NEW YORK, US, vol. SMC-4, no. 5, 1 September 1974 (1974-09-01), pages 467-472, XP008085092, several measures of texture coarseness based on average "best" edge size or spot size in one or two dimensions were computed for texture samples having a known scale ratio. The results were highly consistent, but they fell short of yielding the given ration.

According to A. ROSENFELD: "A Note on Automatic Detection of Texture Gradients", IEEE TRANSACTIONS ON COMPUTERS., vol. C-24, no. 10, 1 October 1975 (1975-10-01), pages 988-991, XP055315776, US ISSN: 0018-9340, DO1: 10.1109/T-C.1975.224106, the rate and direction of maximum change of texture coarseness across a surface are important cues to the orientation of the surface relative to the observer. This note describes a simple method of automatically detecting these "texture gradients".

The publication of Bizhan Nikravan: "IMAGE DATA ACQUISITION, PROCESSING AND OBJECT RECOGNITION OFR USE IN A MACHINE VISION SYSTEM", PhD thesis - Department of Mechanical Engineering, 1 August 1987 (1987-08-01), XP055315760, Leeds concerns a preliminary approach for fast shape recognition of randomly positioned and oriented components. The results obtained indicate that this goal can be achieved by the use of the techniques of contour tracing, Fourier and surface texture analysis and shape from shading methods.

According to ROSENFELD AZRIEL ET AL: "VISUAL TEXTURE ANALYSIS", IP.COM JOURNAL, IP. COM INC., WESR HENRIETTA, NY, US, 29 March 2007 (2007-03-29), XP013119061, ISSN: 1533-0001, differentiation between the coarseness of samples of a given texture may be successfully effected using any of the following measures: amount of edge per unit area, self-match (as measured by sum of absolute differences) over a unit shift, gray value dependency or number of relative extrema per unit area.

The conference paper "Obstacle detection by means of stereo feature matching" by Ajay Mittal et al. published at the IEEE INTERNATIONAL CONFERENCE ON IMAGE PROCESSING in October 2014 discloses an obstacle detection solution based on matching colour edge features (i.e. related to texture) in stereo image pairs.

SUMMARY OF THE INVENTION

The invention is defined by the independent claims, whereas the dependent claims are directed to advantageous embodiments.

According to one aspect of the present invention, a detection device includes an acquisition unit, a slope calculating unit, an extremum detecting unit, a counting unit, and a determination unit. The acquisition unit acquires each pixel value of a captured image acquired by imaging an object by an imaging unit, as a target pixel value. The slope calculating unit calculates each slope between adjacent two points on a graph representing a change in pixel values within a predetermined search range starting at a pixel corresponding to each target pixel value. The extremum detecting unit detects extremums of the pixel values based on the slopes. The counting unit counts the number of extremums whose pixel value is in a predetermined range among the extremums detected by the extremum detecting unit in the search range. When the number is equal to or larger than a predetermined threshold, the determination unit determines that a pixel corresponding to the target pixel value is included in an image area of a repeated pattern of the captured image.

According to the present invention, a pattern can be detected with a relatively low load of image processing.

BRIEF DESCRIPTION OF THE DRAWINGS

FIG. 1 is a diagram that illustrates a principle of deriving a distance from an imaging unit to an object;
FIGS. 2A and 2B are schematic diagrams that illustrate a case where a correspondence pixel in a comparison image corresponding to a reference pixel in a reference image is acquired;
FIG. 3 is a diagram that illustrates an example of a graph of a result of a matching process;
FIG. 4 is a diagram that illustrates another example of a graph of a result of a matching process;
FIGS. 5A and 5B are diagrams that illustrate an example in which a device control system according to a first embodiment is mounted in a vehicle;
FIG. 6 is a diagram that illustrates an example of the external appearance of an object recognizing device according to the first embodiment;
FIG. 7 is a diagram that illustrates an example of the hardware configuration of the object recognizing device according to the first embodiment;
FIG. 8 is a diagram that illustrates an example of the functional block configuration of the object recognizing device according to the first embodiment;
FIG. 9 is a diagram that illustrates an example of the functional block configuration of a pattern detecting unit of the object recognizing device according to the first embodiment;
FIG. 10 is a diagram that illustrates an example of the functional block configuration of a disparity value calculation processing unit of the object recognizing device according to the first embodiment;
FIG. 11 is a flowchart that illustrates an example of the operation of a block matching process performed by a disparity value deriving unit according to the first embodiment;
FIG. 12 is a flowchart that illustrates an example of the operation of a repeated pattern detection process performed by the disparity value deriving unit according to the first embodiment;
FIG. 13 is a diagram that illustrates an example of a graph of luminance values (pixel values) of a reference image;
FIG. 14 is a diagram that illustrates an example of the functional block configuration of a pattern detecting unit of an object recognizing device according to a second embodiment;

FIG. 15 is a diagram that illustrates an example of an image in which non-target areas are specified;

FIG. 16 is a diagram that illustrates an example of a graph of luminance values in which a low-frequency component is present;

FIG. 17 is a diagram that illustrates an example of the functional block configuration of an object recognizing device according to a third embodiment;

FIGS. 18A and 18B are diagrams that illustrate examples of a high-frequency emphasis filter;

FIGS. 19A and 19B are diagrams that illustrate an example of graphs before and after a filter process performed by a filter processing unit of the object recognizing device according to the third embodiment;

FIGS. 20A and 20B are diagrams that illustrate other examples of a high-frequency emphasis filter;

FIGS. 21A and 21B are diagrams that illustrate another example of graphs before and after a filter process performed by a filter processing unit of the object recognizing device according to the third embodiment;

FIG. 22 is a diagram that illustrates an example of a graph of luminance values including repeated portions and a flat portion;

FIG. 23 is a diagram that illustrates an example of a graph of luminance values having mutually-different periods;

FIG. 24 is a diagram that illustrates an example of the functional block configuration of a pattern detecting unit of an object recognizing device according to a fifth embodiment;

FIG. 25 is a diagram that illustrates a state in which a line of an image is divided into N areas;

FIG. 26 is a diagram that illustrates an example of the functional block configuration of an object recognizing device according to a sixth embodiment;

FIG. 27 is a diagram that illustrates an example of the functional block configuration of a rejection unit of the object recognizing device according to the sixth embodiment;

FIGS. 28A and 28B are diagrams that illustrate the operation of a clustering process performed by a clustering unit of a recognition processing unit according to the sixth embodiment;

FIGS. 29A and 29B are diagrams that illustrate the operation of the clustering process performed by the clustering unit of the recognition processing unit according to the sixth embodiment;

FIGS. 30A to 30D are diagrams that illustrate examples of partial images extracted by the clustering process;

FIG. 31 is a flowchart that illustrates an example of the operation of a rejection determination process performed by a rejection unit of the recognition processing unit according to the sixth embodiment;

FIG. 32 is a flowchart that illustrates an example of the operation of a rejection determination process performed by a rejection unit of a recognition processing unit according to a seventh embodiment;

FIG. 33 is a flowchart that illustrates an example of the operation of the rejection determination process performed by the rejection unit of the recognition processing unit according to a modified example of the seventh embodiment;

FIGS. 34A to 34E are diagrams that illustrate a Fourier transform of luminance values according to the modified example of the seventh embodiment;

FIG. 35 is a diagram that illustrates an example of the functional block configuration of a rejection unit of an object recognizing device according to an eighth embodiment;

FIG. 36 is a diagram that illustrates an example of the functional block configuration of a rejection determination unit of the rejection unit according to the eighth embodiment;

FIG. 37A is a diagram that illustrates an example of pattern detection image;

FIG. 37B is a diagram that illustrates an example of a histogram generated by a histogram generating unit of the rejection determination unit according to the eighth embodiment;

FIG. 38 is a flowchart that illustrates an example of the operation of a rejection determination process performed by a rejection unit of a recognition processing unit according to the eighth embodiment;

FIG. 39 is a diagram that illustrates an example of the functional block configuration of a rejection determination unit of a rejection unit according to a ninth embodiment; and

FIG. 40 is a flowchart that illustrates an example of the operation of a rejection determination process performed by a rejection unit of a recognition processing unit according to the ninth embodiment.

The accompanying drawings are intended to depict exemplary embodiments of the present invention and should not be interpreted to limit the scope thereof. Identical or similar reference numerals designate identical or similar components throughout the various drawings.

DETAILED DESCRIPTION OF THE PREFERRED EMBODIMENTS

Overview of Distance Measuring Method Using Block Matching Process

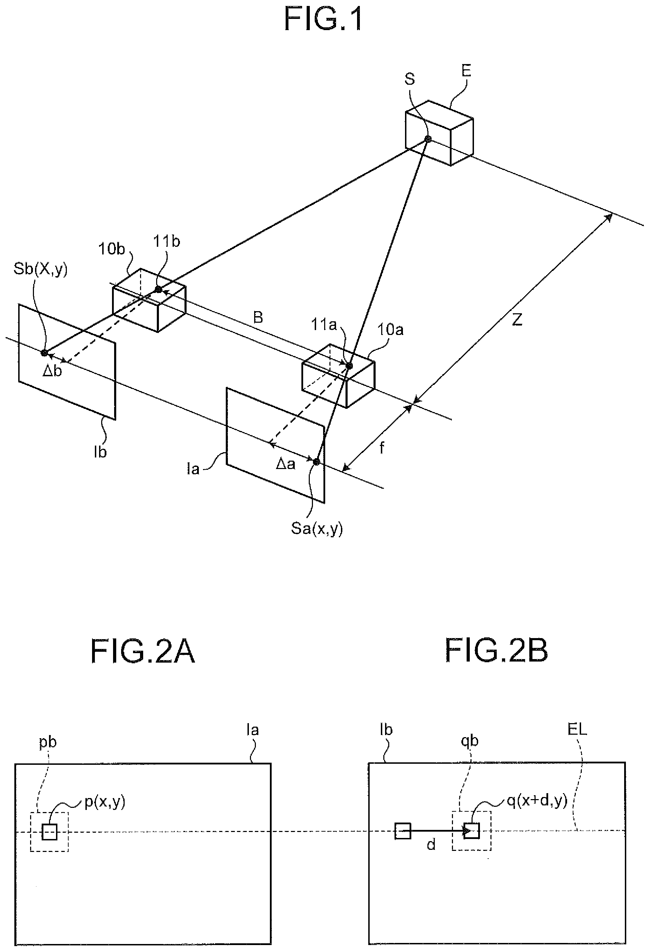

First, an overview of a ranging method using a block matching process will be described with reference to FIGS. 1 to 4.

Principle of Ranging

FIG. 1 is a diagram that illustrates a principle of deriving a distance from an imaging unit to an object. A principle of deriving disparity of an object from a stereo camera through a stereo matching process and measuring a distance from the stereo camera to the object based on a disparity value representing the disparity will be described with reference to FIG. 1.

An imaging system illustrated in FIG. 1 includes an imaging unit 10a (an imaging unit) and an imaging unit 10b (another imaging unit) that are arranged at parallel equi-positions. The imaging units 10a and 10b respectively include imaging lenses 11a and 11b that form images of an object on an image sensor that is a solid-state imaging device by refracting incident light. Here, images captured by the imaging units 10a and 10b are set as a reference image Ia and a comparison image Ib. In FIG. 1, a point S on an object E in a three-dimensional space is mapped to positions on a straight line parallel to a straight line joining the imaging lens 11a and the imaging lens 11b in the reference image Ia and the comparison image Ib. Here, the point S mapped to the reference image Ia is a point Sa(x, y) while the point S mapped to the comparison image Ib is a point Sb(X, y). At this time, a disparity value dp is represented as in the following Equation (1) by using the point Sa(x, y) in the coordinates on the reference image Ia and the point Sb(X, y) in the coordinates on the comparison image Ib.

$$dp = X - x \qquad (1)$$

In the case illustrated in FIG. 1, when a distance between the point Sa(x, y) of the reference image Ia and an intersection between a perpendicular line pulled down from the imaging lens 11a onto an imaging surface and the imaging surface is Δa, and a distance between the point Sb(X, y) of the comparison image Ib and an intersection between a perpendicular line pulled down from the imaging lens 11b onto an imaging surface and the imaging surface is Δb, the disparity value dp can be represented as dp = Δa + Δb.

Next, by using the disparity value dp, a distance Z between the imaging units 10a and 10b and the object E is derived. Here, the distance Z is a distance from a straight line joining the focal position of the imaging lens 11a and the focal position of the imaging lens 11b to the point S on the object E. As illustrated in FIG. 1, by using the focal length f of the imaging lens 11a and the imaging lens 11b, a baseline length B that is a distance between the imaging lens 11a and the imaging lens 11b, and the disparity value dp, the distance Z can be calculated according to the following Equation (2).

$$Z = (B \times f)/dp \qquad (2)$$

According to Equation (2), it can be understood that, as the disparity value dp increases, the distance Z decreases, and, as the disparity value dp decreases, the distance Z increases.

Block Matching Process

Next, a ranging method using a block matching process will be described with reference to FIGS. 2A to 4.

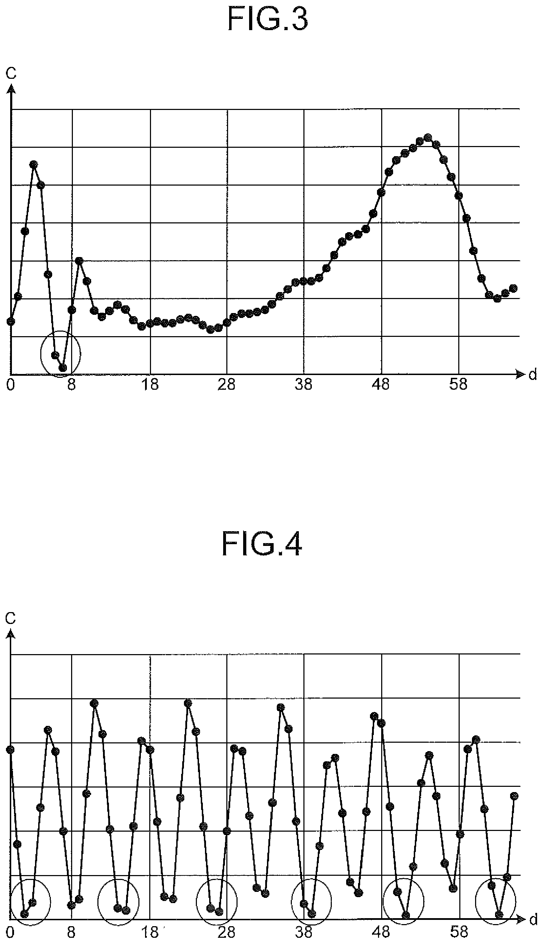

FIGS. 2A and 2B are schematic diagrams that illustrate a case where a correspondence pixel in a comparison image corresponding to a reference pixel in a reference image is acquired. FIG. 3 is a diagram that illustrates an example of a graph of a result of the matching process. FIG. 4 is a diagram that illustrates another example of a graph of a result of the matching process.

A method of calculating a cost value C(p, d) will be described with reference to FIGS. 2A to 4. In the following description, C(p, d) represents C(x, y, d).

FIG. 2A represents a conceptual diagram that illustrates a reference pixel p in the reference image Ia and a reference area pb. FIG. 2B is a conceptual diagram at the time of calculating a cost value C by sequentially shifting a candidate for the correspondence pixel in the comparison image Ib corresponding to the reference pixel p illustrated in FIG. 2A. Here, the "correspondence pixel" represents a pixel in the comparison image Ib that is the most similar to the reference pixel p in the reference image Ia. In addition, the cost value C is an evaluation value (degree of matching) representing the degree of similarity or dissimilarity of each pixel in the comparison image Ib with respect to the reference pixel p in the reference image Ia. In the following description, the cost value C is an evaluation value representing the degree of dissimilarity representing that the degree of similarity of the pixel in the comparison image Ib to the reference pixel p is higher as the value becomes smaller.

As illustrated in FIG. 2A, based on a luminance value (a pixel value) of the reference pixel p(x, y) of the reference image Ia and luminance values of candidate pixels q(x + d, y) that are candidates for the correspondence pixel, which is on an epipolar line EL, in the comparison image Ib corresponding to the reference pixel p(x, y) in the reference image Ia, a cost value C(p, d) of each candidate pixel q(x + d, y) for the correspondence pixel corresponding to the reference pixel p(x, y) is calculated. Here, d represents a shift amount (deviation amount) between the reference pixel p and each candidate pixel q, and the shift amount d is incremented by one pixel. In other words, in the example illustrated in FIG. 3, by sequentially shifting a candidate pixel q(x + d, y) by one pixel in a range (for example, 0 < d < 25) designated in advance, a cost value C(p, d) that is the degree of dissimilarity between each of the luminance values of candidate pixels q(x + d, y) and a luminance value of the reference pixel p(x, y) is calculated. In addition, in order to acquire the correspondence pixel in the comparison image Ib corresponding to the reference pixel p in the reference image Ia, in this embodiment, a block matching process is performed as a matching process. In the block matching process, the degree of dissimilarity between a reference area pb that is a predetermined area having the reference pixel p in the reference image Ia as its center and a candidate area qb (the size is the same as that of the reference area pb) having the candidate pixel q of the comparison image Ib as its center is acquired. As a cost value C representing the degree of dissimilarity between the reference area pb and the candidate area qb, a sum of absolute difference (SAD), a sum of squared difference _(SSD), a zero-mean-sum of squared difference (ZSSD) acquired by subtracting an average value of each block from the value of an SSD or the like is used. Such an evaluation value becomes smaller as the correlation is higher (the degree of similarity is higher) and thus, represents the degree of dissimilarity.

As described above, the imaging units 10a and 10b are arranged at parallel equi-positions, and accordingly, the reference image Ia and the comparison image Ib have a parallel equi-position relation as well. Accordingly, the correspondence pixel in the comparison image Ib that corresponds to the reference pixel p in the reference image Ia is supposed to be present on an epipolar line EL represented as a line in the horizontal direction on the sheet face in FIGS. 2A and 2B. Thus, in order to acquire the correspondence pixel in the comparison room Ib, a search is made for pixels, which are on the epipolar line EL, in the comparison image Ib.

Cost values C(p, d) calculated in such a block matching process are represented, for example, by the graph illustrated in FIG. 3 in relation with the shift amount d. In the example illustrated in FIG. 3, the cost value C has a minimum value in a case where the shift amount d = 7 and is derived as a disparity value dp = 7.

However, for an image including an object having a repeated pattern in the external view, the shape, or the like such as a building window, a tile wall, or a fence, in the process of acquiring the disparity of the object, there are cases where two or more matching positions appear, and there are cases where a most probable disparity value is incorrectly determined. For example, in the graph of the cost value C illustrated in FIG. 4 acquired through the block matching process, the cost value C periodically goes up and down according to the repeated pattern of an object, and a most probable disparity value dp cannot be specified based on a minimum value of the cost value C. In a case where such a phenomenon occurs, for example, an incorrect distance (disparity value dp) of an object (having a repeated pattern) that is actually located far is measured as if the object is closely located. In the case, for example, in a system automatically applying the brakes to a vehicle in a case where an object located at a short distance is detected through ranging with use of a stereo camera, a so-called "erroneous application", in which the brakes are incorrectly applied at a location at which the brakes do not need to be applied, is caused. In this way, disparity values (distance) of pixels included in an image area of a repeated pattern have low reliability.

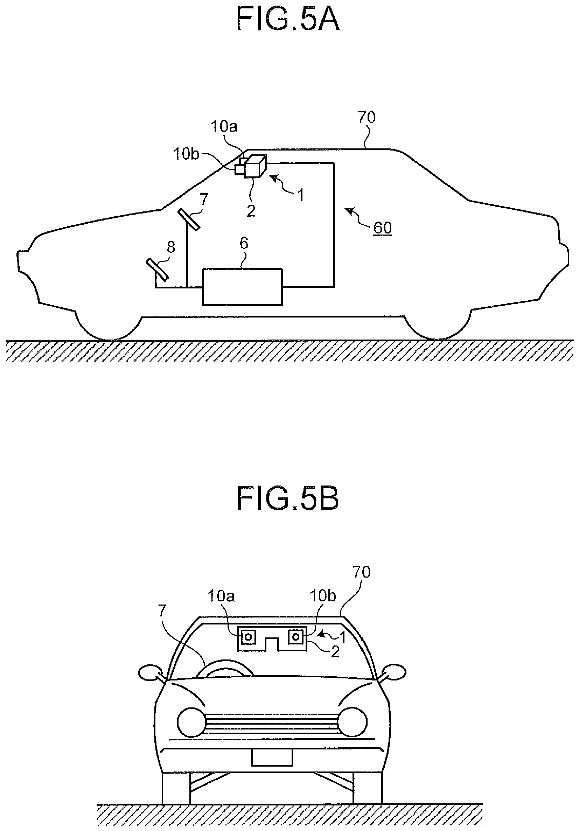

In embodiments described below, details of a process (hereinafter, referred to as a repeated pattern detection process) detecting whether pixels included in a reference image Ia are included in an image area of a repeated pattern by using a luminance value (pixel value) of the reference image Ia will be described. Hereinafter, a detection device, a disparity value deriving device, an object recognizing device, a device control system, a detection method, and a program according to embodiments of the present invention will be described in detail with reference to FIGS. 5A to 25.

First Embodiment

Hereinafter, a first embodiment will be specifically described with reference to FIGS. 5A to 13. Here, a case will be described as an example in which an object recognizing device 1 performing a block matching process is mounted in a vehicle.

Schematic Configuration of Vehicle Including Object Recognizing Device

FIGS. 5A and 5B are diagrams that illustrate an example in which a device control system according to the first embodiment is mounted in a vehicle. The vehicle 70 in which the device control system 60 according to the first embodiment is mounted will be described with reference to FIGS. 5A and 5B. FIG. 5A is a side view of the vehicle 70 in which the device control system 60 is mounted, and FIG. 5B is a front view of the vehicle 70.

As illustrated in FIGS. 5A and 5B, the vehicle 70 that is a car includes the device control system 60. The device control system 60 includes an object recognizing device 1 installed to a vehicle room that is a living space of the vehicle 70, a vehicle control device 6 (control device), a steering wheel 7, and a brake pedal 8.

The object recognizing device I has an imaging function of imaging the traveling direction of the vehicle 70 and, for example, is installed near a rearview mirror inside a front window of the vehicle 70. The object recognizing device 1, which will be described in detail later, includes a main body unit 2, an imaging unit 10a, and an imaging unit 10b. The imaging units 10a and 10b are fixed to the main body unit 2 such that an object disposed in the traveling direction of the vehicle 70 can be imaged.

The vehicle control device 6 is an electronic control unit (ECU) that performs various vehicle control processes based on recognition information received from the object recognizing device 1. As examples of the vehicle control processes, the vehicle control device 6, based on the recognition information received from the object recognizing device 1, performs steering control avoiding an obstacle by controlling a steering system (an example of a control target) including the steering wheel 7, brake control for decelerating and stopping the vehicle 70 by controlling the brake pedal 8 (an example of the control target), and the like.

By performing vehicle control such as the steering control and the brake control as in the device control system 60 including the object recognizing device 1 and the vehicle control device 6, the safety of driving the vehicle 70 can be improved.

In this way, while the object recognizing device 1 images the front side of the vehicle 70, the embodiment is not limited thereto. In other words, the object recognizing device 1 may be installed to image the rear side or the lateral side of the vehicle 70. In such a case, the object recognizing device 1 can detect the position of a following vehicle on the rear side of the vehicle 70, another vehicle traveling parallel on the lateral side, or the like. Then, the vehicle control device 6 can detect a risk at the time of changing the lane of the vehicle 70, at the time of merging lanes, or the like and perform the vehicle control described above. In addition, in a backward operation at the time of parking the vehicle 70 or the like, in a case where the presence of a risk of a collision is determined based on recognition information for an obstacle disposed on the rear side of the vehicle 70 output from the object recognizing device 1, the vehicle control device 6 can perform the vehicle control described above.

Configuration of Object Recognizing Device

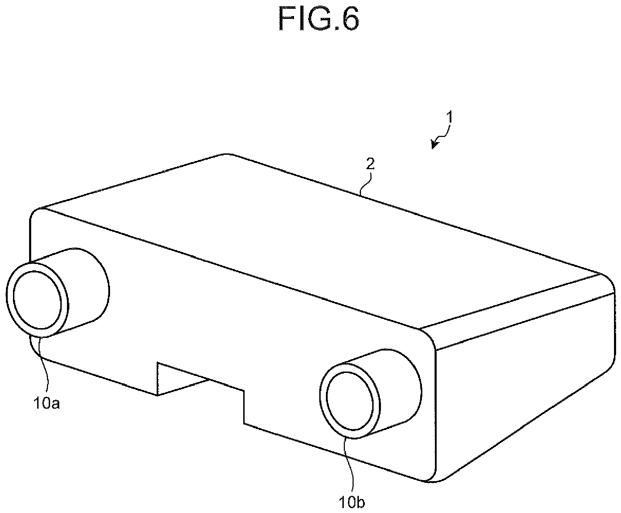

FIG. 6 is a diagram that illustrates an example of the external appearance of the object recognizing device according to the first embodiment. As illustrated in FIG. 6, the object recognizing device 1, as described above, includes the main body unit 2 and the imaging unit 10a and the imaging unit 10b that are fixed to the main body unit 2. The imaging units 10a and 10b are configured by one pair of cameras of a cylindrical shape arranged at parallel equi-positions with respect to the main body unit 2. For the convenience of description, the imaging unit 10a illustrated in FIG. 6 will be referred to as a "right" camera, and the imaging unit 10b will be referred to as a "left" camera.

Hardware Configuration of Object Recognizing Device

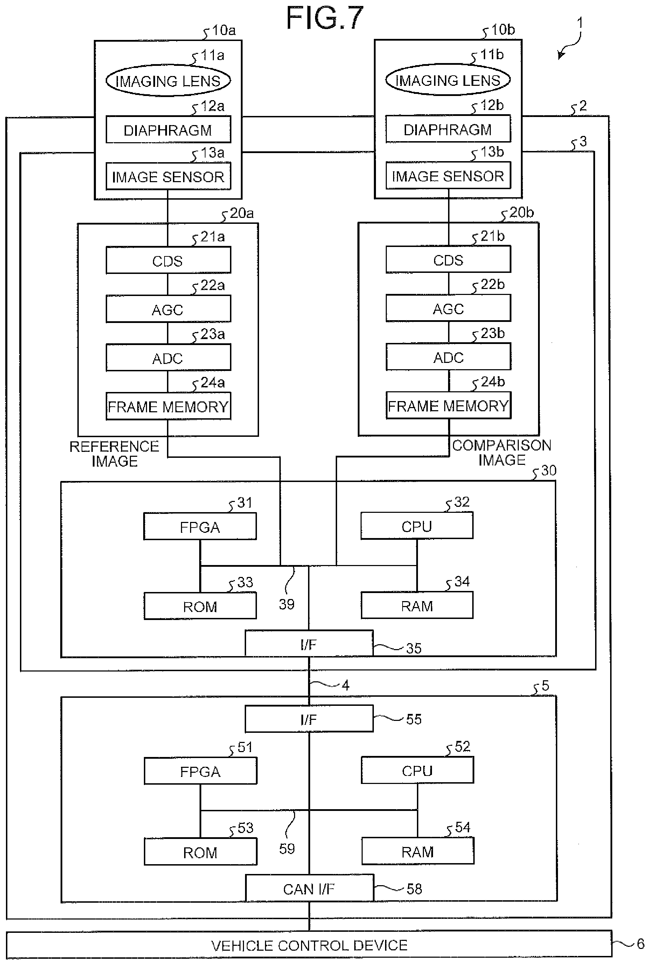

FIG. 7 is a diagram that illustrates an example of the hardware configuration of the object recognizing device according to the first embodiment. The hardware configuration of the object recognizing device 1 will be described with reference to FIG. 7.

As illustrated in FIG. 7, the object recognizing device 1 (an example of an object recognizing device) includes a disparity value deriving unit 3 (an example of a disparity value deriving device) and a recognition processing unit 5 (a recognition unit) in the main body unit 2.

The disparity value deriving unit 3 derives a disparity value dp representing disparity of an object E from a plurality of images acquired by imaging the object E and outputs a disparity image representing a disparity value dp in each pixel. The recognition processing unit 5, based on the disparity image output from the disparity value deriving unit 3, performs a process of measuring a distance from the imaging units 10a and 10b to the object E and the like.

As illustrated in FIG. 7, the disparity value deriving unit 3 includes an imaging unit 10a, an imaging unit 10b, a signal converting unit 20a, a signal converting unit 20b, and an image processing unit 30.

The imaging unit 10a is a processing unit that generates an analog image signal by imaging an object disposed on the front side. The imaging unit 10a includes an imaging lens 11a, a diaphragm 12a, and an image sensor 13a.

The imaging lens 11a is an optical device used for forming an image of an object on the image sensor 13a by refracting incident light. The diaphragm 12a is a member that adjusts the amount of light incident to the image sensor 13a by blocking a part of light passing through the imaging lens 11a. The image sensor 13a is a semiconductor device that converts light incident to the imaging lens 11a and passing through the diaphragm 12a into an electric analog image signal. The image sensor 13a, for example, is implemented by a solid state imaging device such as a charge coupled device (CCD) or a complementary metal oxide semiconductor (CMOS).

The imaging unit 10b is a processing unit that generates an analog image signal by imaging an object disposed on the front side. The imaging unit 10b includes an imaging lens 11b, a diaphragm 12b, and an image sensor 13b. The functions of the imaging lens 11b, the diaphragm 12b, and the image sensor 13b are similar to the functions of the imaging lens 11a, the diaphragm 12a and the image sensor 13a described above, respectively. The imaging lens 11a and the imaging lens 11b are installed to have lens surfaces thereof disposed on a same plane such that the left and right cameras perform imaging under same conditions.

The signal converting unit 20a is a processing unit that converts an analog image signal generated by the imaging unit 10a into image data of a digital form. The signal converting unit 20a includes a correlated double sampling (CDS) 21a, an automatic gain control (AGC) 22a, an analog digital converter (ADC) 23a, and a frame memory 24a.

The CDS 21a eliminates noises of an analog image signal generated by the image sensor 13a using correlated double sampling, a horizontal-direction differential filter, a vertical-direction smoothing filter, or the like. The AGC 22a performs gain control controlling the intensity of an analog image signal from which noises have been eliminated by the CDS 21a. The ADC 23a converts the analog image signal of which the gain is controlled by the AGC 22a into image data of a digital form. The frame memory 24a stores therein the converted image data acquired by the ADC 23a.

The signal converting unit 20b is a processing unit that converts an analog image signal generated by the imaging unit 10b into image data of a digital form. The signal converting unit 20b includes a CDS 21b, an AGC 22b, an ADC 23b, and a frame memory 24b. The functions of the CDS 21b, the AGC 22b, the ADC 23b, and the frame memory 24b are similar to the functions of the CDS 21a, the AGC 22a, the ADC 23a, and the frame memory 24a described above, respectively.

The image processing unit 30 is a device that performs image processing for the converted image data acquired by the signal converting unit 20a and the signal converting unit 20b. The image processing unit 30 includes a field programmable gate array (FPGA) 31, a central processing unit (CPU) 32, a read only memory (ROM) 33, a random access memory (RAM) 34, an interface (I/F) 35, and a bus line 39.

The FPGA 31 is an integrated circuit and, here, performs a process of deriving a disparity value dp in an image based on image data. The CPU 32 controls each function of the disparity value deriving unit 3. The ROM 33 stores therein an image processing program executed by the CPU 32 for controlling each function of the disparity value deriving unit 3. The RAM 34 is used as a work area of the CPU 32. The I/F 35 is an interface used for communicating with the I/F 55 of the recognition processing unit 5 through a communication line 4. The bus line 39, as illustrated in FIG. 7, is an address bus, a data bus, and the like connecting the FPGA 31, the CPU 32, the ROM 33, the RAM 34, and the I/F 35 to be communicable with one another.

While the image processing unit 30 has been described to include the FPGA 31 as an integrated circuit deriving a disparity value dp, the embodiment is not limited thereto but may be an integrated circuit such as an application specific integrated circuit (ASIC).

As illustrated in FIG. 7, the recognition processing unit 5 includes an FPGA 51, a CPU 52, a ROM 53, a RAM 54, an I/F 55, a controller area network (CAN) I/F 58, and a bus line 59.

The FPGA 51 is an integrated circuit and, here, performs a recognition process for an object based on a disparity image received from the image processing unit 30. The CPU 52 controls each function of the recognition processing unit 5. The ROM 53 stores therein a recognition processing program executed by the CPU 52 for performing a recognition process of the recognition processing unit 5. The RAM 54 is used as a work area of the CPU 52. The I/F 55 is an interface used for communicating with the I/F 35 of the image processing unit 30 through the communication line 4. The CAN I/F 58 is an interface used for communicating with an external controller (for example, the vehicle control device 6 illustrated in FIG. 7) and, for example, is connected to a CAN or the like of a vehicle. The bus line 59, as illustrated in FIG. 7, is an address bus, a data bus, and the like connecting the FPGA 51, the CPU 52, the ROM 53, the RAM 54, the I/F 55, and the CAN I/F 58 to be communicable with one another.

By employing such a configuration, when a disparity image is transmitted from the I/F 35 of the image processing unit 30 to the recognition processing unit 5 through the communication line 4, according to an instruction supplied from the CPU 52 of the recognition processing unit 5, the FPGA 51 calculates a distance Z between the imaging units 10a and 10b and the object E and performs a recognition process for an object based on the disparity image.

In addition, each program described above may be recorded on a computer-readable recording medium in an installable form or an executable form and be circulated. Such a recording medium is a compact disc read only memory (CD-ROM), a secure digital (SD) memory card, or the like.

Functional Block Configuration of Object Recognizing Device and Operation of Each Functional Block

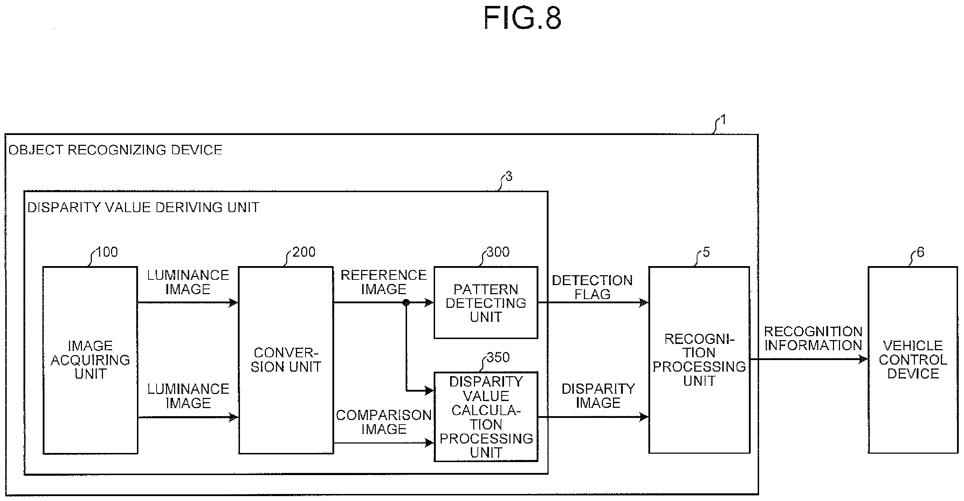

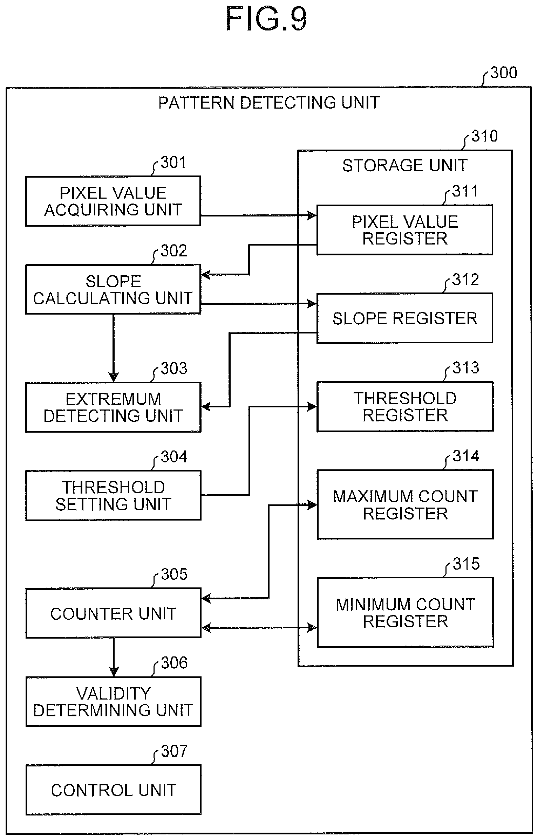

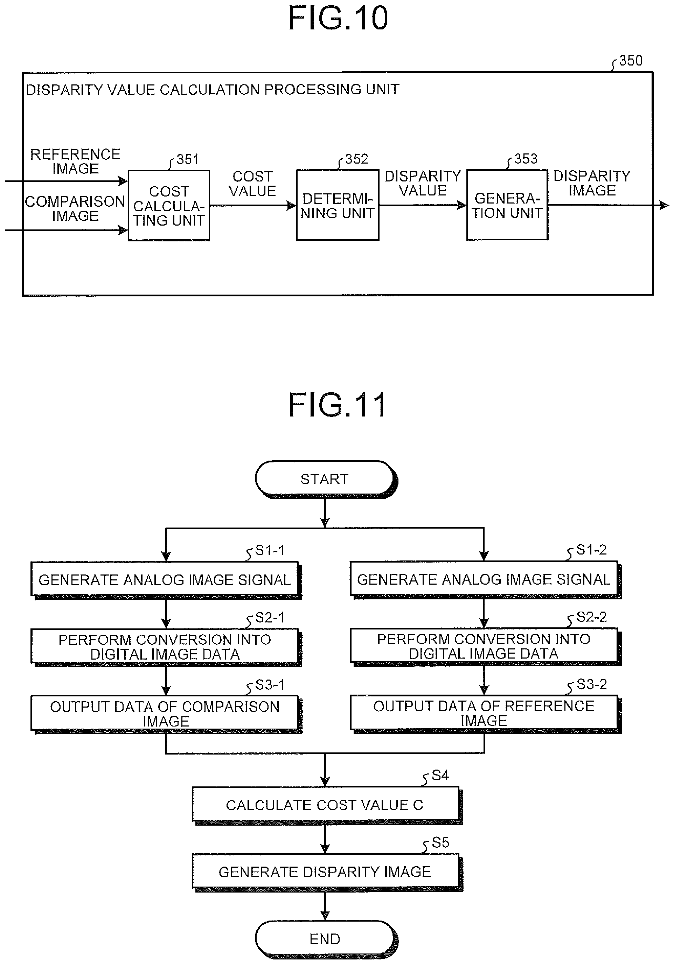

FIG. 8 is a diagram that illustrates an example of the functional block configuration of the object recognizing device according to the first embodiment. FIG. 9 is a diagram that illustrates an example of the functional block configuration of a pattern detecting unit of the object recognizing device according to the first embodiment. FIG. 10 is a diagram that illustrates an example of the functional block configuration of a disparity value calculation processing unit of the object recognizing device according to the first embodiment. The configuration of functional blocks of a main part of the object recognizing device 1 and the operation of each of the functional blocks will be described with reference to FIGS.

8 to 10.

While also described above with reference to FIG. 7, as illustrated in FIG. 8, the object recognizing device I includes the disparity value deriving unit 3 and the recognition processing unit 5. The disparity value deriving unit 3 includes an image acquiring unit 100, a conversion unit 200, a pattern detecting unit 300, and a disparity value calculation processing unit 350 (disparity value calculating unit).

The image acquiring unit 100 is a functional unit that generates analog image signals by imaging an object present on the front side by using two cameras of the left and right cameras and acquires two luminance images that are images based on the image signals. The image acquiring unit 100 is implemented by the imaging unit 10a and the imaging unit 10b illustrated in FIG. 7.

The conversion unit 200 is a functional unit that eliminates noises from image data of the two luminance images acquired by the image acquiring unit 100, converts the image data into image data of a digital form, and outputs the converted image data. Here, out of image data (hereinafter, simply, referred to as luminance images) of the two luminance images output by the conversion unit 200, image data captured by the right camera (imaging unit 10a) of the image acquiring unit 100 will be set as image data (hereinafter, simply, referred to as a reference image Ia) of the reference image Ia, and image data captured by the left camera (imaging unit 10b) will be set as image data (hereinafter, simply, referred to as a comparison image Ib) of the comparison image Ib. In other words, the conversion unit 200 outputs the reference image Ia and the comparison image Ib based on the two luminance images output from the image acquiring unit 100. The conversion unit 200 is implemented by the signal converting units 20a and 20b illustrated in FIG. 7.

The pattern detecting unit 300 is a functional unit that performs a repeated pattern detection process detecting whether each pixel in the reference image Ia is included in an image area of a repeated pattern based on the luminance value (pixel value) of the reference image Ia received from the conversion unit 200. The pattern detecting unit 300 outputs information indicating whether each pixel in the reference image Ia is included in an image area of a repeated pattern to the recognition processing unit 5 as a detection flag. Here, the reference image Ia that is a target for the repeated pattern detection process performed by the pattern detecting unit 300, for example, is configured by pixels of luminance values having 8-bit gray scales. The "detection device" may be the pattern detecting unit 300 or may be the disparity value deriving unit 3 or the object recognizing device 1 including the pattern detecting unit 300.

The disparity value calculation processing unit 350 is a functional unit that derives a disparity value for each pixel in the reference image Ia based on the reference image Ia and the comparison image Ib received from the conversion unit 200 and generates a disparity image in which a disparity value is associated with each pixel in the reference image Ia. The disparity value calculation processing unit 350 outputs the generated disparity image to the recognition processing unit 5.

The recognition processing unit 5, based on the disparity image and the detection flag output from the disparity value deriving unit 3, performs various recognition processes such as measurement of a distance from the imaging units 10a and 10b to the object E and outputs recognition information that is information representing results of the recognition processes to the vehicle control device 6.

The image acquiring unit 100, the conversion unit 200, the pattern detecting unit 300, and the disparity value calculation processing unit 350 of the disparity value deriving unit 3 illustrated in FIG. 8 conceptually represent the functions, and the embodiment is not limited to such a configuration. For example, a plurality of functional units illustrated as independent functional units of the disparity value deriving unit 3 illustrated in FIG. 8 may be configured as one functional unit. Alternatively, the functions of one functional unit of the disparity value deriving unit 3 illustrated in FIG. 8 may be divided into a plurality of parts and configured as a plurality of functional units.

As illustrated in FIG. 9, the pattern detecting unit 300 includes a pixel value acquiring unit 301 (acquisition unit), a slope calculating unit 302, an extremum detecting unit 303, a threshold setting unit 304 (setting unit), a counter unit 305 (counting unit), a validity determining unit 306 (determination unit), a control unit 307, and a storage unit 310. The storage unit 310 includes storage areas of a pixel value register 311, a slope register 312, a threshold register 313, a maximum count register 314, and a minimum count register 315.

The pixel value acquiring unit 301 is a functional unit that acquires pixel values (luminance values) (target pixel values) of pixels that are targets for the repeated pattern detection process from the reference image Ia input to the pattern detecting unit 300. In addition, the pixel value acquiring unit 301 writes the acquired pixel values into the pixel value register 311 at predetermined timing.

The slope calculating unit 302 is a functional unit that calculates, based on a difference between adjacent pixel values of pixels positioned on a line of the reference image Ia, each slope between the adjacent two pixel values. To be more specific, the slope calculating unit 302 calculates each slope between adjacent two points on a graph representing a change in pixel values within a predetermined search range starting at a pixel corresponding to each target pixel value. In addition, the slope calculating unit 302 writes the calculated slopes into the slope register 312 at predetermined timing.

The extremum detecting unit 303 is a functional unit that detects a maximum (local maximum) when the slope calculated by the slope calculating unit 302 changes from positive to negative and a minimum (local minimum) when the slope changes from negative to positive.

The threshold setting unit 304 is a functional unit that sets a range of thresholds used for determining whether to count the number of maximums or minimums based on the pixel value (local maximum value) of the maximum or the pixel value (local minimum value) of the minimum detected by the extremum detecting unit 303. Here, the "range of thresholds" includes a range (a first range) between a maximum upper limit value UU and a maximum lower limit value UL and a range (second range) between a minimum upper limit value LU and a minimum lower limit value LL.

The counter unit 305 is a functional unit that counts up a maximum count (first number) and minimum count (second number) in a case where the pixel value of the maximum or the minimum detected by the extremum detecting unit is within the threshold range.

The validity determining unit 306 is a functional unit that determines whether a pixel in the reference image Ia that is a target to be subjected to the repeated pattern detection process is included in an image area of a repeated pattern (whether the reliability of a pixel value of the pixel is low), so as to determine validity of a disparity value of the pixel. More specifically, the validity determining unit 306 determines whether a sum count value of a maximum count and a minimum count of pixels in the reference image Ia, which is a target to be subjected to the repeated pattern detection process, is equal to or larger than a predetermined value, so as to determine whether the pixel is included in an image area of the repeated pattern.

The control unit 307 is a functional unit that controls the operation of each functional unit described above.

The storage unit 310 is a functional unit that buffers values used for the repeated pattern detection process. The storage unit 310 is implemented by the RAM 34 illustrated in FIG. 7.

Each of the pixel value acquiring unit 301, the slope calculating unit 302, the extremum detecting unit 303, the threshold setting unit 304, the counter unit 305, the validity determining unit 306, and the control unit 307 illustrated in FIG. 9 is implemented by the FPGA 31 illustrated in FIG. 7. Some or all of the pixel value acquiring unit 301, the slope calculating unit 302, the extremum detecting unit 303, the threshold setting unit 304, the counter unit 305, the validity determining unit 306, and the control unit 307 may be implemented not by the FPGA 31 that is a hardware circuit but by the CPU 32 executing a program stored in the ROM 33.

The pixel value acquiring unit 301, the slope calculating unit 302, the extremum detecting unit 303, the threshold setting unit 304, the counter unit 305, the validity determining unit 306, the control unit 307, and the storage unit 310 of the pattern detecting unit 300 illustrated in FIG. 9 conceptually represent the functions, and the configuration is not limited thereto. For example, a plurality of functional units illustrated as independent functional units in FIG. 9 may be configured as one functional unit. On the other hand, the functions of one functional unit illustrated in FIG. 9 may be divided into a plurality of parts and configured as a plurality of functional units.

As illustrated in FIG. 10, the disparity value calculation processing unit 350 includes a cost calculating unit 351, a determining unit 352, and a generation unit 353.

The cost calculating unit 351 is a functional unit that calculates a cost value $C(p, d)$ of each candidate pixel $q(x + d, y)$ that is a candidate for the correspondence pixel, based on the luminance value of the reference pixel $p(x, y)$ of the reference image Ia and the luminance value (pixel value) of each candidate pixel $q(x + d, y)$. The candidate pixels $q(x + d, y)$ are obtained by sequentially shifting by a shift amount d from a pixel in the comparison image Ib corresponding to the position of the reference pixel $p(x, y)$ of the reference image Ia on the epipolar line EL of the comparison image Ib (see FIGS. 2A and 2B). More specifically, the cost calculating unit 351 calculates the degree of dissimilarity between a reference area pb that is a predetermined area having the reference pixel p in the reference image Ia as its center and the candidate area qb (having the same size as the reference area pb) having the candidate pixel q of the comparison image Ib as its center as a cost value C through a block matching process.

The determining unit 352 is a functional unit that determines a shift amount d corresponding to a minimum value of the cost value C calculated by the cost calculating unit 351, as a disparity value dp of the pixel in the reference image Ia that has been subjected to the calculation of the cost value C.

The generation unit 353 is a functional unit that generates a disparity image in which the luminance value of each pixel in the reference image Ia is represented by a disparity value dp corresponding to the each pixel based on the disparity value dp determined by the determining unit 352. Here, the disparity image does not necessarily need to be displayed but represents data in which a disparity value dp is associated with two-dimensional coordinate values (x, y).

Each of the cost calculating unit 351, the determining unit 352, and the generation unit 353 illustrated in FIG. 10 is implemented by the FPGA 31 illustrated in FIG. 7. In addition, some or all of the cost calculating unit 351, the determining unit 352, and the generation unit 353 may be implemented not by the FPGA 31 that is a hardware circuit but by the CPU 32 executing a program stored in the ROM 33.

The cost calculating unit 351, the determining unit 352, and the generation unit 353 of the disparity value calculation processing unit 350 illustrated in FIG. 10 conceptually represent the functions, and the configuration is not limited thereto. For example, a plurality of functional units illustrated as independent functional units in FIG. 10 may be configured as one functional unit. On the other hand, the functions of one functional unit illustrated in FIG. 10 may be divided into a plurality of parts and configured as a plurality of functional units.

Block Matching Process of Disparity Value Deriving Unit

FIG. 11 is a flowchart that illustrates an example of the operation of the block matching process performed by the disparity value deriving unit according to the first embodiment. The flow of the operation of the block matching process performed by the disparity value deriving unit 3 of the object recognizing device 1 will be described with reference to FIG. 11.

Step S1-1

The image acquiring unit 100 of the disparity value deriving unit 3 images an object present on the front side by using the left camera (imaging unit 10b), generates an analog image signal, and acquires a luminance image that is an image based on the image signal. Accordingly, the image signal that is a target to be subjected to the image processing of a later stage is acquired. Then, the process proceeds to step S2-1.

Step S1-2

The image acquiring unit 100 of the disparity value deriving unit 3 images the object present on the front side by using the right camera (imaging unit 10a), generates an analog image signal, and acquires a luminance image that is an image based on the image signal. Accordingly, the image signal that is a target to be subjected to the image processing of a later stage is acquired. Then, the process proceeds to step S2-2.

Step S2-1

The conversion unit 200 of the disparity value deriving unit 3 eliminates noises from the analog image signal acquired through the imaging process performed by the imaging unit 10b and converts the analog image signal into image data of a digital form. In this way, by performing a conversion into the image data of the digital form, image processing can be performed for each pixel in an image based on the image data. Then, the process proceeds to step S3-1.

Step S2-2

The conversion unit 200 of the disparity value deriving unit 3 eliminates noises from the analog image signal acquired through the imaging process performed by the imaging unit 10a and converts the analog image signal into image data of a digital form. In this way, by performing a conversion into the image data of the digital form, image processing can be performed for each pixel in the image based on the image data. Then, the process proceeds to step S3-2.

Step S3-1

The conversion unit 200 outputs an image based on the image data of the digital form acquired by the conversion in step S2-1 as a comparison image Ib used in the block matching process. In this way, an image that is a comparison target for acquiring a disparity value in the block matching process is acquired. Then, the process proceeds to step S4.

Step S3-2

The conversion unit 200 outputs the image based on the image data of the digital form acquired through the conversion in step S2-2 as a reference image Ia used in the block matching process. In this way, an image that is a reference used for acquiring a disparity value in the block matching process is acquired. Then, the process proceeds to step S4.

Step S4

The cost calculating unit 351 of the disparity value calculation processing unit 350 of the disparity value deriving unit 3 calculates a cost value C(p, d) of each candidate pixel q(x + d, y) that is a candidate for the correspondence pixel, based on the luminance value of the reference pixel p(x, y) of the reference image Ia and the luminance value of each candidate pixel q(x + d, y). The candidate pixels q(x + d, y) are obtained by sequentially shifting by a shift amount d from a pixel in comparison image Ib corresponding to the position of the reference pixel p(x, y) of the reference image Ia on the epipolar line EL of the comparison image Ib. More specifically, the cost calculating unit 351 calculates the degree of dissimilarity between a reference area pb that is a predetermined area having the reference pixel p in the reference image Ia as its center and the candidate area qb (having the same size as the reference area pb) having the candidate pixel q of the comparison image Ib as its center as a cost value C through a block matching process. Then, the process proceeds to step S5.

Step S5

The determining unit 352 of the disparity value calculation processing unit 350 of the disparity value deriving unit 3 determines a shift amount d corresponding to a minimum value of the cost value C calculated by the cost calculating unit 351, as a disparity value dp of the pixel in the reference image Ia that has been subjected to the calculation of the cost value C. The generation unit 353 of the disparity value calculation processing unit 350 of the disparity value deriving unit 3 generates a disparity image in which the luminance value of each pixel in the reference image Ia is represented by a disparity value dp corresponding to the each pixel based on the disparity value dp determined by the determining unit 352. The generation unit 353 outputs the generated disparity image to the recognition processing unit 5.

As the stereo matching process described above, the block matching process has been described as an example. However, the embodiment is not limited to this. For example, a process using a semi-global matching (SGM) method may be used.

Repeated Pattern Detection Process Performed by Disparity Value Deriving Unit

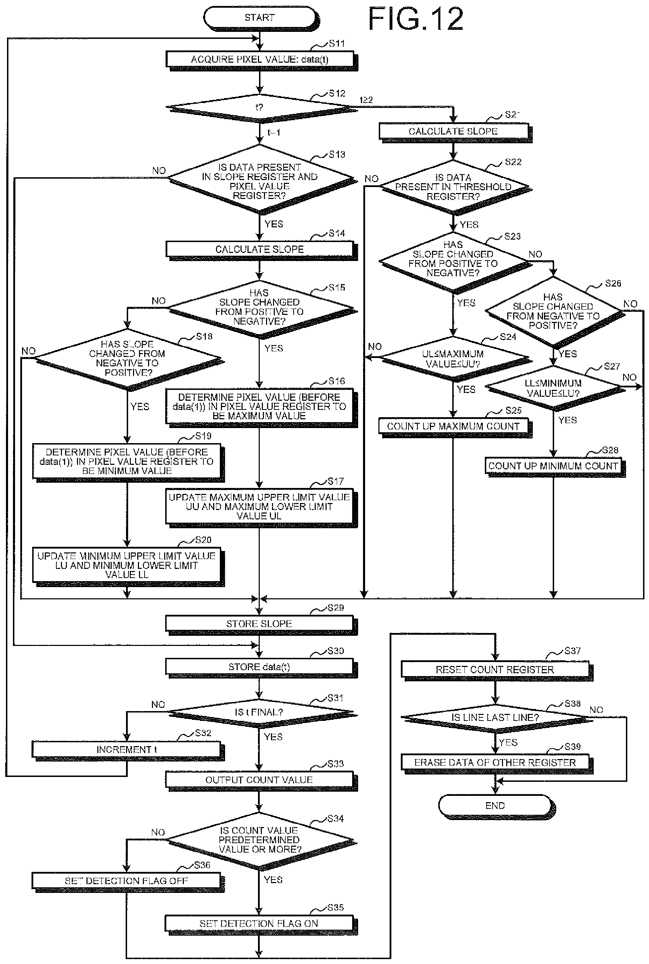

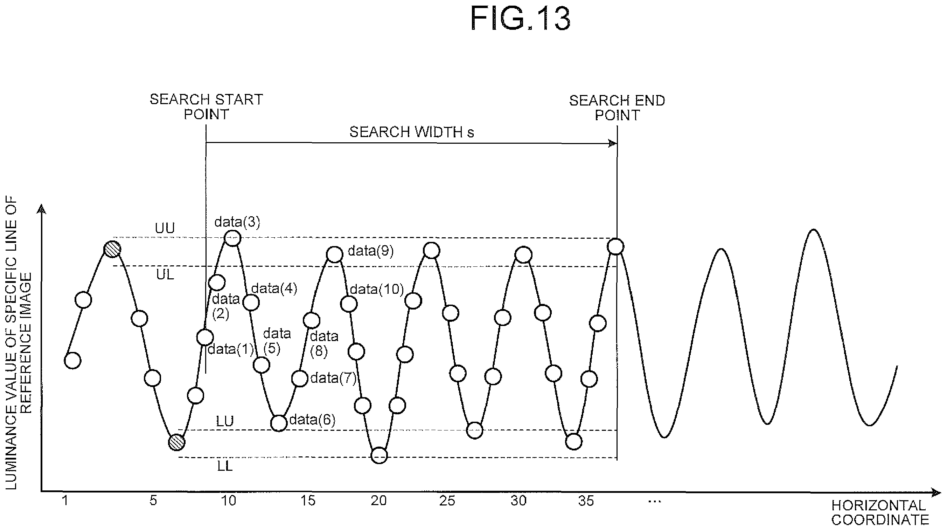

FIG. 12 is a flowchart that illustrates an example of the operation of the repeated pattern detection process performed by the disparity value deriving unit according to the first embodiment. FIG. 13 is a diagram that illustrates an example of a graph of luminance values (pixel values) of a reference image. The flow of an example of the operation of the repeated pattern detection process performed by the pattern detecting unit 300 of the disparity value deriving unit 3 will be described with reference to FIGS. 12 and 13. In FIG. 13, the horizontal axis is an x coordinate (horizontal coordinate) of the reference image Ia, and the vertical axis is a luminance value (pixel value) of a specific line of the reference image Ia.

The flow of the repeated pattern detection process illustrated in FIG. 12 is performed for each pixel in the reference image Ia. The search width s (predetermined search range) for each pixel in the reference image Ia, for example, is 1 to 63 pixels. When the flow of the repeated pattern detection process illustrated in FIG. 12 is started, a state is assumed in which no data is written in the pixel value register 311 and the slope register 312 (for example, a Null value is written). In addition, a reset value, in other words, a value of "0" is assumed to be written in the maximum count register 314 and the minimum count register 315. Furthermore, a pixel that is a target for the repeated pattern detection process is set as a pixel of t = 1 as a search start point; pixels of t = 2, 3, ..., n from the pixel are included in the search range s; and the pixel values of such pixels are used for the repeated pattern detection process. In the threshold register 313, a maximum upper limit value UU and a maximum lower limit value UL with respect to a closest maximum point before the search start point of the search width s and a minimum upper limit value LU and a minimum lower limit value LL with respect to a closest minimum point are assumed to be written.

Step S11

The pixel value acquiring unit 301 acquires pixel value data(t) of a pixel that is a target for the repeated pattern detection process in a specific line of the reference image Ia input from the conversion unit 200. Then, the process proceeds to step S12.

Step S12

The control unit 307 determines whether the pixel value data(t) acquired by the pixel value acquiring unit 301 is a first (t = 1) pixel value. In a case where t = 1 (step S12: t = 1), the process proceeds to step S13. On the other hand, in a case where t ≥ 2 (step S12: t ≥ 2), the process proceeds to step S21.

Step S13

The slope calculating unit 302 determines whether data is stored in the pixel value register 311 and the slope register 312. In a case where data is stored (step S13: Yes), the process proceeds to step S14. On the other hand, in a case where data is not stored (step S13: No), the process proceeds to step S30. The reason for proceeding to step S30 in a case where data is not stored in the pixel value register 311 and the slope register 312 is as follows. A previous pixel value before the pixel value data(1) is not stored, and a slope between the previous pixel value and the pixel value data(1) cannot be calculated.

Step S14

The slope calculating unit 302 calculates a slope by using the data stored in the pixel value register 311, in other words, the previous pixel value before the pixel value data(1) and the pixel value data(1). In this case, the calculated slope will be referred to as a "slope of the pixel value data(1)". Then, the process proceeds to step S15.

Step S15

The extremum detecting unit 303 determines whether the slope has changed from positive to negative based on the data stored in the slope register 312, in other words, the slope of the previous pixel value before the pixel value data(1) and the slope of the pixel value data(1) calculated by the slope calculating unit 302. In a case where the slope has changed from positive to negative (step S15: Yes), the process proceeds to step S16, and otherwise (step S15: No), the process proceeds to step S18. For example, in the example illustrated in FIG. 13, the slope of the previous pixel value of the pixel value data(1) is positive, and the slope of the pixel value data(1) is positive, and the slope has not changed from positive to negative, and accordingly, the process proceeds to step S18.

Step S16

Since the slope of the previous pixel value before the pixel value data(1) is positive, and the slope of the pixel value data(1) is negative, the extremum detecting unit 303 determines (detects a maximum) that the data stored in the pixel value register 311, in other words, the previous pixel value before the pixel value data(1) is a maximum. Then, the process proceeds to step S17.

Step S17

The threshold setting unit 304 updates the maximum upper limit value UU with "the previous pixel value (maximum value) before the pixel value data(1) + a predetermined value", updates the maximum lower limit value UL with "the previous pixel value (maximum value) before the pixel value data(1) - a predetermined value", and writes the maximum upper limit value UU and the maximum lower limit value UL that have been updated into the threshold register 313. Then, the process proceeds to step S29. The maximum upper limit value UU and the maximum lower limit value UL may be fixed values. However, by updating the values thereof, a repeated pattern can be detected with higher accuracy.

Step S18

The extremum detecting unit 303 determines whether the slope has changed from negative to positive based on the data stored in the slope register 312, in other words, the slope of the previous pixel value before the pixel value data(1) and the slope of the pixel value data(1) calculated by the slope calculating unit 302. In a case where the slope has changed from negative to positive (step S18: Yes), the process proceeds to step S19, and otherwise (step S18: No), the process proceeds to step S29. For example, in the example illustrated in FIG. 13, the slope of the previous pixel value before the pixel value data(1) is positive, and the slope of the pixel value data(1) is positive, and the slope has not changed from negative to positive, and accordingly, the process proceeds to step S29. In addition, in a case where the slope is determined not to have changed from positive to negative in step S15, and the slope is determined not to have changed from negative to positive in step S18, the previous pixel value before the pixel value data(1) is neither a maximum value nor a minimum value.

Step S19

Since the slope of the previous pixel value before the pixel value data(1) is negative, and the slope of the pixel value data(1) is positive, the extremum detecting unit 303 determines (detects a minimum) that the data stored in the pixel value register 311, in other words, the previous pixel value before the pixel value data(1) is a minimum value. Then, the process proceeds to step S20.

Step S20

The threshold setting unit 304 updates the minimum upper limit value LU with "the previous pixel value (minimum value) before the pixel value data(1) + a predetermined value", updates the minimum lower limit value LL with "the previous pixel value (minimum value) before the pixel value data(1) - a predetermined value", and writes the minimum upper limit value LU and the minimum lower limit value LL that have been updated into the threshold register 313. Then, the process proceeds to step S29. While the minimum upper limit value LU and the minimum lower limit value LL may be fixed values. However, by updating the values thereof, a repeated pattern can be detected with higher accuracy.

Step S21

In step S12, in a case where $t \geq 2$, the slope calculating unit 302 calculates a slope (a slope of the pixel value data(t)) by using data stored in the pixel value register 311, in other words, the previous pixel value data(t - 1) before the pixel value data(t) and the pixel value data(t). Then, the process proceeds to step S22.

Step S22

The control unit 307 determines whether data is stored in the threshold register 313. In a case where data is stored (step S22: Yes), the process proceeds to step S23. On the other hand, in a case where data is not stored (step S22: No), the process proceeds to step S29. The reason for proceeding to step S29 in a case where data is not stored in the threshold register 313 is that the counter unit 305 cannot determine whether the pixel value of a maximum and a minimum are within a predetermined threshold range in steps S24 and S27 to be described later.

Step S23

The extremum detecting unit 303 determines whether the slope has changed from positive to negative based on the data stored in the slope register 312, in other words, based on the slope of the previous pixel value before the pixel value data(t) and the slope of the pixel value data(t) calculated by the slope calculating unit 302 in step S21. In a case where the slope has changed from positive to negative (step S23: Yes), the process proceeds to step S24, and otherwise (step S23: No), the process proceeds to step S26. For example, in the example illustrated in FIG. 13, in a case where t = 4, the slope of the previous pixel value data(3) before the pixel value data(4) is positive, and the slope of the pixel value data(4) is negative, and the slope has changed from positive to negative, and accordingly, the process proceeds to step S24.

Step S24

Since the slope of the previous pixel value data(t - 1) before the pixel value data(t) is positive, and the slope of the pixel value data(t) is negative, the extremum detecting unit 303 determines (detects a maximum) that the data stored in the pixel value register 311, in other words, the previous pixel value data(t - 1) before the pixel value data(t) is a maximum value. Then, the counter unit 305 determines whether the maximum value (the pixel value data(t - 1)) detected by the extremum detecting unit 303 is equal to or larger than the maximum lower limit value UL and is equal to or less than the maximum upper limit value UU. In a case where the maximum value is equal to or larger than the maximum lower limit value UL and is equal to or less than the maximum upper limit value UU (step S24: Yes), the process proceeds to step S25, and, otherwise (step S24: No), the process proceeds to step S29. For example, in the example illustrated in FIG. 13, in a case where t = 10, previous pixel value data(9) before pixel value data(10) is a maximum value, and this maximum value is equal to or larger than the maximum lower limit value UL and is equal to or less than the maximum upper limit value UU, and accordingly, the process proceeds to step S25.

Step S25

Since the maximum value detected by the extremum detecting unit 303 is equal to or larger than the maximum lower limit value UL and is equal to or less than the maximum upper limit value UU, the counter unit 305 counts up the maximum count and writes the counted-up maximum count in the maximum count register 314. Then, the process proceeds to step S29.

Step S26

The extremum detecting unit 303 determines whether the slope has changed from negative to positive based on the data stored in the slope register 312, in other words, based on the slope of the previous pixel value before the pixel value data(t) and the slope of the pixel value data(t) calculated by the slope calculating unit 302 in step S21. In a case where the slope has changed from negative to positive (step S26: Yes), the process proceeds to step S27, and otherwise (step S26: No), the process proceeds to step S29. For example, in the example illustrated in FIG. 13, in a case where t = 7, since the slope of previous pixel value data(6) before pixel value data(7) is negative, the slope of the pixel value data(7) is positive, and the slope has changed from negative to positive, the process proceeds to step S27.

Step S27

Since the slope of the previous pixel value data(t - 1) before the pixel value data(t) is negative, and the slope of the pixel value data(t) is positive, the extremum detecting unit 303 determines (detects a minimum) that the data stored in the pixel value register 311, in other words, the previous pixel value data(t - 1) before the pixel value data(t) is a minimum value. Then, the counter unit 305 determines whether the minimum value (the pixel value data(t - 1)) detected by the extremum detecting unit 303 is equal to or larger than the minimum lower limit value LL and is equal to or less than the minimum upper limit value LU. In a case where the local minimum value is equal to or larger than the minimum lower limit value LL and is equal to or less than the minimum upper limit value LU (step S27: Yes), the process proceeds to step S28, and, otherwise (step S27: No), the process proceeds to step S29. For example, in the example illustrated in FIG. 13, in a case where t = 7, previous pixel value data(6) before pixel value data(7) is a minimum value, and this minimum value is not equal to or larger than the minimum lower limit value LL and is not equal to or less than the minimum upper limit value LU, and accordingly, the process proceeds to step S29.

Step S28

Since the minimum value detected by the extremum detecting unit 303 is equal to or larger than the minimum lower limit value LL and is equal to or less than the minimum upper limit value LU, the counter unit 305 counts up the minimum count and writes the counted-up minimum count in the minimum count register 315. Then, the process proceeds to step S29.

Step S29

The slope calculating unit 302 writes the slope calculated in step S14 or S21 into the slope register 312. Then, the process proceeds to step S30.

Step S30

The pixel value acquiring unit 301 writes the pixel value data(t) acquired in step S11 into the pixel value register 311. Then, the process proceeds to step S31.

Step S31

The control unit 307 determines whether the value of t is the final (search end point) value (for example, "63") in the search width s. In a case where the value of t is final (step S31: Yes), the process proceeds to step S33, and, otherwise (step S31: No), the process proceeds to step S32.

Step S32

The control unit 307 increments the value of t. Then, the process is returned to step S11.

Step S33

The counter unit 305 respectively reads the maximum count and the minimum count from the maximum count register 314 and the minimum count register 315 and outputs the maximum count and the minimum count that have been read to the validity determining unit 306. Then, the process proceeds to step S34.

Step S34

The validity determining unit 306 receives a maximum count and a minimum count of a pixel having the pixel value data(1) that is a target for the repeated pattern detection process from the counter unit 305 and determines whether a sum count value of the maximum count and the minimum count is equal to or larger than a predetermined value (predetermined threshold). In a case where the sum count value is equal to or larger than the predetermined value (step S34: Yes), the process proceeds to step S35. On the other hand, in a case where the sum count value is less than the predetermined value (step S34: No), the process proceeds to step S36. In addition, the validity determining unit 306 may directly read a maximum value and a minimum value respectively from the maximum count register 314 and the minimum count register 315.

Step S35

In a case where the sum count value is equal to or larger than the predetermined value, the validity determining unit 306 determines that the pixel having the pixel value data(1) is included in an image area of a repeated pattern included in the reference image Ia and sets a detection flag corresponding to the pixel having the pixel value data(1) to ON. Then, the process proceeds to step S37.

Step S36

In a case where the sum count value is less than the predetermined value, the validity determining unit 306 determines that the pixel having the pixel value data(1) is not included in an image area of a repeated pattern included in the reference image Ia and sets a detection flag corresponding to the pixel having the pixel value data(1) to OFF. Then, the process proceeds to step S37.

Step S37

In steps S34 to S36, since it has already been determined by the validity determining unit 306 whether a pixel that is a target for the repeated pattern detection process is included in an image area of a repeated pattern, the control unit 307 resets the maximum count register 314 and the minimum count register 315. Then, the process proceeds to step S38.

Step S38

The control unit 307 determines whether a pixel (t = 1) that is a target for the repeated pattern detection process is a last pixel on a specific line of the reference image Ia. In a case where the target pixel is the last pixel on a specific line (step S38: Yes), the process proceeds to step S39. On the other hand, in a case where the target pixel is not a last pixel (step S38: No), the repeated pattern detection process for the pixels of which pixel values are acquired by the pixel value acquiring unit 301 in step S11 ends.

Step S39

Since the determination of whether each pixel is included in an image area of a repeated pattern has been completed for all the pixels on a specific line of the reference image Ia, the control unit 307 erases data stored in the pixel value register 311, the slope register 312, and the threshold register 313 (for example, writes a null value therein). Then, the repeated pattern detection process for the pixels of which pixel values are acquired by the pixel value acquiring unit 301 in step S11 ends.

While the repeated pattern detection process illustrated in FIG. 12 as above is a process for a specific pixel in the reference image Ia, the pattern detecting unit 300 performs the repeated pattern detection process for all the pixels configuring the reference image Ia and transmits detection flags corresponding to the pixels to the recognition processing unit 5. The detection flags transmitted by the pattern detecting unit 300 to the recognition processing unit 5, for example, may be transmitted to the recognition processing unit 5 in the form of an image in which pixel values of the pixels in the reference image Ia are respectively replaced with detection flags corresponding to the pixel values. Then, the recognition processing unit 5 performs, on a disparity image received from the disparity value calculation processing unit 350, a treatment of not using disparity values corresponding to pixels of which detection flags are ON for the recognition process (invalidating the disparity values), or not using pixels for the recognition process in a case where a block of the pixels of which detection flags are ON has a predetermined size or more, by using the detection flags received from the pattern detecting unit 300.

In step S34 illustrated in FIG. 12, while a pixel having the pixel value data(1) has been described to be determined to be included in an image area of a repeated pattern in a case where a sum count value of the maximum count and the minimum count is equal to or larger than the predetermined value, the embodiment is not limited thereto. For example, in a case where at least the value of the maximum count is equal to or larger than a predetermined value, in a case where at least the value of the minimum count is equal to or larger than a predetermined value, in a case where the value of the maximum count or the minimum count is equal to or larger than a predetermined value, or in a case where each of the maximum count and the minimum count is equal to or larger than a predetermined value, the pixel having the pixel value data(1) may be determined to be included in an image area of a repeated pattern.

In addition, in step S17 illustrated in FIG. 12, the threshold setting unit 304 has been described to update the maximum upper limit value UU with "a previous pixel value (maximum value) before the pixel value data(1) + a predetermined value" and update the maximum lower limit value UL with "a previous pixel value (maximum value) before the pixel value data(1) - a predetermined value", this "predetermined value", for example, may be determined according to the magnitude of the maximum value.

The operation flow of the repeated pattern detection process illustrated in FIG. 12 is an example, and any other operation flow may be employed in which it can be determined whether a pixel that is a target for the repeated pattern detection process is included in an image area of a repeated pattern by counting extremums (maximums and minimums) based on luminance values (pixel values).

In this way, it is determined whether a specific pixel is included in an image area of a repeated pattern by counting extremums (maximums and minimums) of luminance values by using the luminance values (pixel values) of a captured image (in this embodiment, the reference image Ia). In other words, a repeated pattern in the captured image is detected. In this way, in this embodiment, a repeated pattern can be detected from one captured image instead of detecting a repeated pattern by comparing a plurality of images with each other (instead of detecting a repeated pattern using cost values corresponding to pixels acquired from the reference image Ia and the comparison image Ib). In this way, the load of image processing for detecting a repeated pattern can be decreased. In addition, in a case where the repeated pattern detection process performed by the pattern detecting unit 300 is configured using a hardware circuit such as an integrated circuit including an FPGA or the like, an increase in the processing circuit can be suppressed.

In addition, as described above with reference to FIGS. 8 and 12 and the like, while a target for detecting a repeated pattern has been described to be the reference image Ia, the target is not limited thereto, but the comparison image Ib may be used.

Furthermore, as illustrated in FIG. 13, while it has been described such that the search width s is set from a pixel that is a target for the repeated pattern detection process as a search start point in a rightward direction on the sheet face, and it is determined whether the pixel is included in an image area of a repeated pattern based on pixels included in this search width s, the embodiment is not limited thereto. In other words, it may be configured such that a search width s is set from the search start point toward the left side on the sheet face, and it is determined whether the pixel is included in an image area of a repeated pattern based on pixels included in the search width s.

In addition, while the pixel values configuring the graph illustrated in FIG. 13 are the pixel values of the pixels on a specific line of the reference image Ia (or the comparison image Ib), in other words, a line disposed in the horizontal direction on the sheet face of the image illustrated in FIGS. 2A and 2B, the embodiment is not limited thereto. Thus, the repeated pattern detection process illustrated in FIG. 12 described above may be performed based on the pixel values of pixels on a line disposed in the vertical direction on the sheet face.

Second Embodiment

An object recognizing device according to a second embodiment will be described with points different from the object recognizing device 1 according to the first embodiment focused on. There are cases where an area of an image having a road surface, a leaf, a wall, or the like as an object has a small amplitude of a graph of luminance values (pixel values) and needs to be excluded from a target for a repeated pattern. In this embodiment, an operation of excluding an image area having such a small amplitude of a graph of a luminance values from a target for the repeated pattern detection process will be described. The configuration of a device control system, the hardware configuration of an object recognizing device, the functional block configuration of the object recognizing device, and the functional block configuration of a disparity value calculation processing unit 350 according to this embodiment are similar to the configurations described in the first embodiment.

Configuration of Object Recognizing Device

As described above, the hardware configuration and the functional block configuration of the object recognizing device according to this embodiment and the functional block configuration of the disparity value calculation processing unit 350 according to this embodiment are respectively similar to the configurations according to the first embodiment illustrated in FIGS. 7, 8, and 10.

Functional Block Configuration of Pattern Detecting Unit

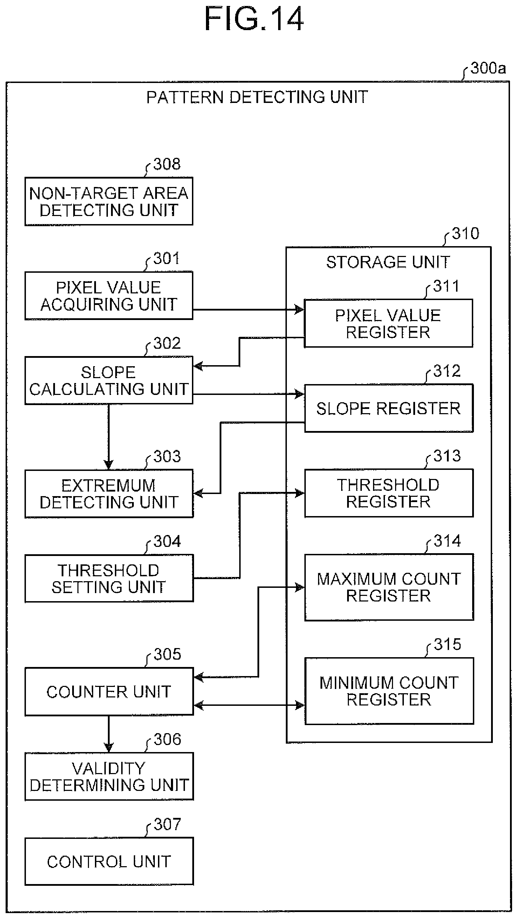

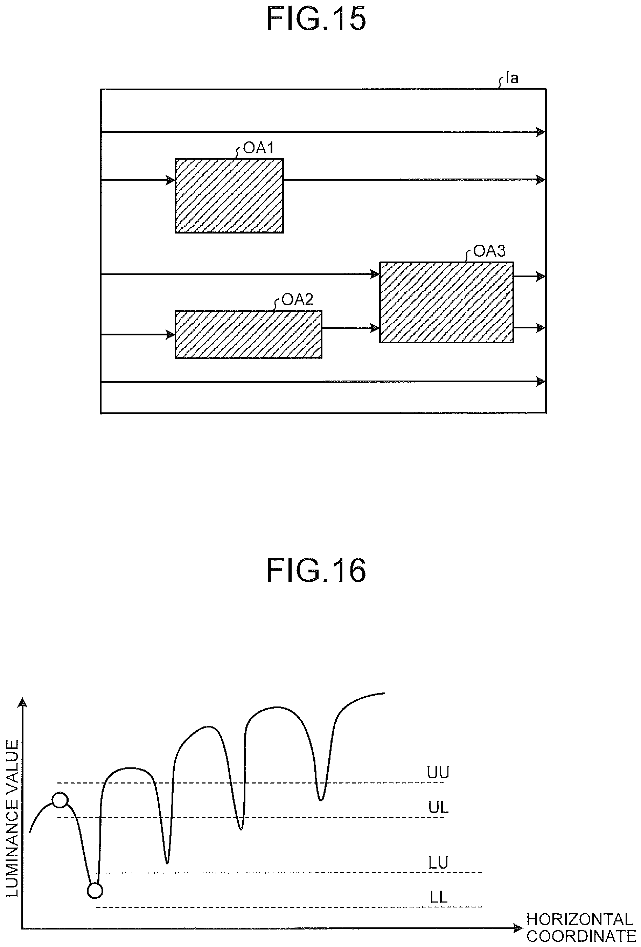

FIG. 14 is a diagram that illustrates an example of the functional block configuration of a pattern detecting unit of the object recognizing device according to the second embodiment. FIG. 15 is a diagram that illustrates an example of an image in which non-target areas are specified. The functional block configuration of the pattern detecting unit 300a of the object recognizing device and the operation of each functional block according to this embodiment will be described with reference to FIGS. 14 and 15.

As illustrated in FIG. 14, the pattern detecting unit 300a includes a pixel value acquiring unit 301 (acquisition unit), a slope calculating unit 302, an extremum detecting unit 303, a threshold setting unit 304 (setting unit), a counter unit 305 (counting unit), a validity determining unit 306 (determination unit), a control unit 307, a storage unit 310, and a non-target area detecting unit 308 (area detecting unit). The operation of each functional unit of the pattern detecting unit 300a other than the non-target area detecting unit 308 is similar to that of the pattern detecting unit 300 according to the first embodiment.

As described above, an area of an image having a road surface, a leaf, a wall, or the like as an object has a small amplitude of a graph of luminance values (pixel values) and may need to be excluded from a target for a repeated pattern. Thus, the non-target area detecting unit 308 of the pattern detecting unit 300a according to this embodiment detects an area in the reference image Ia that has a small amplitude of a graph of luminance values (pixel values) as a non-target area as preprocessing of the repeated pattern detection process. More specifically, the non-target area detecting unit 308, for example, detects an image area of which the amplitude of the waveform of the graph of luminance values is equal to or less than a predetermined value as a non-target area.

Each of the pixel value acquiring unit 301, the slope calculating unit 302, the extremum detecting unit 303, the threshold setting unit 304, the counter unit 305, the validity determining unit 306, the control unit 307, and the non-target area detecting unit 308 illustrated in FIG. 14 is implemented by the FPGA 31 illustrated in FIG. 7. In addition, some or all of the pixel value acquiring unit 301, the slope calculating unit 302, the extremum detecting unit 303, the threshold setting unit 304, the counter unit 305, the validity determining unit 306, the control unit 307, and the non-target area detecting unit 308 may be implemented not by the FPGA 31 that is a hardware circuit but by the CPU 32 executing a program stored in the ROM 33.

The pixel value acquiring unit 301, the slope calculating unit 302, the extremum detecting unit 303, the threshold setting unit 304, the counter unit 305, the validity determining unit 306, the control unit 307, the non-target area detecting unit 308, and the storage unit 310 of the pattern detecting unit 300a illustrated in FIG. 14 conceptually represent the functions, and the configuration is not limited thereto. For example, a plurality of functional units illustrated as independent functional units in FIG. 14 may be configured as one functional unit. On the other hand, the functions of one functional unit illustrated in FIG. 14 may be divided into a plurality of parts and configured as a plurality of functional units.

Pixels included in the non-target area detected by the non-target area detecting unit 308 are not targets for a repeated pattern detection process. In other words, for example, non-target areas OA1 to OA3 of a reference image Ia illustrated in FIG. 15 are non-target areas detected by the non-target area detecting unit 308, and the repeated pattern detection process performed by the pattern detecting unit 300a is performed for pixels in image areas other than the non-target areas OA1 to OA3. The operation of the repeated pattern detection process of the image areas other than the non-target areas of the reference image Ia is similar to the operation of the repeated pattern detection process performed by the pattern detecting unit 300 according to the first embodiment. Disparity values corresponding to pixels in the non-target areas are not targets for the repeated pattern detection process and thus are used for the recognition process performed by the recognition processing unit 5 as valid disparity values.

In this way, the non-target area detecting unit 308 detects a non-target area of the reference image Ia that is not a target for the repeated pattern detection process and the pattern detecting unit 300a performs the repeated pattern detection process only for pixels in image areas other than the non-target areas. In this way, the load of image processing for detecting a repeated pattern can be further decreased. In addition, in a case where the repeated pattern detection process performed by the pattern detecting unit 300a is configured using a hardware circuit such as an integrated circuit including an FPGA or the like, an increase in the processing circuit can be further suppressed.

While the non-target area detection process that is pre-processed by the repeated pattern detection process has been described to be performed by the non-target area detecting unit 308 included in the pattern detecting unit 300a, the embodiment is not limited thereto. For example, a processing unit corresponding to the non-target area detecting unit 308 may be arranged on a previous stage of the pattern detecting unit 300a.

Third Embodiment

An object recognizing device Ia according to a third embodiment will be described with points different from the object recognizing device 1 according to the first embodiment focused on. A captured image (a reference image Ia or a comparison image Ib) has a characteristic in which a peripheral light quantity of an end portion decreases. Thus, although a same repeated pattern is imaged, there are cases where a low frequency component other than components of the original period of the repeated pattern is superimposed. In addition, although a same repeated pattern is imaged, there are also cases where a low-frequency component is superimposed due to not only a decrease in the peripheral light quantity but also a non-uniform exposure state of light or the like. In this embodiment, an operation for appropriately performing a repeated pattern detection process also in a case where a low-frequency component is superimposed on the graph of luminance values (pixel values) as above will be described. The configuration of a device control system, the hardware configuration of an object recognizing device, and the functional block configurations of a pattern detecting unit 300 and a disparity value calculation processing unit 350 according to this embodiment are similar to the configurations described in the first embodiment.

Graph of Luminance Values on Which Low-Frequency Component Is Superimposed

FIG. 16 is a diagram that illustrates an example of a graph of luminance values in which a low-frequency component is present.

The example of the graph of luminance values illustrated in FIG. 16 illustrates a state in which the whole graph is formed to be upward to the right due to the superposition of low-frequency components in addition to periodic components according to a repeated pattern of an object. In this state, maximum values or minimum values of the graph of luminance values are out of a threshold range that is based on a maximum lower limit value UL and a maximum upper limit value UU and a minimum lower limit value LL and a minimum upper limit value LU, and the number of maximums and minimums cannot be appropriately counted.

Configuration of Object Recognizing Device

As described above, the hardware configuration of the object recognizing device and the functional block configurations of the pattern detecting unit 300 and the disparity value calculation processing unit 350 according to this embodiment are similar to the configurations according to the first embodiment described with reference to FIGS. 7, 9, and 10.

Functional Block Configuration of Object Recognizing Device and Operation of Each Functional Block

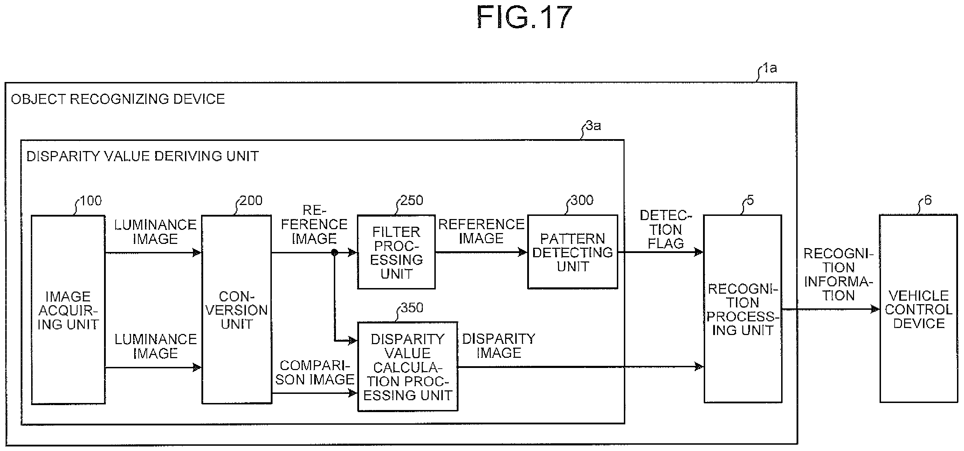

FIG. 17 is a diagram that illustrates an example of the functional block configuration of the object recognizing device according to the third embodiment. The functional block configuration of the object recognizing device 1a according to this embodiment and the operation of each functional block will be described with reference to FIG. 17.

As illustrated in FIG. 17, the object recognizing device 1a includes a disparity value deriving unit 3a and a recognition processing unit 5. Out of these, the disparity value deriving unit 3a includes an image acquiring unit 100, a conversion unit 200, a filter processing unit 250 (elimination unit), a pattern detecting unit 300, and a disparity value calculation processing unit 350. The operation of each functional unit other than the filter processing unit 250 of the disparity value deriving unit 3a is similar to that of the disparity value deriving unit 3 according to the first embodiment.

As described above, there are cases where a low-frequency component other than a periodic component according to a repeated pattern is superimposed on the captured image (reference image Ia) due to a decrease in the peripheral light quantity or a non-uniform exposure state of light. Thus, the filter processing unit 250 of the disparity value deriving unit 3a according to this embodiment performs a low-frequency component elimination process for eliminating the low-frequency component by performing a filter process for the reference image Ia output from the conversion unit 200. In this case, the filter processing unit 250 may eliminate frequency components of a predetermined frequency or lower frequencies through the filter process. Details of the low-frequency component elimination process will be described later. The filter processing unit 250 outputs the reference image Ia from which the low-frequency components have been eliminated through the low-frequency component elimination process to the pattern detecting unit 300.

The image acquiring unit 100, the conversion unit 200, the filter processing unit 250, the pattern detecting unit 300, and the disparity value calculation processing unit 350 of the disparity value deriving unit 3a illustrated in FIG. 17 conceptually represent the functions, and the embodiment is not limited to such a configuration. For example, a plurality of functional units illustrated as independent functional units of the disparity value deriving unit 3a illustrated in FIG. 17 may be configured as one functional unit. On the other hand, the functions of one functional unit of the disparity value deriving unit 3a illustrated in FIG. 17 may be divided into a plurality of parts and configured as a plurality of functional units.

Low-frequency Component Elimination Process Using Filter Processing Unit

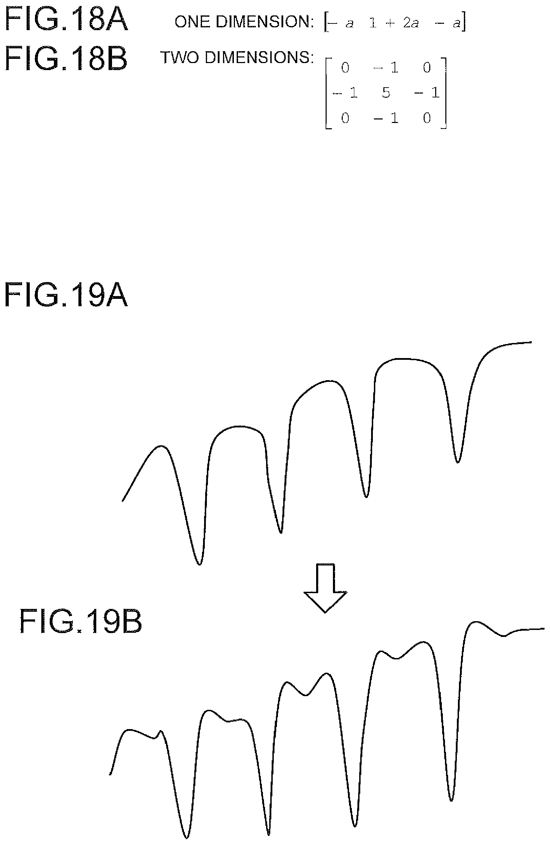

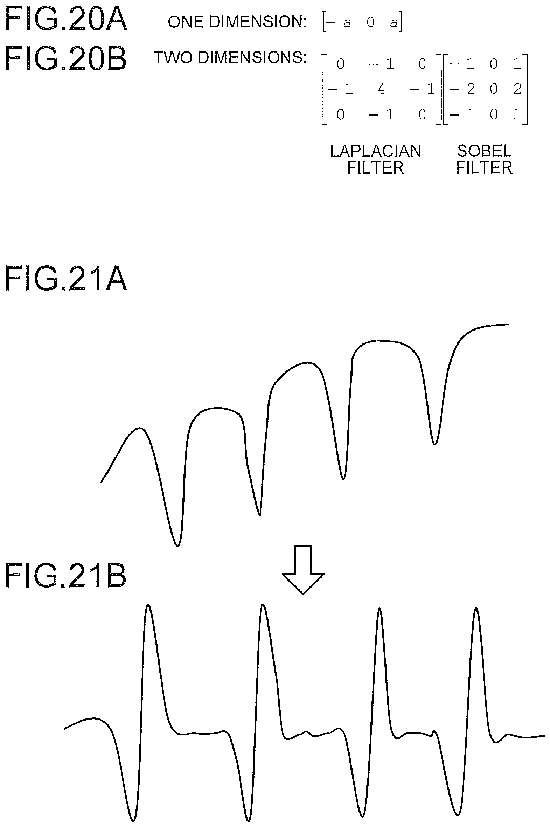

FIGS. 18A and 18B are diagrams that illustrate examples of a high-frequency emphasis filter. FIG. 19A and 19B are diagrams that illustrate an example of graphs before and after a filter process performed by the filter processing unit of the object recognizing device according to the third embodiment. FIGS. 20A and 20B are diagrams that illustrate other examples of a high-frequency emphasis filter. FIGS. 21A and 21B are diagrams that illustrate another example of graphs before and after a filter process performed by the filter processing unit of the object recognizing device according to the third embodiment. The low-frequency component elimination process using the filter processing unit 250 of the disparity value deriving unit 3a according to this embodiment will be described with reference to FIGS. 18A to 21B.

The filter processing unit 250 of the disparity value deriving unit 3a eliminates low-frequency components from the reference image Ia input from the conversion unit 200, for example, through a filter process using an edge emphasis filter that is the high-frequency emphasis filter illustrated in FIG. 18A or 18B. Out of edge emphasis filters illustrated in FIGS. 18A and 18B, FIG. 18A illustrates an example of a one-dimensional edge emphasis filter, and FIG. 18B illustrates an example of a two-dimensional edge emphasis filter. The filter processing unit 250 performs a low-frequency component elimination process using the edge emphasis filter illustrated in FIG. 18A or 18B so as to change the graph of luminance values of the reference image Ia, in which low-frequency components are superimposed to be upward to the right on the whole illustrated in FIG. 19A, to be almost horizontal as illustrated in FIG. 19B by at least suppressing an upward rise to the right of minimum values. In this way, in the example illustrated in FIG. 19B, while maximums cannot be appropriately counted, minimums can be appropriately counted. In this case, by using a minimum count, it can be determined whether a pixel that is a target for the repeated pattern detection process using the pattern detecting unit 300 is included in an image area of a repeated pattern. The operation of the repeated pattern detection process for the reference image Ia from which the low-frequency components have been eliminated is similar to the operation of the repeated pattern detection process using the pattern detecting unit 300 according to the first embodiment.

In addition, in order to eliminate low-frequency components from the reference image Ia, the filter processing unit 250 may perform the filter process by using not only the edge emphasis filter illustrated in FIG. 18A or 18B but also an edge extraction filter that is a high-frequency emphasis filter illustrated in FIG. 20A or 20B. Out of the edge extraction filters illustrated in FIGS. 20A and 20B, FIG. 20A illustrates an example of a one-dimensional edge extraction filter, and FIG. 20B illustrates an example of a two-dimensional edge extraction filter (a Laplacian filter or a Sobel filter). By performing a low-frequency component elimination process using the edge extraction filter illustrated in FIG. 20A or 20B, the filter processing unit 250 changes the graph of luminance values of the reference image Ia, in which low-frequency components are superimposed to be upward to the right on the whole illustrated in FIG. 21A, to be almost horizontal as illustrated in FIG. 21B by suppressing upward rises to the right of both maximums and minimums. In this way, counting of maximums and counting of minimums can be appropriately performed.

In this way, as a filter used for the low-frequency component elimination process using the filter processing unit 250, a filter that is preferable according to the waveform of the graph of luminance values of the reference image Ia may be selected.

In this way, also in a case where a low-frequency component other than the periodic component of a repeated pattern is superimposed in the reference image Ia, the filter processing unit 250 performs the filter process according to the high-frequency emphasis filter. Thus, at least one side of maximum values and minimum values can be formed to be almost horizontal. In this way, also in a case where a low-frequency component is superimposed in the graph of luminance values of the reference image Ia, at least one side of maximums and minimums can be appropriately counted, whereby a repeated pattern can be detected using the pattern detecting unit 300.

As illustrated in FIG. 17, while the filter processing unit 250 has been described as a functional unit different from the pattern detecting unit 300, the filter processing unit 250 may be included in the pattern detecting unit 300 as a part of the function of the pattern detecting unit 300.

Fourth Embodiment

An object recognizing device according to a fourth embodiment will be described with points different from the object recognizing device 1 according to the first embodiment focused on. In the first embodiment, as illustrated in FIG. 13, the search width s is set from a pixel that is a target for the repeated pattern detection process as a search start point in the rightward direction on the sheet face, and it is determined whether the pixel is included in an image area of a repeated pattern based on pixels included in this search width s. However, depending on the waveform of a graph of luminance values, there are cases where it cannot be appropriately determined whether a pixel that is a target for the repeated pattern detection process is included in an image area of a repeated pattern by using a system in which the number of extremums is counted in a single direction from the left side to the right side as illustrated in FIG. 13. In this embodiment, an operation capable of appropriately determining whether a pixel that is a target for the repeated pattern detection process is included in an image area of a repeated pattern also in such a case will be described. The configuration of a device control system, the hardware configuration of an object recognizing device, the functional block configuration of the object recognizing device, and the functional block configurations of a pattern detecting unit 300 and a disparity value calculation processing unit 350 according to this embodiment are similar to the configurations described in the first embodiment.

Example of Case Where Repeated Pattern Cannot Be Detected In Single Direction

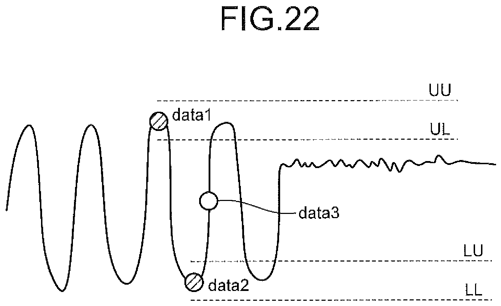

FIG. 22 is a diagram that illustrates an example of a graph of luminance values including repeated portions and a flat portion. A case where a repeated pattern cannot be detected in a single direction will be described with reference to FIG. 22.

In a waveform of luminance values (pixel values) of a reference image Ia illustrated in FIG. 22, it is assumed that, through the repeated pattern detection process illustrated in FIG. 12, a maximum upper limit value UU and a maximum lower limit value UL are determined based on a pixel value data1, and a minimum upper limit value LU and a minimum lower limit value LL are determined based on a pixel value data2. At this time, a pixel having a pixel value data3 illustrated in FIG. 22 is assumed to be a target pixel of the repeated pattern detection process. Then, the pattern detecting unit 300 sets a search width s using the pixel having the pixel value data3 as a search start point in the rightward direction on the sheet face and counts maximums and minimums based on pixels included in the search width s. As a result, as illustrated in FIG. 22, a graph disposed on the right side of the pixel value data3 that is the search start point is a graph having a small amplitude, and accordingly, the number of maximums that are present on the right side of the pixel value data3 and are present in a threshold range is one, and the number of minimums is one. In a case where the predetermined value of step S34 illustrated in FIG. 12, for example, is assumed to be "5", while the pixel having the pixel value data3, as illustrated in FIG. 22, is actually included in an image area of a repeated pattern, the validity determining unit 306 determines that the pixel having the pixel value data3 is not included in the image area of the repeated pattern of the reference image Ia.

Thus, the pattern detecting unit 300 according to this embodiment, in addition to the operation described above, also sets a search width s using the pixel having the pixel value data3 as a search start point toward the left side on the sheet face of FIG. 22 and counts maximums and minimums based on pixel values included in this search width s. In other words, the pattern detecting unit 300 counts maximums and minimums in both directions of the rightward direction and the leftward direction. Then, in a case where a sum count value of a maximum count and a minimum count is a predetermined value or more in at least one of the rightward direction and the leftward direction, the pattern detecting unit 300 determines that the pixel having the pixel value data3 is included in an image area of a repeated pattern and sets a detection flag corresponding to the pixel having the pixel value data3 to ON. In the case of the example illustrated in FIG. 22, in the leftward direction, the maximum count is "3", and the minimum count is "3", and the sum count value is "6" and is equal to or larger than the predetermined value "5" of step S34 illustrated in FIG. 12. Thus, the validity determining unit 306 can determine that the pixel having the pixel value data3 is included in an image area of a repeated pattern of the reference image Ia. More specifically, the pattern detecting unit 300 performs the repeated pattern detection process for a specific pixel illustrated in FIG. 12 for the search width s in the rightward direction and the search width s in the leftward direction.

In this way, the pattern detecting unit 300 counts maximums and minimums in both directions of the rightward direction and the leftward direction for a pixel that is a target for the repeated pattern detection process. In this way, an occurrence of a situation can be suppressed in which, in the operation of counting maximums and minimums only in the single direction, a target pixel is actually included in an image area of a repeated pattern but is erroneously determined not to be included therein. Accordingly, a determination of whether a target pixel is included in an image area of a repeated pattern, in other words, detection of a repeated pattern can be performed with higher accuracy. Particularly, the system of the repeated pattern detection process using the pattern detecting unit 300 according to this embodiment is effective for a repeated pattern detection process for a portion changing from a repeated pattern (a building window, a tile wall, a fence, or the like) to an image area (a wall having no shape, asphalt, or the like) having a small amplitude of the luminance value in the reference image Ia.

Fifth Embodiment

An object recognizing device according to a fifth embodiment will be described with points different from the object recognizing device 1 according to the first embodiment focused on. In a graph of luminance values of a specific line of a reference image Ia, there are a portion having a small period of a repeated pattern and a portion having a large period of a repeated pattern according to the shape of an imaged object. In such a case, in the repeated pattern detection process illustrated in FIG. 12, there are cases where an image area of a repeated pattern cannot be detected as a repeated pattern by counting maximums and minimums for a same search width s for all the pixels configuring the reference image Ia. In this embodiment, an operation capable of appropriately detecting repeated patterns also in a case where the periods of the repeated patterns are different from each other will be described. The configuration of a device control system, the hardware configuration of an object recognizing device, the functional block configuration of the object recognizing device, and the functional block configuration of a disparity value calculation processing unit 350 according to this embodiment are similar to the configurations described in the first embodiment.

Graph of Luminance Values in Which Periods of Repeated Patterns Are Different from Each Other

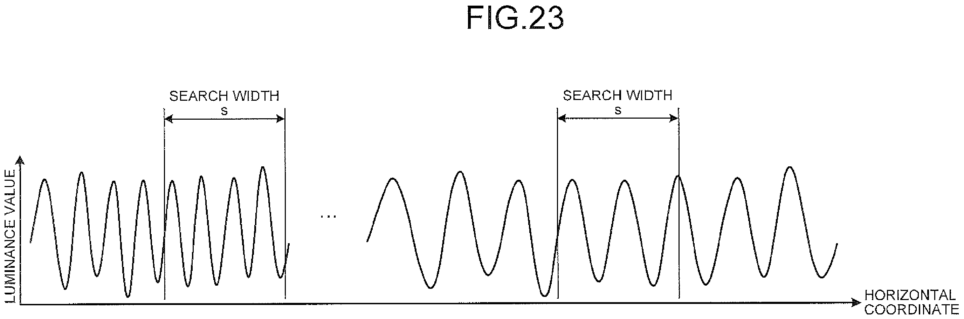

FIG. 23 is a diagram that illustrates an example of a graph of luminance values having different periods.

The example of the graph of luminance values illustrated in FIG. 23 represents a state in which the period of a repeated pattern is short in a left part of a specific line, and the period of a repeated pattern is long in a right part thereof. In such a case, in the repeated pattern detection process illustrated in FIG. 12, in the case of the repeated pattern having the long period, there are cases where an image area of the repeated pattern cannot be detected as a repeated pattern by counting maximums and minimums for a same search width s.

Configuration of Object Recognizing Device

As described above, the hardware configuration and the functional block configuration of the object recognizing device according to this embodiment and the functional block configuration of the disparity value calculation processing unit 350 according to this embodiment are respectively similar to the configurations according to the first embodiment illustrated in FIGS. 7, 8, and 10.

Functional Block Configuration of Pattern Detecting Unit

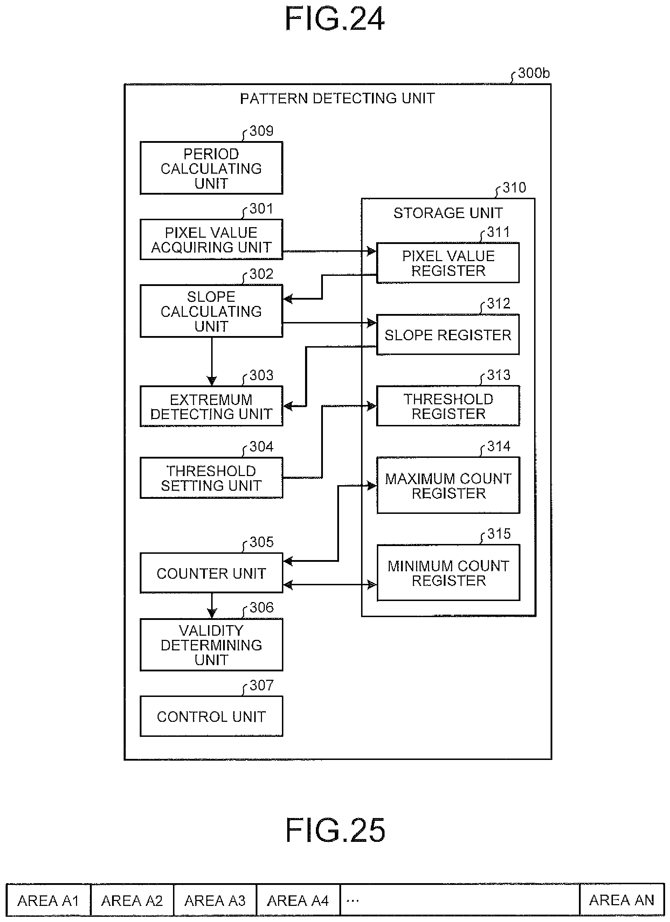

FIG. 24 is a diagram that illustrates an example of the functional block configuration of a pattern detecting unit of the object recognizing device according to the fifth embodiment. FIG. 25 is a diagram that illustrates a state in which a line of an image is divided into N areas. The functional block configuration of the pattern detecting unit 300b of the object recognizing device and the operation of each functional block according to this embodiment will be described with reference to FIGS. 24 and 25.

As illustrated in FIG. 24, the pattern detecting unit 300b includes a pixel value acquiring unit 301 (acquisition unit), a slope calculating unit 302 (slope calculating unit), an extremum detecting unit 303, a threshold setting unit 304 (setting unit), a counter unit 305 (counting unit), a validity determining unit 306 (determination unit), a control unit 307, a storage unit 310, and a period calculating unit 309. The operation of each functional unit of the pattern detecting unit 300b other than the period calculating unit 309 is similar to that of the pattern detecting unit 300 according to the first embodiment.

As described above, in the graph of luminance values of a specific line of the reference image Ia, as illustrated in FIG. 23, there are a portion having a small period of a repeated pattern and a portion having a large period of a repeated pattern according to the shape of an imaged object. In such a case, in the repeated pattern detection process illustrated in FIG. 12, there are cases where an image area of a repeated pattern cannot be detected as a repeated pattern by counting maximums and minimums for a same search width s for all the pixels configuring the reference image Ia. Particularly, in the case of a repeated pattern having a long period, there are cases where an image area of a repeated pattern cannot be detected as a repeated pattern by counting maximums and minimums for a same search width s.

Thus, the period calculating unit 309 of the pattern detecting unit 300b according to this embodiment divides each line of the reference image Ia into N areas (areas A1 to AN) as illustrated in FIG. 25 as preprocessing of the repeated pattern detection process, calculates a period (for example, a most frequent period in an area) of a repeated pattern for each of the areas, and changes a search width s for a pixel included in the area or changes a threshold (see step S34 illustrated in FIG. 12) of a sum count value in accordance with the calculated period.

Each of the pixel value acquiring unit 301, the slope calculating unit 302, the extremum detecting unit 303, the threshold setting unit 304, the counter unit 305, the validity determining unit 306, the control unit 307, and the period calculating unit 309 illustrated in FIG. 24 is implemented by the FPGA 31 illustrated in FIG. 7. In addition, some or all of the pixel value acquiring unit 301, the slope calculating unit 302, the extremum detecting unit 303, the threshold setting unit 304, the counter unit 305, the validity determining unit 306, the control unit 307, and the period calculating unit 309 may be implemented not by the FPGA 31 that is a hardware circuit but by the CPU 32 executing a program stored in the ROM 33.

The pixel value acquiring unit 301, the slope calculating unit 302, the extremum detecting unit 303, the threshold setting unit 304, the counter unit 305, the validity determining unit 306, the control unit 307, the period calculating unit 309, and the storage unit 310 of the pattern detecting unit 300b illustrated in FIG. 24 conceptually represent the functions, and the configuration is not limited thereto. For example, a plurality of functional units illustrated as independent functional units in FIG. 24 may be configured as one functional unit. On the other hand, the functions of one functional unit illustrated in FIG. 24 may be divided into a plurality of parts and configured as a plurality of functional units.

The operation of the period calculating unit 309 will be described more specifically. The period calculating unit 309 calculates a period (maximum period Pmax) of a maximum and a period (minimum period Pmin) of a minimum of a repeated pattern for each area acquired by dividing each line of a reference image Ia. The search width s is in proportion to the maximum period Pmax, the minimum period Pmin, and the predetermined value (set to a threshold Th) of step S34 illustrated in FIG. 12, and, when one of the search width s and the threshold Th is fixed, the other is thus determined. In a case where the search width s = 63 [pixels] (fixed), the threshold Th, for example, can be represented using the following Equation (3).

$$\mathrm{Th} = s/f(\mathrm{Pmax},\ \mathrm{Pmin}) \qquad\qquad (3)$$

(f(Pmax, Pmin): function using the maximum period Pmax and the minimum period Pmin)

The period calculating unit 309 adaptively calculates a threshold Th by using Equation (3) described above for each divided area. The pattern detecting unit 300b performs a threshold determination by using a threshold Th corresponding to a pixel that is a processing target in step S34 of the flow illustrated in FIG. 12 among thresholds Th that are adaptively calculated by the period calculating unit 309. In this way, while the threshold Th has been described to be calculated by using the search width s as a fixed value and be applied for each divided area, the embodiment is not limited thereto. Thus, the period calculating unit 309 may apply Equation (3) using the threshold Th as a fixed value and adaptively calculate a search width s. In such a case, the pattern detecting unit 300b repeatedly performs steps S11 to S32 of the flow illustrated in FIG. 12 the number of times corresponding to the number of pixels included in the search width s, by using a search width s corresponding to an area including the pixel that is a processing target.

In this way, the period calculating unit 309 divides each line of the reference image Ia, calculates the periods (the maximum period Pmax and the minimum period Pmin) of the repeated pattern for each divided area, and changes a search width s or a threshold Th for pixels included in the area in accordance with the calculated period. In this way, by counting maximums and minimums for a same search width s, a situation in which an image area of a repeated pattern cannot be detected as a repeated pattern can be suppressed, and a determination of whether a target pixel is included in an image area of a repeated pattern, in other words, the detection of a repeated pattern can be performed with higher accuracy.

Sixth Embodiment

An object recognizing device according to a sixth embodiment will be described with points different from the object recognizing device 1 according to the first embodiment focused on. In this embodiment, an operation of calculating a ratio of the number of pixels included in an image area of a repeated pattern to the number of all the pixels in a partial image for each pixel in the partial image by using a detection flag for each pixel in the partial image and determining whether the calculated ratio is equal to or larger than a predetermined value will be described. The hardware configuration and the functional block configuration of an object recognizing device and the functional block configuration of a disparity value calculation processing unit 350 according to this embodiment are similar to the configurations described in the first embodiment.

Configuration of Object Recognizing Device

As described above, the hardware configuration of the object recognizing device according to this embodiment and the functional block configuration of the disparity value calculation processing unit 350 according to this embodiment are respectively similar to the configurations according to the first embodiment illustrated in FIGS. 7 and 10.

Functional Block Configuration of Object Recognizing Device and Operation of Each Functional Block

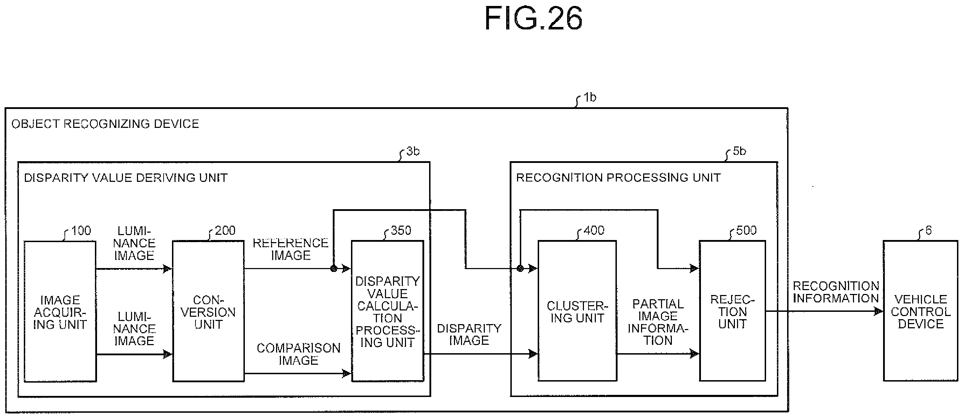

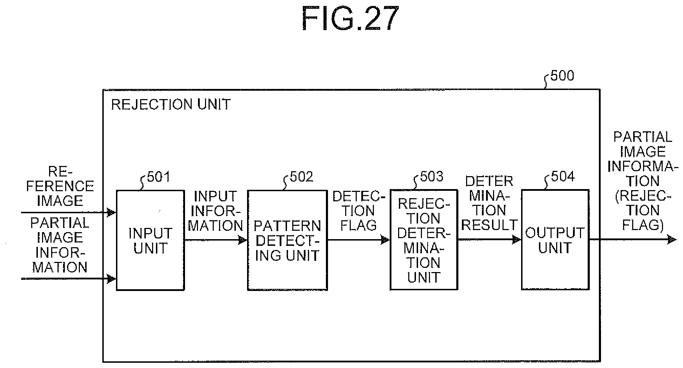

FIG. 26 is a diagram that illustrates an example of the functional block configuration of the object recognizing device according to the sixth embodiment. FIG. 27 is a diagram that illustrates an example of the functional block configuration of a rejection unit of the object recognizing device according to the sixth embodiment. The configuration of functional blocks of main units of the object recognizing device 1b and the operation thereof will be described with reference to FIGS. 26 and 27.

As illustrated in FIG. 26, the object recognizing device 1b includes a disparity value deriving unit 3b and a recognition processing unit 5b. Out of these, the disparity value deriving unit 3b includes an image acquiring unit 100, a conversion unit 200, and a disparity value calculation processing unit 350.

The image acquiring unit 100 is a functional unit that generates analog image signals by imaging an object disposed on the front side by using two cameras of the left and right cameras and acquires two luminance images that are images based on the image signals. The image acquiring unit 100 is implemented by the imaging unit 10a and the imaging unit 10b illustrated in FIG. 7.

The conversion unit 200 is a functional unit that eliminates noises from image data of the two luminance images acquired by the image acquiring unit 100, converts the image data into image data of a digital form, and outputs converted image data. Here, out of image data (luminance images) of the two luminance images output by the conversion unit 200, image data captured by the right camera (imaging unit 10a) of the image acquiring unit 100 will be set as image data (a reference image Ia) of the reference image Ia, and image data captured by the left camera (imaging unit 10b) will be set as image data (a comparison image Ib) of the comparison image Ib. In other words, the conversion unit 200 outputs the reference image Ia and the comparison image Ib based on the two luminance images output from the image acquiring unit 100. The conversion unit 200 is implemented by the signal converting units 20a and 20b illustrated in FIG. 7.

The disparity value calculation processing unit 350 is a functional unit that derives a disparity value for each pixel in the reference image Ia based on the reference image Ia and the comparison image Ib received from the conversion unit 200 and generates a disparity image in which a disparity value is associated with each pixel in the reference image Ia. The disparity value calculation processing unit 350 outputs the generated disparity image to the recognition processing unit 5b. The configuration of the disparity value calculation processing unit 350 is similar to the above-described configuration illustrated in FIG. 10.

The recognition processing unit 5b includes a clustering unit 400 and a rejection unit 500.

The clustering unit 400 is a functional unit that performs a clustering process of recognizing an object such as a person, a vehicle, or the like from a reference image based on a disparity image and the reference image Ia output from the disparity value deriving unit 3b and extracting a partial image including such an object. Details of the clustering process will be described later. The clustering unit 400 is implemented by the FPGA 31 illustrated in FIG. 7. The clustering unit 400 is implemented by the FPGA 31 illustrated in FIG. 7. In addition, the clustering unit 400 may be implemented not by the FPGA 31 that is a hardware circuit but by the CPU 32 executing a program stored in the ROM 33. Furthermore, the target for the clustering process is not limited to the reference image Ia, but the comparison image Ib may be set as the target.

The rejection unit 500 is a functional unit that performs a repeated pattern detection process and a rejection determination process for a partial image represented by partial image information based on information (for example, coordinates representing a position on the reference image Ia, a size, and the like) (hereinafter, simply referred to "partial image information") representing the reference image Ia output from the disparity value deriving unit 3b and a partial image output from the clustering unit 400. The repeated pattern detection process and the rejection determination process will be described later.

In addition, the image acquiring unit 100, the conversion unit 200, and the disparity value calculation processing unit 350 of the disparity value deriving unit 3b and the clustering unit 400 and the rejection unit 500 of the recognition processing unit 5b illustrated in FIG. 26 conceptually represent the functions, and the configuration is not limited thereto. For example, a plurality of functional units illustrated as independent functional units included in the disparity value deriving unit 3b or the recognition processing unit 5b in FIG. 26 may be configured as one functional unit. On the other hand, the functions of one functional unit included in the disparity value deriving unit 3b or the recognition processing unit 5b illustrated in FIG. 26 may be divided into a plurality of parts and configured as a plurality of functional units.

As illustrated in FIG. 27, the rejection unit 500 includes an input unit 501, a pattern detecting unit 502 (detection device), a rejection determination unit 503, and an output unit 504.

The input unit 501 is a functional unit that receives a reference image Ia output from the disparity value deriving unit 3b and partial image information output from the clustering unit 400 as input.

The pattern detecting unit 502 is a functional unit that performs a repeated pattern detection process of detecting whether each pixel in a partial image (target image) of the reference image Ia specified by the partial image information is included in an image area of a repeated pattern based on the reference image Ia and the partial image information input by the input unit 501. The pattern detecting unit 502 outputs information indicating whether each pixel in the reference image Ia is included in an image area of a repeated pattern to the rejection determination unit 503 as a detection flag. The reference image Ia may be an image of a gray scale or a color image of RGB or the like. In the case of a color image, only a specific component may be set as a target for the repeated pattern detection process, or it may be configured such that the repeated pattern detection process is performed for each component, and, finally, results thereof are integrated together. In addition, it may be configured such that the RGB format is converted into another color system of a YIQ format or the like, and a specific component such as a brightness component (Y channel) may be set as a target for the repeated pattern detection process. Hereinafter, the reference image Ia that is a target for the repeated pattern detection process performed by the pattern detecting unit 502, for example, will be described to be configured by pixels of luminance values of 8-bit gray scales.

The rejection determination unit 503 is a functional unit that performs a rejection determination process of determining whether a partial image is to be rejected by using a detection flag for each pixel in the partial image output from the pattern detecting unit 502. The rejection determination unit 503 outputs a determination result of the rejection determination process to the output unit 504.

The output unit 504 includes the determination result of the rejection determination process output from the rejection determination unit 503, in other words, a rejection flag representing whether the partial image is to be rejected in the partial image information and transmits the resultant partial image information to the vehicle control device 6 of a later stage. The partial image information including this rejection flag is illustrated as recognition information of the recognition processing unit 5b in FIG. 26. Based on the partial image information (including the rejection flag) received from the recognition processing unit 5b (rejection unit 500), in a case where the rejection flag is set, in other words, represents rejection of a partial image, the vehicle control device 6 does not use the partial image for various vehicle control processes. On the other hand, in a case where the rejection flag of the partial image information is not set, in other words, represents no rejection of a partial image, the vehicle control device 6 uses the partial image for various vehicle control processes.

Each of the input unit 501, the pattern detecting unit 502, the rejection determination unit 503, and the output unit 504 illustrated in FIG. 27 is implemented by the FPGA 51 illustrated in FIG. 7. In addition, some or all of the input unit 501, the pattern detecting unit 502, the rejection determination unit 503, and the output unit 504 may be implemented not by the FPGA 51 that is a hardware circuit but by the CPU 52 executing a program stored in the ROM 53.

In addition, the input unit 501, the pattern detecting unit 502, the rejection determination unit 503, and the output unit 504 of the rejection unit 500 illustrated in FIG. 27 conceptually represent the functions, and the configuration is not limited thereto. For example, a plurality of functional units illustrated as independent functional units included in the rejection unit 500 illustrated in FIG. 27 may be configured as one functional unit. On the other hand, the functions of one functional unit included in the rejection unit 500 illustrated in FIG. 27 may be divided into a plurality of parts and configured as a plurality of functional units.

The pattern detecting unit 502 illustrated in FIG. 27 has a functional block configuration similar to that of the pattern detecting unit 300 according to the first embodiment illustrated in FIG. 9. In other words, the pattern detecting unit 502 includes a pixel value acquiring unit 301 (acquisition unit), a slope calculating unit 302, an extremum detecting unit 303, a threshold setting unit 304 (setting unit), a counter unit 305 (counting unit), a validity determining unit 306 (determination unit), a control unit 307, and a storage unit 310. The storage unit 310 includes storage areas of a pixel value register 311, a slope register 312, a threshold register 313, a maximum value count register 314, and a minimum value count register 315. Each functional unit is as described above with reference to FIG. 9, and the operation of the repeated pattern detection process performed by the pattern detecting unit 502 is similar to the operation of the pattern detecting unit 300 according to the first embodiment illustrated in FIG. 12.

Clustering Process Performed by Recognition Processing Unit

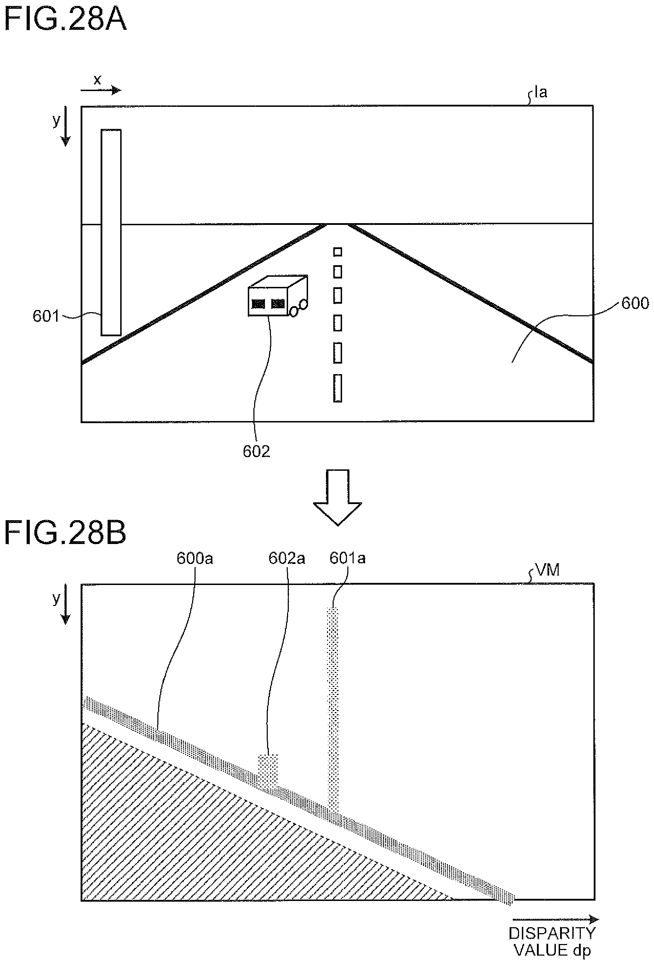

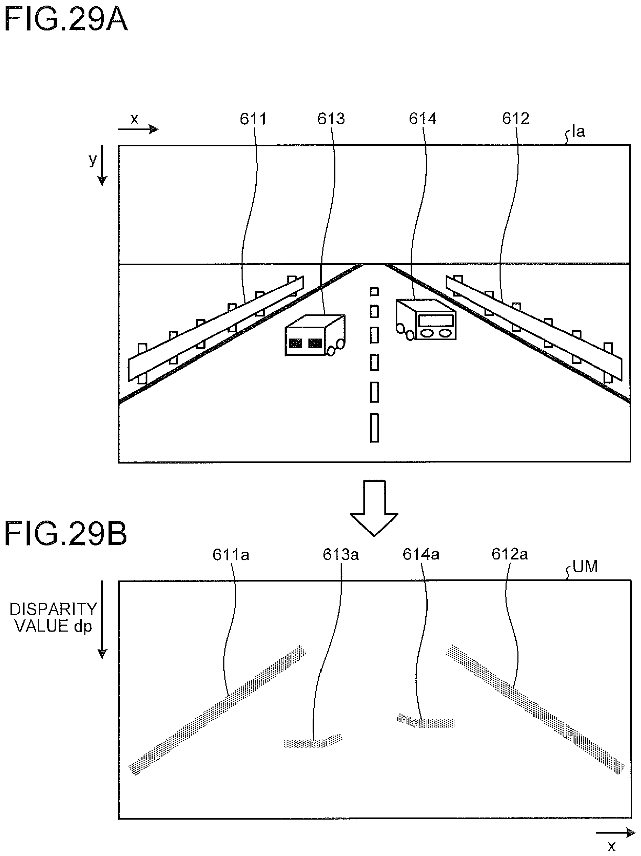

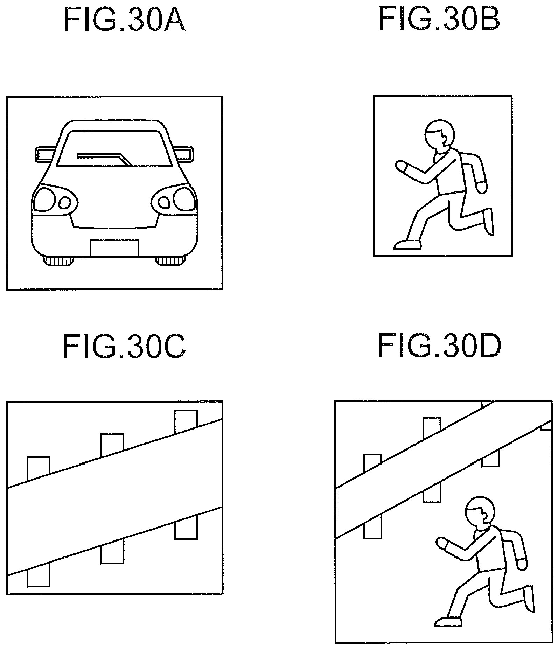

FIGS. 28A and 28B are diagrams that illustrate the operation of a clustering process performed by the clustering unit of the recognition processing unit according to the sixth embodiment. FIGS. 29A and 29B are diagrams that illustrate the operation of the clustering process performed by the clustering unit of the recognition processing unit according to the sixth embodiment. FIGS. 30A to 30D are diagrams that illustrate examples of partial images extracted by the clustering process. The operation of the clustering process performed by the clustering unit 400 of the recognition processing unit 5b will be described with reference to FIGS. 28A to 30D.

The clustering unit 400, first, receives a disparity image and a reference image Ia (for example, the reference image Ia illustrated in FIG. 28A or the reference image Ia illustrated in FIG. 29A) output from the disparity value deriving unit 3b. In the reference image Ia illustrated in FIG. 28A, for example, a road surface 600, an electric pole 601, and a car 602 are shown. The clustering unit 400 generates a Vmap VM that is a V-disparity map illustrated in FIG. 28B so as to detect a road surface from the reference image Ia as a clustering process. Here, the V-disparity map is a two-dimensional histogram having the y-axis of the reference image Ia as its vertical axis and a disparity value dp of the disparity image as its horizontal axis. The road surface 600 of the reference image Ia illustrated in FIG. 28A corresponds to a road surface portion 600a of the Vmap VM, the electric pole 601 corresponds to an electric pole portion 601a, and the car 602 corresponds to a car portion 602a.

The clustering unit 400 performs linear approximation of positions estimated to be a road surface from the generated Vmap VM. In a case where the road surface is flat, it can be approximated as one straight line. However, in case of a road surface of which the incline changes, it is necessary to divide a section of the Vmap VM and perform linear approximation having high accuracy. For the linear approximation, a Hough transform, a least-squares method, or the like that is a known technology may be used. In the Vmap VM, the electric pole portion 601a and the car portion 602a that are blocks located on the upper side of the detected road surface portion 600a correspond to the electric pole 601 and the car 602 that are objects disposed on the road surface. In order to generate a U-disparity map to be described later, the clustering unit 400 uses only information of the upper side of the road surface so as to eliminate the noises.

Next, in order to estimate the presence of objects such as a guard rail, a wall, a car, and the like by using only information positioned on the upper side of the road surface detected in the Vmap VM, in other words, by using information of a left guard rail 611, a right guard rail 612, a car 613, and a car 614 in the reference image Ia illustrated in FIG. 29A, the clustering unit 400 generates, as a clustering process, a Umap UM that is a U-disparity map illustrated in FIG. 29B. Here, the U-disparity map is a two-dimensional histogram having the x-axis of the reference image Ia as its horizontal axis and a disparity value dp of the disparity image as its vertical axis. The left guard rail 611 of the reference image Ia illustrated in FIG. 29A corresponds to a left guard rail portion 611a of the Umap UM, the right guard rail 612 corresponds to a right guard rail portion 612a, the car 613 corresponds to a car portion 613a, and the car 614 corresponds to a car portion 614a.

The clustering unit 400 can specify, as the clustering process, a position and a width (xmin, xmax) of an object in the x-axis direction in the disparity image from the Umap UM generated. In addition, the clustering unit 400 can specify an actual depth of an object based on information (dmin, dmax) of a height of an object in the generated Umap UM. Furthermore, the clustering unit 400 can specify a position and a height (ymin = "a y coordinate corresponding to a maximum height from a road surface of a maximum disparity value", ymax = "a y coordinate representing a height of the road surface acquired from the maximum disparity value") of an object in the y-axis direction in the disparity image from the generated Vmap VM. In addition, the clustering unit 400 can specify actual sizes of an object in the x-axis direction and the y-axis direction based on a width (xmin, xmax) of the object in the x-axis direction and a height (ymin, ymax) thereof in the y-axis direction, which are specified in the disparity image, and disparity values dp corresponding thereto. In this way, the clustering unit 400 can specify the position, the actual width, the height, and the depth of an object in the reference image Ia by using the Vmap VM and the Umap UM. In addition, since the position of the object in the reference image Ia is specified, the position in the disparity image is determined as well, and the clustering unit 400 can specify a distance up to the object.

Then, based on the actual size (the width, the height, and the depth) specified for the object as the clustering process, the clustering unit 400 can specify the type of object by using the following Table 1. For example, in a case where the depth of the object is 900 [mm], the height is 1,800 [mm], and the depth is 500 [mm], the object can be specified as a "pedestrian". In addition, information associating the width, the height, and the depth with the type (object type) of an object like Table 1 may be stored in the RAM 54 or the like as a table.

Table 1

| Object type | Width | Height | Depth | Unit(mm) |
|---|---|---|---|---|
| Motor cycle, bicycle | < 1100 | < 2500 | < 1000 | |
| Pedestrian | < 1100 | < 2500 | ≤ 1000 | |
| Small-size car | < 1700 | < 1700 | < 10000 | |
| Normal car | < 1700 | < 2500 | < 10000 | |
| Truck | < 3500 | < 3500 | < 15000 | |
| Others | Not matching sizes described above | | | |

Then, the clustering unit 400 generates information including the actual size (the width, the height, and the depth) of an object, the type of object, and the position (for example, coordinates of the upper left side), the width, the height, and the like of a partial image having a rectangular shape including the specified object in the reference image Ia, which are specified as the clustering process, as partial image information and outputs the generated partial image information to the rejection unit 500. Here, the shape of the partial image is not limited to a rectangle but may be a circle, an oval, or any other polygon.

In this way, the clustering process performed by the clustering unit 400 is a process of specifying an object shown from the reference image Ia and extracting a partial image that is an image including the object. Examples of the partial image extracted through the clustering process performed by the clustering unit 400 are illustrated in FIGS. 30A to 30D. FIG. 30A is an example of a partial image of a vehicle, FIG. 30B is an example of a partial image of a pedestrian, and FIG. 30C is an example of a partial image of a guard rail installed along the side of the road. FIG. 30D is an example of a partial image extracted in a state in which both a guard rail and a pedestrian are shown.

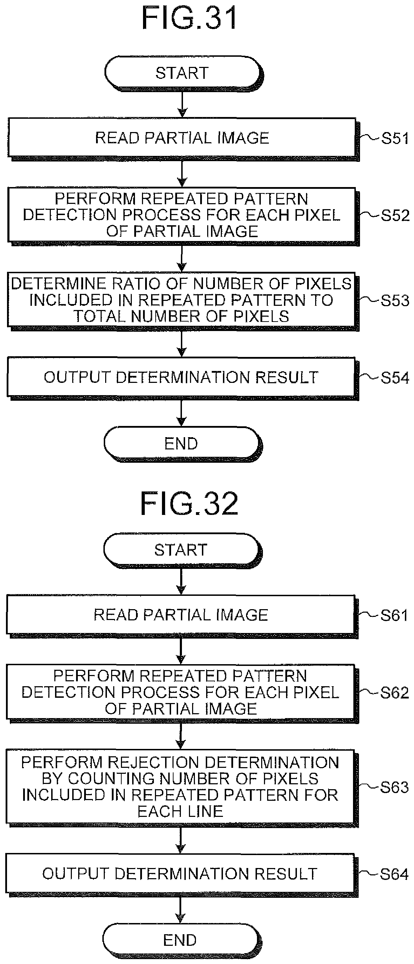

As illustrated in FIGS. 30A and 30B, a partial image of a pedestrian and a partial image of the other vehicle, and the like are partial images used for performing automatic control of a vehicle so as to avoid a collision and should not be rejected so as to be targets for the automatic control performed by the vehicle control device 6. A partial image of an object including a repeated pattern in which a same shape is configured such as a guard rail illustrated in FIG. 30C is unnecessary for the automatic control performed by the vehicle control device 6 and is a target to be rejected. However, the partial image, which is illustrated in FIG. 30D, extracted in a state in which a guard rail and a pedestrian are shown includes not only the guard rail including a repeated pattern but also the pedestrian and thus, should not be rejected. Details of the rejection determination process of determining whether a partial image is to be rejected based on a repeated pattern included in the partial image in this way will be described later with reference to FIG. 31.

The process described above with reference to FIGS. 28A to 29B is an example of the clustering process, and any other clustering process may be used as long as it is a process capable of extracting a partial image including an object from a reference image.

The operation of the repeated pattern detection process performed by the pattern detecting unit 502 is similar to the operation performed by the pattern detecting unit 300 according to the first embodiment illustrated in FIG. 12. The pattern detecting unit 502 performs the repeated pattern detection process for all the pixels configuring the partial image and outputs a detection flag corresponding to each pixel to the rejection determination unit 503. In addition, the detection flag output by the pattern detecting unit 502 to the rejection determination unit 503, for example, may be transmitted to the rejection determination unit 503 in an image format (pattern detection image) in which the pixel value of each pixel in the partial image is replaced with a detection flag corresponding to each pixel value.

The operation flow of the repeated pattern detection process illustrated in FIG. 12 is an example, and any other operation flow may be employed in which it can be determined whether a pixel that is a target for the repeated pattern detection process is included in an image area of a repeated pattern by counting extremums (maximums and minimums) using luminance values (pixel values). For example, in a case where a same repeated pattern is imaged in a partial image, there are cases where a low-frequency component is superimposed therein in addition to a component of the original period of the repeated pattern. In such a case, in a case where a low-frequency component is superimposed in the graph of luminance values (pixel values), the repeated pattern detection process may be performed after eliminating the low-frequency component through a filter process. In addition, for a pixel that is a target for the repeated pattern detection process, the counting process is not limited to counting maximums and minimums in the rightward direction but, for example, may be counting performed in the leftward direction or counting performed in both directions of the rightward direction and the leftward direction. Furthermore, in a same line of a partial image, there are cases where the periods of luminance values are different. In such a case, it may be configured such that a period is calculated for each portion of the line, and the search width s for a pixel included in the area or the predetermined threshold of step S34 is changed in accordance with the calculated period.

In addition, while the pixel values configuring the graph illustrated in FIG. 13 described above are the pixel values of the pixels of a specific line of a partial image of the reference image Ia (or the comparison image Ib), in other words, a line disposed in the horizontal direction on the sheet face of the image illustrated in FIGS. 2A and 2B, the embodiment is not limited thereto. Thus, the repeated pattern detection process illustrated in FIG. 12 described above may be performed based on the pixel values of pixels of a line disposed in the vertical direction on the sheet face.

Rejection Determination Process Performed by Rejection Unit

FIG. 31 is a flowchart that illustrates an example of the operation of the rejection determination process performed by the rejection unit of the recognition processing unit according to the sixth embodiment. The flow of an example of the operation of the rejection determination process performed by the rejection unit 500 of the recognition processing unit 5b will be described with reference to FIG. 31.

Step S51

The input unit 501 receives a reference image Ia output from the disparity value deriving unit 3b and partial image information output from the clustering unit 400 as input. Then, the input unit 501 specifies (reads) a partial image represented by the partial image information from the reference image Ia. Then, the process proceeds to step S52. In addition, while the reference image Ia input to the input unit 501 is an image output from the disparity value deriving unit 3b, in other words, an image based on a captured image captured by the image acquiring unit 100 of the disparity value deriving unit 3b, the reference image is not limited thereto but may be an image stored in the RAM 34 or the RAM 54 illustrated in FIG. 7 or any other storage unit.

Step S52

The pattern detecting unit 502 performs the repeated pattern detection process of detecting whether each pixel in a partial image of the reference image Ia specified by the partial image information is included in an image area of a repeated pattern based on the reference image Ia and the partial image information input by the input unit 501. The pattern detecting unit 502 outputs information indicating whether each pixel in the partial image is included in an image area of a repeated pattern to the rejection determination unit 503 as a detection flag. Details of the repeated pattern detection process are as described above. Then, the process proceeds to step S53.

Step S53

The rejection determination unit 503 performs the rejection determination process of determining whether a partial image is to be rejected by using a detection flag for each pixel in the partial image output from the pattern detecting unit 502. More specifically, the rejection determination unit 503 calculates a ratio of the number of pixels included in an image area of a repeated pattern to the number of all the pixels in a partial image for each pixel in the partial image by using a detection flag for each pixel in the partial image. Then, the rejection determination unit 503 determines whether the calculated ratio is equal to or larger than a predetermined value. In a case where the calculated ratio is equal to or larger than the predetermined value, the repeated pattern is determined to be included, and a rejection of the partial image is determined. On the other hand, in a case where the calculated ratio is less than the predetermined value, the partial image is determined not to be rejected. Then, the rejection determination unit 503 transmits a determination result of the rejection determination process indicating whether such a partial image is to be rejected to the output unit 504. Then, the process proceeds to step S54. Here, while the rejection determination unit 503 has been described to determine whether the calculated ratio is equal to or larger than the predetermined value, the determination is not limited thereto. Thus, a partial image may be determined to be rejected or not by determining whether the calculated ratio is within a predetermined range, or whether the number of pixels included in an image area of a repeated pattern is equal to or larger than a predetermined value.

Step S54

The output unit 504 includes, in the partial image information, the determination result of the rejection determination process received from the rejection determination unit 503, in other words, a rejection flag representing whether the partial image is to be rejected and transmits (outputs) the resultant partial image information to the vehicle control device 6 of a later stage. In addition, while the output unit 504 has been described to output the partial image information of even a partial image to be rejected to the vehicle control device 6, the configuration is not limited thereto. Alternatively, for example, it may be configured such that only partial image information of a partial image not to be rejected is transmitted to the vehicle control device 6, but partial image information of a partial image to be rejected is not transmitted, as a result of the rejection determination process performed by the rejection determination unit 503. In such a case, the partial image information of a partial image to be rejected is not received by the vehicle control device 6, so that such a partial image cannot be used for various vehicle control processes.

In this way, the rejection determination unit 503 calculates a ratio of the number of pixels included in an image area of a repeated pattern to the number of all the pixels in a partial image for each pixel in the partial image by using a detection flag for each pixel in the partial image output from the pattern detecting unit 502 and determines whether the calculated ratio is equal to or larger than a predetermined value. In this way, since the ratio of the number of pixels included in an image area of a repeated pattern to the number of all the pixels in the partial image is used, by setting the predetermined value used for the rejection determination process to be slightly high, an erroneous rejection of an object including a small amount of repeated patterns can be prevented. For example, a pedestrian wearing a suit having a vertically stripped pattern includes a repeated pattern in part, and accordingly, an erroneous rejection of a partial image including such an object can be suppressed. In addition, an erroneous rejection of a partial image in which a guard rail including a repeated pattern and a pedestrian are shown as illustrated in FIG. 30D described above can be suppressed.

Seventh Embodiment

An object recognizing device according to a seventh embodiment will be described with points different from the object recognizing device 1b according to the sixth embodiment focused on. In this embodiment, an operation of determining whether a line includes a repeated pattern for each line of a partial image and determining whether the partial image is to be rejected based on the number of lines each including a repeated pattern will be described. The hardware configuration and the functional block configuration of the object recognizing device, the functional block configuration of a disparity value calculation processing unit 350, the functional block configuration of a rejection unit 500, and the functional block configuration of a pattern detecting unit 502 according to this embodiment are similar to the configurations described in the sixth embodiment. In addition, a block matching process performed by a disparity value deriving unit according to this embodiment, a clustering process performed by a clustering unit 400, and a repeated pattern detection process performed by the pattern detecting unit 502 of the rejection unit 500 are similar to those according to the sixth embodiment.

(Rejection Determination Process Performed by Rejection Unit)

FIG. 32 is a flowchart that illustrates an example of the operation of the rejection determination process performed by the rejection unit of a recognition processing unit according to the seventh embodiment. The flow of an example of the operation of the rejection determination process performed by the rejection unit 500 of the recognition processing unit 5b according to this embodiment will be described with reference to FIG. 32.

Steps S61 and S62

These steps are similar to steps S51 and S52 illustrated in FIG. 31. Then, the process proceeds to step S63.

Step S63

The rejection determination unit 503 performs the rejection determination process of determining whether a partial image is to be rejected by using a detection flag for each pixel in the partial image output from the pattern detecting unit 502. More specifically, the rejection determination unit 503 counts the number of pixels included in an image area of a repeated pattern for each line (either the horizontal line or the vertical line) of a partial image by using a detection flag for each pixel in the partial image. Next, the rejection determination unit 503 determines whether the counted number of pixels is equal to or larger than a predetermined value and determines that the line includes a repeated pattern in a case where the counted number of pixels is equal to or larger than the predetermined value. Then, the rejection determination unit 503 determines whether the number of lines each including a repeated pattern is equal to or larger than a predetermined value (different from the predetermined value described above) and determines a rejection of the partial image in a case where the number of lines is equal to or larger than the predetermined value. In addition, the rejection determination unit 503 transmits a determination result of the rejection determination process indicating whether such a partial image is to be rejected to the output unit 504. Then, the process proceeds to step S64.

Here, while the rejection determination unit 503 has been described to determine whether the counted number of pixels is equal to or larger than the predetermined value, the determination is not limited thereto. Thus, whether the counted number of pixels is within a predetermined range may be determined. The counted number of pixels is compared with the predetermined value. Alternatively, the predetermined value may be a fixed value, or may be a value acquired by multiplication using a specific ratio according to the length of the line.

In addition, while the rejection determination unit 503 has been described to determine whether the number of lines including repeated patterns is equal to or larger than the predetermined value, the determination is not limited thereto. Whether the number of lines is within a predetermined range or the like may be determined. Furthermore, the number of lines each including a repeated pattern is compared with a predetermined value. Alternatively, the predetermined value may be a fixed value, or may be a value acquired by multiplication using a specific ratio according to the number of lines.

Step S64

This step is similar to step S54 illustrated in FIG. 31.

In this way, the rejection determination unit 503 determines whether a repeated pattern is included for each line of a partial image and determines whether the partial image is to be rejected based on the number of lines each including a repeated pattern. In such a case, for example, when a partial image is determined to be rejected in a case where the number of lines each including a repeated pattern is five or more, the process can be ended at a time point when five lines each including a repeated pattern are detected, in other words, the process does not need to be performed for all the lines of the partial image, and accordingly, the process can be performed at a speed higher than that according to the sixth embodiment.

The rejection determination unit 503 may be configured to determine whether a repeated pattern is included not for all the lines of a partial image but some lines thereof.

Modified Example

An object recognizing device according to a modified example of the seventh embodiment will be described with points different from the object recognizing device according to the seventh embodiment focused on. In this modified example, an operation of performing a Fourier transform of pixel values included in a line for each line of a partial image and determining whether the partial image is to be rejected based on a Fourier spectrum after the Fourier transform will be described. The hardware configuration and the functional block configuration of the object recognizing device, the functional block configuration of a disparity value calculation processing unit 350, and the functional block configuration of a rejection unit 500 according to this modified example are similar to the configurations described in the sixth embodiment. In addition, a block matching process performed by a disparity value deriving unit 3b, and a clustering process performed by a clustering unit 400 according to this modified example are similar to the operations described in the sixth embodiment.

Rejection Determination Process Performed by Rejection Unit

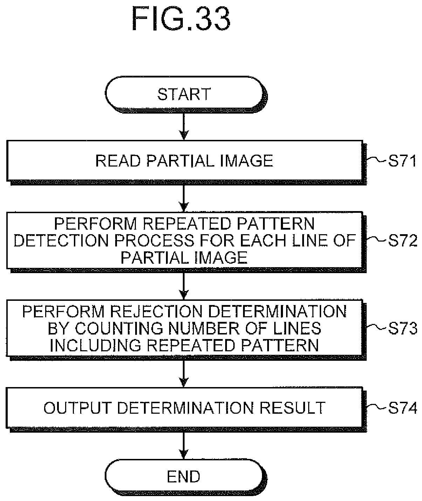

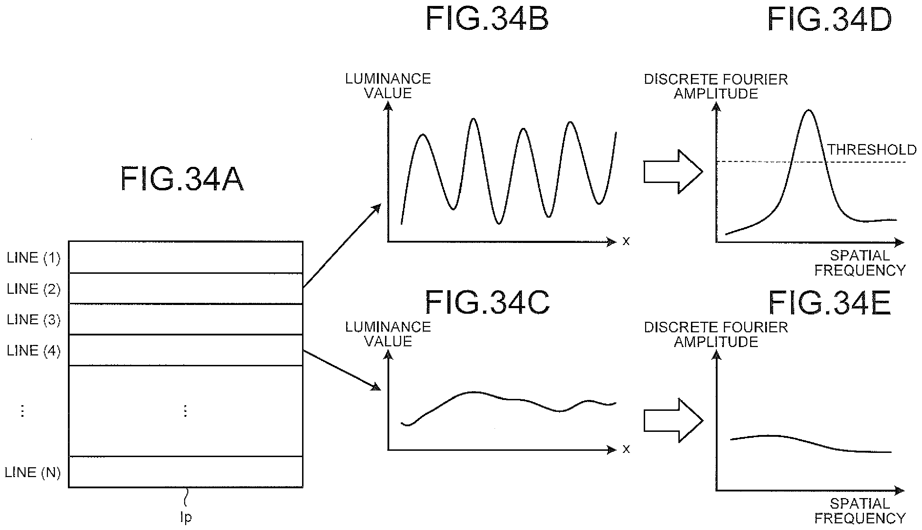

FIG. 33 is a flowchart that illustrates an example of the operation of the rejection determination process performed by the rejection unit of the recognition processing unit according to the modified example of the seventh embodiment. FIGS. 34A to 34E are diagrams that illustrate a Fourier transform of luminance values according to the modified example of the seventh embodiment. The flow of an example of the operation of the rejection determination process performed by the rejection unit 500 of the recognition processing unit 5b will be described with reference to FIGS. 33 to 34E.

Step S71

This step is similar to step S61 illustrated in FIG. 32. Then, the process proceeds to step S72.

Step S72

The pattern detecting unit 502 performs a repeated pattern detection process of detecting whether each line of a partial image of the reference image Ia specified by the partial image information includes a repeated pattern based on the reference image Ia and the partial image information input by the input unit 501. More specifically, the pattern detecting unit 502 performs a Fourier transform of pixel values included in a horizontal line for each horizontal line (each of lines (1), (2), ..., (N) illustrated in FIG. 34A) of a partial image Ip illustrated in FIG. 34A and acquires a Fourier spectrum. In the example illustrated in FIGS. 34A to 34E, FIG. 34B illustrates the waveform of pixel values (luminance values) of the line (2) of the partial image Ip, and FIG. 34C illustrates the waveform of pixel values (luminance values) of the line (4) of the partial image Ip. In addition, FIG. 34D illustrates a Fourier spectrum (the horizontal axis represents a spatial frequency, and the vertical axis illustrates a discrete Fourier amplitude) after the Fourier transform of the waveform of pixel values of the line (2), and FIG. 34E illustrates a Fourier spectrum after a Fourier transform of the waveform of pixel values of the line (4). Next, the pattern detecting unit 502 determines whether the amplitude of the acquired Fourier spectrum is equal to or larger than a predetermined value (the "threshold" illustrated in FIG. 34D) (second predetermined value), and dispersion thereof is equal to or less than a predetermined value. Then, in a case where the amplitude of the acquired Fourier spectrum is equal to or larger than a predetermined value, and the dispersion thereof is equal to or less than a predetermined value, the pattern detecting unit 502 determines that a line corresponding to the Fourier spectrum includes a repeated pattern. The pattern detecting unit 502 outputs information indicating whether each line of the partial image includes a repeated pattern to the rejection determination unit 503. Then, the process proceeds to step S73. Here, while the pattern detecting unit 502 has been described to perform a Fourier transform for each horizontal line of the partial image Ip, the embodiment is not limited thereto. The pattern detecting unit 502 may performs a Fourier transform for each vertical line of the partial image Ip.

Step S73

The rejection determination unit 503 performs a rejection determination process of determining whether the number of lines each including a repeated pattern is equal to or larger than a predetermined value (different from the predetermined value described above) and rejecting the partial image in a case where the number of lines is equal to or larger than the predetermined value. In addition, the rejection determination unit 503 transmits a determination result of the rejection determination process indicating whether such a partial image is to be rejected to the output unit 504. Then, the process proceeds to step S74.

Step S74

This step is similar to step S64 illustrated in FIG. 32.

In this way, a Fourier transform is performed for each line of a partial image, and, in a case where the waveform of a predetermined spatial frequency is included in the acquired Fourier spectrum, the line is determined to include a repeated pattern. By performing as such, as described above, the process can be ended at a time point when lines each including a repeated pattern corresponding to a predetermined number of lines are detected, in other words, the process does not need to be performed for all the lines of the partial image, and accordingly, the process can be performed at a speed higher than that according to the sixth embodiment.

Eighth Embodiment

An object recognizing device according to an eighth embodiment will be described with points different from the object recognizing device 1b according to the sixth embodiment focused on. In this embodiment, an operation of generating a histogram corresponding to the number of pixels determined to be included in an image area of a repeated pattern for each line of the partial image and determining whether the partial image is to be rejected by comparing the histogram with a model histogram will be described. The hardware configuration of the object recognizing device, the functional block configuration of a disparity value calculation processing unit 350, and the functional block configuration of a pattern detecting unit 502 according to this embodiment are similar to the configurations described in the sixth embodiment. In addition, a block matching process performed by a disparity value deriving unit 3b, a clustering process performed by a clustering unit 400, and a repeated pattern detection process performed by the pattern detecting unit 502 of a rejection unit according to this embodiment are similar to those according to the sixth embodiment.

Configuration and Operation of Functional Blocks of Object Recognizing Device

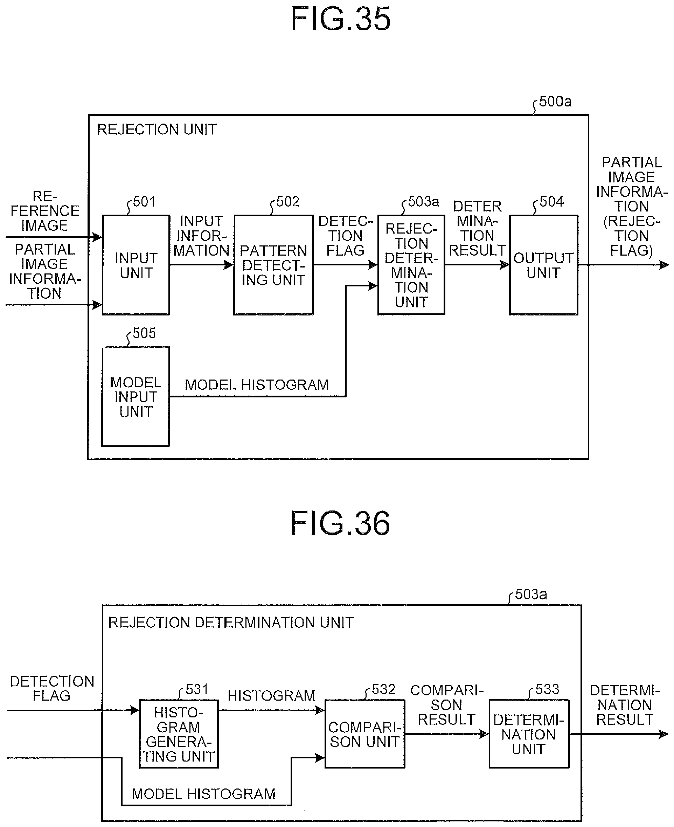

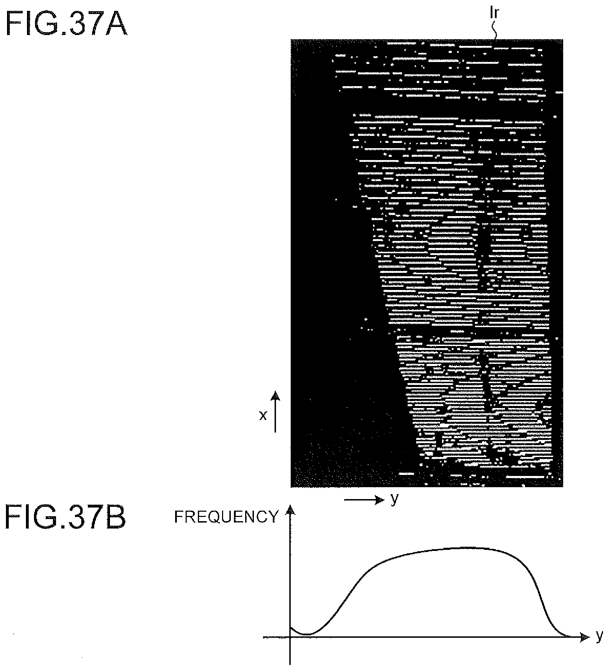

FIG. 35 is a diagram that illustrates an example of the functional block configuration of the rejection unit of the object recognizing device according to the eighth embodiment. FIG. 36 is a diagram that illustrates an example of the functional block configuration of a rejection determination unit of the rejection unit according to the eighth embodiment. FIG. 37A is a diagram that illustrates an example of pattern detection image, and FIG. 37B is a diagram that illustrates an example of a histogram generated by a histogram generating unit of the rejection determination unit according to the eighth embodiment. The configurations and the operations of functional blocks of a main part of the object recognizing device according to this embodiment will be described with reference to FIGS. 35 to 37B.

A recognition processing unit 5b of the object recognizing device according to this embodiment includes a clustering unit 400 (extraction unit) and a rejection unit 500a.

As illustrated in FIG. 35, the rejection unit 500a includes an input unit 501, a pattern detecting unit 502 (detection device), a rejection determination unit 503a, an output unit 504, and a model input unit 505.

The functions of the input unit 501, the pattern detecting unit 502, and the output unit 504 of the rejection unit 500a are similar to the functions of the input unit 501, the pattern detecting unit 502, and the output unit 504, respectively, according to the sixth embodiment illustrated in FIG. 27.

The model input unit 505, for example, is a functional unit that receives a histogram (model histogram) that is a model used for the rejection determination process stored in a storage unit such as the RAM 54 in advance.

The rejection determination unit 503a is a functional unit that performs a rejection determination process of determining whether a partial image is to be rejected by using the detection flag for each pixel in the partial image output from the pattern detecting unit 502 and the model histogram received by the model input unit 505. The rejection determination unit 503a outputs a determination result of the rejection determination process to the output unit 504. As illustrated in FIG. 36, the rejection determination unit 503a includes a histogram generating unit 531 (generation unit), a comparison unit 532, and a determination unit 533.

The histogram generating unit 531 is a functional unit that generates a histogram corresponding to the number of pixels included in an image area of a repeated pattern for each line (either the horizontal line or the vertical line) of the partial image by using the detection flag for each pixel in the partial image. The histogram generating unit 531 outputs the generated histogram to the comparison unit 532.

FIG. 37A illustrates an image (pattern detection image Ir) acquired by replacing each pixel in a partial image with a detection flag (for example, detection ON is "white", and detection OFF is "black") corresponding to each pixel. FIG. 37B illustrates a histogram acquired by counting the number of pixels corresponding to the detection ON, in other words, pixels included in an image area of a repeated pattern along an x-direction line (horizontal line) of the pattern detection image Ir and projecting the counted number in the y axis. As illustrated in FIG. 37A, in the case of a partial image including a repeated pattern, there is a high possibility that a case where a repeated pattern is continuously included in a plurality of lines appears at a high frequency. Accordingly, there is a high possibility that the generated histogram is formed in the shape of an arch as illustrated in FIG. 37A. Thus, in generating the model histogram received by the model input unit 505, histograms are generated using a plurality of images, and the generated histograms are averaged, whereby a model histogram can be generated in advance.

Here, the function of the histogram generating unit 531 is not limited to the generation of a histogram for a whole partial image, but the histogram generating unit 531 may generate a histogram for a part of the partial image. In such a case, the model histogram input by the model input unit 505 may have a portion corresponding to a histogram for a part of the partial image.

The comparison unit 532 is a functional unit that compares the histogram generated by the histogram generating unit 531 with the model histogram received by the model input unit 505. For example, the comparison unit 532 acquires the degree of similarity between the generated histogram and the model histogram by using a distance measurement scale of a Euclidean distance, a Mahalanobis distance, or the like or a similarity measurement scale such as a cosine similarity. The comparison unit 532 outputs the degree of similarity that is a comparison result to the determination unit 533.

The determination unit 533 is a functional unit that determines that the generated histogram and the model histogram are similar to each other in a case where the degree of similarity received from the comparison unit 532 is smaller (in case of the distance measurement scale, as the histograms are more similar to each other, the distance decreases) than a predetermined threshold and determines the partial image to be rejected. The determination unit 533 transmits a determination result to the output unit 504.

Each of the input unit 501, the pattern detecting unit 502, the rejection determination unit 503a, the output unit 504, and the model input unit 505 illustrated in FIG. 35 is implemented by the FPGA 51 illustrated in FIG. 7. In addition, some or all of the input unit 501, the pattern detecting unit 502, the rejection determination unit 503a, the output unit 504, and the model input unit 505 may be implemented not by the FPGA 51 that is a hardware circuit but by the CPU 52 executing a program stored in the ROM 53.

In addition, the input unit 501, the pattern detecting unit 502, the rejection determination unit 503a, the output unit 504, and the model input unit 505 illustrated in FIG. 35 conceptually represent the functions, and the configuration is not limited thereto. For example, a plurality of functional units illustrated as independent functional units included in the rejection unit 500a illustrated in FIG. 35 may be configured as one functional unit. On the other hand, the functions of one functional unit included in the rejection unit 500a illustrated in FIG. 35 may be divided into a plurality of parts and configured as a plurality of functional units.

In addition, the histogram generating unit 531, the comparison unit 532, and the determination unit 533 illustrated in FIG. 36 conceptually represent the functions, and the configuration is not limited thereto. For example, a plurality of functional units illustrated as independent functional units included in the rejection determination unit 503a illustrated in FIG. 36 may be configured as one functional unit. On the other hand, the functions of one functional unit included in the rejection determination unit 503a illustrated in FIG. 36 may be divided into a plurality of parts and configured as a plurality of functional units.

Rejection Determination Process Performed by Rejection Unit

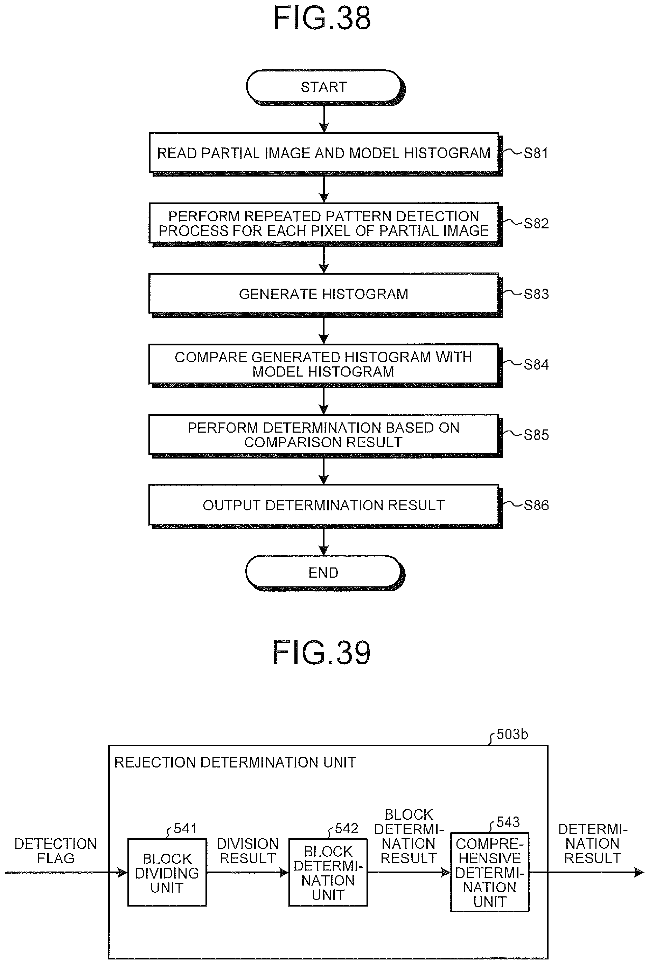

FIG. 38 is a flowchart that illustrates an example of the operation of the rejection determination process performed by the rejection unit of the recognition processing unit according to the eighth embodiment. The flow of an example of the operation of the rejection determination process performed by the rejection unit 500a of the recognition processing unit 5b will be described with reference to FIG. 38.

Step S81

The input unit 501 receives a reference image Ia output from the disparity value deriving unit 3b and partial image information output from the clustering unit 400 as input. Then, the input unit 501 specifies (reads) a partial image represented by the partial image information from the reference image Ia. In addition, the model input unit 505, for example, receives (reads) a model histogram that is a model used for the rejection determination process stored in the storage unit such as the RAM 54 in advance. Then, the process proceeds to step S82.

Step S82

This step is similar to step S52 illustrated in FIG. 3 1. Then, the process proceeds to step S83.

Step S83

The histogram generating unit 531 generates a histogram corresponding to the number of pixels included in an image area of a repeated pattern for each line (either the horizontal line or the vertical line) of the partial image by using the detection flag for each pixel in the partial image. Then, the process proceeds to step S84.

Step S84

The comparison unit 532 compares the histogram generated by the histogram generating unit 531 with the model histogram received by the model input unit 505. For example, the comparison unit 532 acquires the degree of similarity between the generated histogram and the model histogram by using a distance measurement scale of an Euclid distance, a Mahalanobis distance, or the like or a similarity measurement scale such as a cosine similarity. The comparison unit 532 outputs the degree of similarity that is a comparison result to the determination unit 533. Then, the process proceeds to step S85.

Step S85

The determination unit 533 determines that the generated histogram and the model histogram are similar to each other in a case where the degree of similarity received from the comparison unit 532 is smaller than a predetermined threshold and determines the partial image to be rejected. The determination unit 533 transmits a determination result to the output unit 504. Then, the process proceeds to step S86.

Step S86

The output unit 504 includes, in the partial image information, the determination result of the rejection determination process received from the determination unit 533, in other words, a rejection flag representing whether the partial image is to be rejected and transmits (outputs) the resultant partial image information to the vehicle control device 6 of a later stage.

In this way, the rejection determination unit 503a generates a histogram corresponding to the number of pixels included in an image area of a repeated pattern for each line (either the horizontal line or the vertical line) of the partial image, compares the generated histogram with the model histogram, and determines whether the partial image is to be rejected based on a comparison result. In this way, only a partial image including a repeated pattern having a histogram similar to the model histogram can be rejected, and the rejection of a partial image (for example, the image described above illustrated in FIG. 30D) having a histogram not coinciding with the shape of the model histogram and including a repeated pattern in a part can be suppressed, in other words, an erroneous rejection can be suppressed.

Ninth Embodiment

An object recognizing device according to a ninth embodiment will be described with points different from the object recognizing device 1b according to the sixth embodiment focused on. In this embodiment, an operation of dividing a partial image into a plurality of blocks, performing a rejection determination process for each block, and determining whether the partial image is to be rejected based on the number of blocks determined to be rejected will be described. The hardware configuration and the functional block configuration of the object recognizing device, the functional block configuration of a disparity value calculation processing unit 350, the functional block configuration of a rejection unit 500, and the functional block configuration of a pattern detecting unit 502 according to this embodiment are similar to the configurations described in the sixth embodiment. In addition, a block matching process performed by a disparity value deriving unit 3b, a clustering process performed by a clustering unit 400, and a repeated pattern detection process performed by the pattern detecting unit 502 of the rejection unit 500 according to this embodiment are similar to those according to the sixth embodiment.

Configuration and Operation of Functional Blocks of Object Recognizing Device

FIG. 39 is a diagram that illustrates an example of the functional block configuration of a rejection determination unit of the rejection unit according to the ninth embodiment. The configurations and the operations of functional blocks of elements of the object recognizing device according to this embodiment will be described with reference to FIG. 39.

The rejection unit 500 according to this embodiment includes a rejection determination unit 503b illustrated in FIG. 39 instead of the rejection determination unit 503. As illustrated in FIG. 39, the rejection determination unit 503b includes a block dividing unit 541 (division unit), a block determination unit 542, and a comprehensive determination unit 543 (target image determination unit).

The block dividing unit 541 is a functional unit that receives a detection flag for each pixel in a partial image and divides the partial image into a plurality of blocks. The block dividing unit 541 outputs divided blocks as a result of the division and detection flags to the block determination unit 542.

The block determination unit 542 is a functional unit that determines whether a block is to be rejected by using a detection flag for each pixel in the block for each block divided by the block dividing unit 541. In this case, the rejection determination process for blocks that is performed by the block determination unit 542 may employ one of the rejection determination process systems according to the sixth to eighth embodiments. The block determination unit 542 outputs a block determination result that is a rejection determination result for each block to the comprehensive determination unit 543.

The comprehensive determination unit 543 is a functional unit that determines whether the number of blocks determined to be rejected is equal to or larger than a predetermined value based on the block determination result received from the block determination unit 542 and determines a rejection of a partial image in a case where the number of blocks to be rejected is equal to or larger than the predetermined value. The comprehensive determination unit 543 outputs a determination result of the rejection determination process indicating whether a partial image is to be rejected to the output unit 504.

The comprehensive determination unit 543 may determine whether a partial image is to be rejected by taking an arrangement of blocks determined to be rejected into consideration in addition to the number of the blocks determined to be rejected. For example, as an example of taking the arrangement into consideration, there is a determination system of rejecting blocks using the comprehensive determination unit 543 in a case where the blocks, which are determined to be rejected, corresponding to a predetermined number are continuously present in the horizontal direction or the like. In addition, as an example of taking the arrangement into consideration, the degree of aggregation of blocks determined to be rejected may be considered by the comprehensive determination unit 543. For example, there is a system using a distance between blocks determined to be rejected. In such a case, a scoring technique using a distance between blocks determined to be rejected as a weighting factor and setting the weighting factor to be higher in a case where the blocks are represented to be further aggregated or the like may be considered.

Here, the comprehensive determination unit 543 has been described to determine whether the number of blocks determined to be rejected is equal to or larger than a predetermined value, the determination is not limited thereto. The comprehensive determination unit 543 may determine whether a ratio of the number of blocks determined to be rejected to a total number of blocks is equal to or larger than a predetermined value.

In addition, the block dividing unit 541, the block determination unit 542, and the comprehensive determination unit 543 illustrated in FIG. 39 conceptually represent the functions, and the configuration is not limited thereto. For example, a plurality of functional units illustrated as independent functional units included in the rejection determination unit 503b illustrated in FIG. 39 may be configured as one functional unit. On the other hand, the functions of one functional unit included in the rejection determination unit 503b illustrated in FIG. 39 may be divided into a plurality of parts and configured as a plurality of functional units.

Rejection Determination Process Performed by Rejection Unit

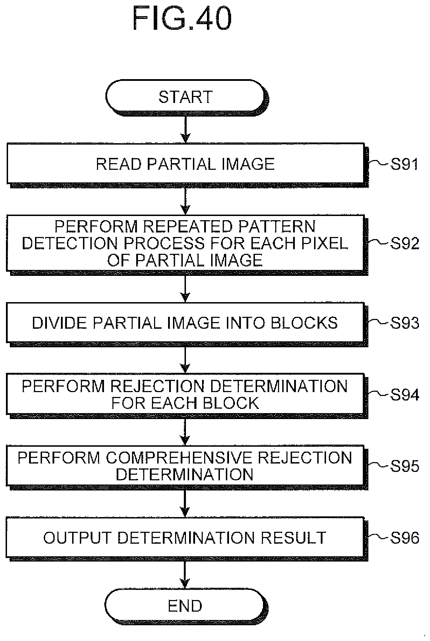

FIG. 40 is a flowchart that illustrates an example of the operation of the rejection determination process performed by the rejection unit of the recognition processing unit according to the ninth embodiment. The flow of an example of the operation of the rejection determination process performed by the rejection unit 500 of the recognition processing unit 5b will be described with reference to FIG. 40.

Steps S91 and S92

These steps are similar to steps S51 and S52 illustrated in FIG. 31. Then, the process proceeds to step S93.

Step S93

The block dividing unit 541 receives a detection flag for each pixel in a partial image and divides the partial image into a plurality of blocks. The block dividing unit 541 outputs the divided blocks as a result of the division and detection flags to the block determination unit 542. Then, the process proceeds to step S94.

Step S94

The block determination unit 542 determines whether a block is to be rejected by using a detection flag for each pixel in the block for each block divided by the block dividing unit 541. The block determination unit 542 outputs a block determination result that is a rejection determination result for each block to the comprehensive determination unit 543. Then, the process proceeds to step S95.

Step S95

The comprehensive determination unit 543, based on the block determination result received from the block determination unit 542, determines whether the number of blocks determined to be rejected is equal to or larger than a predetermined value and determines a rejection of the partial image (comprehensive rejection determination) in a case where the number of blocks is equal to or larger than a predetermined value. The comprehensive determination unit 543 outputs a determination result of the rejection determination process indicating whether a partial image is to be rejected to the output unit 504.

Step S96

The output unit 504 includes, in the partial image information, the determination result of the rejection determination process received from the comprehensive determination unit 543, in other words, a rejection flag representing whether the partial image is to be rejected and transmits (outputs) the resultant partial image information to the vehicle control device 6 of a later stage.

In this way, the rejection determination unit 503b divides a partial image into a plurality of blocks, determines whether a block is to be rejected by using a detection flag for each pixel in the block for each divided block, and determines whether the partial image is to be rejected based on the number of blocks determined to be rejected. In this way, a rejection in consideration of the density of pixels included in an image area of a repeated pattern can be performed. For example, a partial image including a repeated pattern only in a part of the partial image can be set to a target to be rejected. The rejection determination for each block does not need to be performed using a same method, but the method used for the rejection determination may be appropriately changed for each block.

In each of the embodiments described above, while the cost value C is an evaluation value representing the degree of dissimilarity, the cost value may be an evaluation value representing the degree of similarity. In such a case, a shift amount d for which the cost value C that is the degree of similarity is maximum (extremum) is the disparity value dp.

In addition, in each of the embodiments described above, while the object recognizing device mounted in a car as the vehicle 70 has been described, the present invention is not limited thereto. For example, the object recognizing device may be mounted in a vehicle such as a motorcycle, a bicycle, a wheelchair, or an agricultural cultivator as an example of another vehicle. Furthermore, not only a vehicle as an example of a movable body but also a movable body such as a robot may be used.

As the robot, not only a movable body but also a device such as an industrial robot that is fixedly installed for factory automation (FA) may be used. As the device that is fixedly installed, not only a robot but also a security monitoring camera or the like may be used.

In addition, in each of the embodiments described above, in a case where at least one of the functional units of the object recognizing device 1 (la or lb) is implemented by executing a program, the program is provided with being built in a ROM or the like in advance. Furthermore, the program executed by the object recognizing device according to each of the embodiments described above may be configured to be provided with being recorded on a computer-readable recording medium such as a CD-ROM, a flexible disk (FD), a CD-R, or a DVD in a file of an installable form or an executable form. In addition, the program executed by the object recognizing device according to each of the embodiments described above may be stored on a computer connected to a network such as the Internet and be configured to be provided by being downloaded through the network. Furthermore, the program executed by the object recognizing device according to each of the embodiments described above may be configured to be provided or distributed through a network such as the Internet. The program executed by the object recognizing device according to each of the embodiments described above has a module configuration including at least one of the functional units described above, and, as actual hardware, as the CPU 32 reads the program from the ROM 33 described above and executes the read program, the functional units described above are loaded into a main memory device (the RAM 34 or the like) and are generated.

The method steps, processes, or operations described herein are not to be construed as necessarily requiring their performance in the particular order discussed or illustrated, unless specifically identified as an order of performance or clearly identified through the context.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

**Claims**

**1.** A detection device comprising:

an acquisition unit (301) configured to acquire each pixel value of a captured image (Ia) acquired by imaging an object by an imaging unit (10a), as a target pixel value;
a slope calculating unit (302) configured to calculate each slope between adjacent two points on a graph representing a change in pixel values within a predetermined search range starting at a pixel corresponding to each target pixel value;
an extremum detecting unit (303) configured to detect extremums of the pixel values based on the slopes;
a counting unit (305) configured to count the number of extremums whose pixel value is in a predetermined range among the extremums detected by the extremum detecting unit in the search range;
a determination unit (306) configured to, when the number is equal to or larger than a predetermined threshold, determine that a pixel corresponding to the target pixel value is included in an image area of a repeated pattern of the captured image (Ia);

a setting unit (304) configured to set a threshold range as the predetermined range based on the pixel value of the extremum detected by the extremum detecting unit (303) outside the search range,

wherein the extremum detecting unit (303) detects maximums and minimums of the pixel values based on the slopes,

the setting unit (304) sets a first range as the threshold range based on the pixel value of the maximums detected by the extremum detecting unit (303) and sets a second range as the threshold range based on the pixel value of the minimums detected by the extremum detecting unit (303) in the search range,

the counting unit (305) counts a first number that is the number of the maximums whose pixel value is in the first range among the maximums detected by the extremum detecting unit (303) and counts a second number that is the number of the minimums whose pixel value is in the second range among the minimums detected by the extremum detecting unit in the search range, and

the determination unit (306) determines whether a pixel corresponding to the target pixel value is included in the image area of the repeated pattern based on at least one of the first number and the second number.

2. The detection device according to claim 1, further comprising an area detecting unit (308) configured to detect an image area (OA1, OA2, OA3) in which an amplitude of the graph representing the change in the pixel values of the captured image (Ia) is equal to or less than a predetermined value as a non-target area,

wherein the acquisition unit (301) acquires the target pixel value from an image area other than the non-target area in the captured image (Ia).

3. The detection device according to claim 1 or 2, further comprising an elimination unit (250) configured to eliminate frequency components of a predetermined frequency or less through a filter process for the graph representing the change in the pixel values of the captured image (Ia),

wherein the acquisition unit (301) acquires the target pixel values of the captured image from which the filter process has been performed by the elimination unit (250).

4. The detection device according to any one of claims 1 to 3, further comprising a period calculating unit (309) configured to calculate a period of the graph representing the change in the pixel values of the captured image (Ia),

wherein the period calculating unit (309) changes the search range or the predetermined threshold in accordance with the calculated period.

5. A disparity value deriving device comprising:

the detection device according to any one of claims 1 to 4; and

a disparity value calculating unit (350) configured to determine and output a disparity value for the object based on the captured image (Ia) acquired by imaging the object by the imaging unit (10a) and another captured image (Ib) acquired by imaging the object by another imaging unit (10b) disposed at a position different from a position of the imaging unit (10a),

wherein the detection device outputs a determination result determined by the determination unit (306) indicating whether a pixel corresponding to the target pixel value is included in an image area of a repeated pattern.

6. An object recognizing device comprising the detection device according to any one of claims 1 to 4,

wherein the detection device detects whether an image area of a target image includes a repeated pattern,

the object recognizing device further comprising a rejection determination unit (503) configured to determine a rejection of the target image in a case where the repeated pattern detected by the detection device satisfies a predetermined condition.

7. The object recognizing device according to claim 6,

wherein the acquisition unit (301) acquires each pixel value of the target image in the captured image (Ia) as the target pixel value, and

the rejection determination unit (503) determines whether the target image is to be rejected based on the number of pixels determined to be included in an image area of a repeated pattern in the target image by the determination unit (306) and the number of pixels in the target image.

8. The object recognizing device according to claim 6, wherein the rejection determination unit (503) counts the number of pixels determined to be included in an image area of a repeated pattern by the determination unit (503) for each of lines of the target image, determines whether the each of lines includes the repeated pattern based on the number of pixels counted for the each of lines, and determines whether the target image is to be rejected based on the number of the lines including the repeated pattern.

9.  The object recognizing device according to claim 6, wherein the rejection determination unit (503) includes:

    a generation unit (531) configured to generate a histogram corresponding to the number of pixels determined to be included in the image area of the repeated pattern by the determination unit (503) for each of lines of the target image; and
    a comparison unit (532) configured to compare the histogram with a predetermined model histogram, and the rejection determination unit (503) determines whether the target image is to be rejected based on a comparison result acquired by the comparison unit.

10. The object recognizing device according to claim 6, wherein the rejection determination unit (503) includes:

    a division unit (541) configured to divide the target image into a plurality of blocks;
    a block determination unit (542) configured to, for each block, in a case where a repeated pattern included in the each block satisfies a predetermined condition, determine a rejection of the each block; and
    a target image determination unit (543) configured to determine whether the target image is to be rejected based on the number of the blocks determined to be rejected by the block determination unit.

11. A device control system comprising:

    the object recognizing device according to any one of claims 6 to 10; and
    a control device (6) configured to control a control target based on a result of a recognition process performed by the object recognizing device.

12. A detection method comprising:

    acquiring each pixel value of a captured image (Ia) acquired by imaging an object by an imaging unit (10a), as a target pixel value;
    calculating each slope between adjacent two points on a graph representing a change in pixel values within a predetermined search range starting at a pixel corresponding to each target pixel value;
    detecting extremums of the pixel values based on the slopes;
    counting the number of extremums whose pixel value is in a predetermined range among the extremums detected in the search range;
    determining, when the number is equal to or larger than a predetermined threshold, that a pixel corresponding to the target pixel value is included in an image area of a repeated pattern of the captured image (Ia);
    setting a threshold range as the predetermined range based on the pixel values of the extremum detected outside the search range,
    wherein maximums and minimums of the pixel values are detected based on the slopes,
    a first range is set as the threshold range based on the pixel value of the maximums and a second range is set as the threshold range based on the pixel value of the minimums detected in the search range,
    a first number that is the number of the maximums whose pixel value is in the first range is counted among the maximums and a second number that is the number of the minimums whose pixel value is in the second range is counted among the minimums detected in the search range, and
    it is determined whether a pixel corresponding to the target pixel value is included in the image area of the repeated pattern based on at least one of the first number and the second number.

13. A program causing a computer to function as:

    an acquisition unit (301) configured to acquire each pixel value of a captured image (Ia) acquired by imaging an object by an imaging unit (10a), as a target pixel value;
    a slope calculating unit (302) configured to calculate each slope between adjacent two points on a graph representing a change in pixel values within a predetermined search range starting at a pixel corresponding to each target pixel value;
    an extremum detecting unit (303) configured to detect extremums of the pixel values based on the slopes;
    a counting unit (305) configured to count the number of extremums whose pixel value is in a predetermined range among the extremums detected by the extremum detecting unit in the search range;
    a determination unit (306) configured to, when the number is equal to or larger than a predetermined threshold, determine that a pixel corresponding to the target pixel value is included in an image area of a repeated pattern of the captured image (Ia);.

a setting unit (304) configured to set a threshold range as the predetermined range based on the pixel value of the extremum detected by the extremum detecting unit (303) outside the search range,

wherein the extremum detecting unit (303) detects maximums and minimums of the pixel values based on the slopes,

the setting unit (304) sets a first range as the threshold range based on the pixel value of the maximums detected by the extremum detecting unit (303) and sets a second range as the threshold range based on the pixel value of the minimums detected by the extremum detecting unit (303) in the search range,

the counting unit (305) counts a first number that is the number of the maximums whose pixel value is in the first range among the maximums detected by the extremum detecting unit (303) and counts a second number that is the number of the minimums whose pixel value is in the second range among the minimums detected by the extremum detecting unit in the search range, and

the determination unit (306) determines whether a pixel corresponding to the target pixel value is included in the image area of the repeated pattern based on at least one of the first number and the second number

## Patentansprüche

1. Detektionseinrichtung, die Folgendes umfasst:

   eine Erfassungseinheit (301), die konfiguriert ist, jeden Bildpunktwert von einem aufgenommenen Bild (Ia), das durch Abbilden eines Gegenstandes durch eine Bilderzeugungseinheit (10a) erfasst wurde, als einen Zielbildpunktwert zu erfassen;

   eine Steigungsberechnungseinheit (302), die konfiguriert ist, jede Steigung zwischen zwei benachbarten Punkten auf einem Graphen, der eine Änderung in den Bildpunktwerten in einem vorgegebenen Suchbereich, der bei einem Bildpunkt beginnt, der jedem Zielbildpunktwert entspricht, repräsentiert, zu berechnen;

   eine Extremumdetektionseinheit (303), die konfiguriert ist, Extrema der Bildpunktwerte anhand der Steigungen zu detektieren;

   eine Zähleinheit (305), die konfiguriert ist, die Anzahl von Extrema, deren Bildpunktwert in einem vorgegebenen Bereich liegt, unter den Extrema, die durch die Extremumdetektionseinheit im Suchbereich detektiert wurden, zu zählen;

   eine Bestimmungseinheit (306), die konfiguriert ist, dann, wenn die Anzahl gleich oder größer als ein vorgegebener Schwellenwert ist, zu bestimmen, dass ein Bildpunkt, der einem Zielbildpunktwert entspricht, in einem Bildbereich eines wiederholten Musters des aufgenommenen Bildes (Ia) enthalten ist;

   eine Einstelleinheit (304), die konfiguriert ist, einen Schwellenwertbereich anhand des Pixelwertes des Extremums, das durch die Extremumdetektionseinheit (303) außerhalb des Suchbereichs detektiert wurde, als den vorgegebenen Bereich einzustellen, wobei

   die Extremumdetektionseinheit (303) Maxima und Minima der Bildpunktwerte anhand der Steigungen detektiert,

   die Einstelleinheit (304) einen ersten Bereich anhand des Bildpunktwertes des Maximums, das durch die Extremumdetektionseinheit (303) detektiert wurde, als den Schwellenwertbereich einstellt und einen zweiten Bereich anhand des Bildpunktwertes des Minimums, das durch die Extremumdetektionseinheit (303) im Suchbereich detektiert wurde, als den Schwellenwertbereich einstellt,

   die Zähleinheit (305) eine erste Anzahl, die die Anzahl der Maxima ist, deren Bildpunktwert im ersten Bereich liegt, unter den Maxima, die durch die Extremumdetektionseinheit (303) detektiert wurden, zählt und die eine zweite Anzahl, die die Anzahl der Minima ist, deren Bildpunktwert im zweiten Bereich liegt, unter den Minima, die durch die Extremumdetektionseinheit im Suchbereich detektiert wurden, zählt, und

   die Bestimmungseinheit (306) anhand der ersten Anzahl und/oder der zweiten Anzahl bestimmt, ob ein Bildpunkt, der dem Zielbildpunktwert entspricht, im Bildbereich des wiederholten Musters enthalten ist.

2. Detektionseinrichtung nach Anspruch 1, die ferner eine Bereichsdetektionseinheit (308) umfasst, die konfiguriert ist, einen Bildbereich (OA1, OA2, OA3), in dem eine Amplitude des Graphen, der die Änderung in den Bildpunktwerten des aufgenommenen Bildes (Ia) repräsentiert, gleich oder kleiner als ein vorgegebener Wert ist, als einen Nicht-Zielbereich zu detektieren,

   wobei die Erfassungseinheit (301) die Zielbildpunktwerte aus einem anderen Bildbereich als dem Nicht-Zielbereich im aufgenommenen Bild (Ia) erfasst.

3. Detektionseinrichtung nach Anspruch 1 oder 2, die ferner eine Eliminiereinheit (250) umfasst, die konfiguriert ist, Frequenzkomponenten einer vorgegebenen Frequenz oder darunter durch einen Filtervorgang für den Graphen, der die Änderung in den Bildpunktwerten des aufgenommenen Bildes (Ia) repräsentiert, zu eliminieren, wobei die Erfassungseinheit (301) die Zielbildpunktwerte des aufgenommenen Bildes, von dem der Filtervorgang durchgeführt worden ist, durch die Eliminiereinheit (250) erfasst.

4. Detektionseinrichtung nach einem der Ansprüche 1 bis 3, die ferner eine Periodenberechnungseinheit (309) umfasst, die konfiguriert ist, eine Periode des Graphen, der die Änderung in den Bildpunktwerten des erfassten Bildes (Ia) repräsentiert, zu berechnen, wobei die Periodenberechnungseinheit (309) den Suchbereich oder den vorgegebenen Schwellenwert entsprechend der berechneten Periode ändert.

5. Disparitätswert-Herleitungseinrichtung, die Folgendes umfasst:

    die Detektionseinrichtung nach einem der Ansprüche 1 bis 4; und
    eine Disparitätswert-Berechnungseinheit (350), die konfiguriert ist, einen Disparitätswert für den Gegenstand anhand des aufgenommenen Bildes (Ia), das durch Abbilden des Gegenstandes durch die Bilderzeugungseinheit (10a) erfasst wurde, und eines weiteren aufgenommenen Bildes (Ib), das durch Abbilden des Gegenstandes durch eine weitere Bilderzeugungseinheit (10b), die bei einer Position angeordnet ist, die von einer Position der Bilderzeugungseinheit (10a) verschieden ist, erfasst wurde, zu bestimmen und auszugeben, wobei die Detektionseinrichtung ein Bestimmungsergebnis ausgibt, das durch die Bestimmungseinheit (306), die anzeigt, ob ein Bildpunkt, der dem Zielbildpunktwert entspricht, in einem Bildbereich eines wiederholten Musters enthalten ist, bestimmt wurde.

6. Gegenstandserkennungseinrichtung, die die Detektionseinrichtung nach einem der Ansprüche 1 bis 4 umfasst, wobei die Detektionseinrichtung detektiert, ob ein Bildbereich eines Zielbildes ein wiederholtes Muster enthält, und die Gegenstandserkennungseinrichtung ferner eine Ablehnungsbestimmungseinheit (503) umfasst, die konfiguriert ist, eine Ablehnung des Zielbildes zu bestimmen, falls das wiederholte Muster, das durch die Detektionseinrichtung detektiert wurde, eine vorgegebene Bedingung erfüllt.

7. Gegenstandserkennungseinrichtung nach Anspruch 6, wobei die Erfassungseinheit (301) jeden Bildpunktwert des Zielbildes im aufgenommenen Bild (Ia) als den Zielbildpunktwert erfasst und die Ablehnungsbestimmungseinheit (503) anhand der Anzahl von Bildpunkten, für die durch die Bestimmungseinheit (503) bestimmt wurde, dass sie in einem Bildbereich eines wiederholten Musters enthalten sind, und der Anzahl von Bildpunkten im Zielbild bestimmt, ob das Zielbild abgelehnt werden soll.

8. Gegenstandserkennungseinrichtung nach Anspruch 6, wobei die Ablehnungsbestimmungseinheit (503) die Anzahl von Bildpunkten, für die die durch die Bestimmungseinheit (503) bestimmt wurde, dass sie in einem Bildbereich eines wiederholten Musters enthalten sind, für jede Zeile des Zielbildes zählt, anhand der Anzahl von Bildpunkten, die für jede der Zeilen gezählt wurde, bestimmt, ob jede der Zeilen das wiederholte Muster enthält, und anhand der Anzahl der Zeilen, die das wiederholte Muster enthalten, bestimmt, ob das Zielbild abgelehnt werden soll.

9. Gegenstandserkennungseinrichtung nach Anspruch 6, wobei die Ablehnungsbestimmungseinheit (503) Folgendes umfasst:

    eine Erzeugungseinheit (531), die konfiguriert ist, für jede Zeile des Zielbildes ein Histogramm zu erzeugen, das der Anzahl von Bildpunkten, die durch die Bestimmungseinheit (503) bestimmt wurden, in einem Bildbereich eines wiederholten Musters enthalten zu sein, entspricht; und
    eine Vergleichseinheit (532), die konfiguriert ist, das Histogramm mit einem vorgegebenen Modellhistogramm zu vergleichen, wobei
    die Ablehnungsbestimmungseinheit (503) anhand eines Vergleichsergebnisses, das durch die Vergleichseinheit erfasst wurde, bestimmt, ob das Zielbild abgelehnt werden soll.

10. Gegenstandserkennungseinrichtung nach Anspruch 6, wobei die Ablehnungsbestimmungseinheit (503) Folgendes umfasst:

    eine Teilungseinheit (541), die konfiguriert ist, das Zielbild in mehrere Blöcke zu teilen;
    eine Blockbestimmungseinheit (542), die konfiguriert ist, für jeden Block dann, wenn ein wiederholtes Muster, das in dem Block enthalten ist, eine vorgegebene Bedingung erfüllt, eine Ablehnung des jeweiligen Blocks zu bestimmen; und

eine Zielbildbestimmungseinheit (543), die konfiguriert ist, anhand der Anzahl der Blöcke, die von der Blockbestimmungseinheit bestimmt wurde, abgelehnt zu werden, zu bestimmen, ob das Zielbild abgelehnt werden soll.

11. Einrichtungssteuersystem, das Folgendes umfasst:

die Gegenstanderkennungseinrichtung nach einem der Ansprüche 6 bis 10 und

eine Steuereinrichtung (6), die konfiguriert ist, ein Steuerziel anhand eines Ergebnisses eines Erkennungsvorganges, der durch die Gegenstandserkennungseinrichtung durchgeführt wird, zu steuern.

12. Detektionsverfahren, das Folgendes umfasst:

Erfassen jedes Bildpunktwertes von einem aufgenommenen Bild (Ia), das durch Abbilden eines Gegenstandes durch eine Bilderzeugungseinheit (10a) erfasst wurde, als einen Zielbildpunktwert;

Berechnen jeder Steigung zwischen zwei benachbarten Punkten auf einem Graphen, der eine Änderung in den Bildpunktwerten in einem vorgegebenen Suchbereich, der bei einem Bildpunkt beginnt, der jedem Zielbildpunktwert entspricht, repräsentiert;

Detektieren von Extrema der Bildpunktwerte anhand der Steigungen;

Zählen der Anzahl von Extrema, deren Bildpunktwert in einem vorgegebenen Bereich liegt, unter den Extrema, die im Suchbereich detektiert wurden;

Bestimmen dann, wenn die Anzahl gleich oder größer als ein vorgegebener Schwellenwert ist, dass ein Bildpunkt, der einem Zielbildpunktwert entspricht, in einem Bildbereich eines wiederholten Musters des aufgenommenen Bildes (Ia) enthalten ist;

Einstellen eines Schwellenwertbereichs anhand der Pixelwerte des Extremums, das außerhalb des Suchbereichs detektiert wurde, als den vorgegebenen Bereich, wobei

Maxima und Minima der Bildpunktwerte anhand der Steigungen detektiert werden,

ein erster Bereich anhand des Bildpunktwertes des Maximums als der Schwellenwertbereich eingestellt wird und ein zweiter Bereich anhand des Bildpunktwertes des Minimums, das im Suchbereich detektiert wurde, als der Schwellenwertbereich eingestellt wird,

eine erste Anzahl, die die Anzahl der Maxima ist, deren Bildpunktwert im ersten Bereich liegt, unter den Maxima gezählt wird und eine zweite Anzahl, die die Anzahl der Minima ist, deren Bildpunktwert im zweiten Bereich liegt, unter den Minima, die im Suchbereich detektiert wurden, gezählt wird, und

anhand der ersten Anzahl und/oder der zweiten Anzahl bestimmt wird, ob ein Bildpunkt, der dem Zielbildpunktwert entspricht, im Bildbereich des wiederholten Musters enthalten ist.

13. Programm, das bewirkt, dass ein Computer arbeitet als:

eine Erfassungseinheit (301), die konfiguriert ist, jeden Bildpunktwert von einem aufgenommenen Bild (Ia), das durch Abbilden eines Gegenstandes durch eine Bilderzeugungseinheit (10a) erfasst wurde, als einen Zielbildpunktwert zu erfassen;

eine Steigungsberechnungseinheit (302), die konfiguriert ist, jede Steigung zwischen zwei benachbarten Punkten auf einem Graphen, der eine Änderung in den Bildpunktwerten in einem vorgegebenen Suchbereich, der bei einem Bildpunkt beginnt, der jedem Zielbildpunktwert entspricht, repräsentiert, zu berechnen;

eine Extremumdetektionseinheit (303), die konfiguriert ist, Extrema der Bildpunktwerte anhand der Steigungen zu detektieren;

eine Zähleinheit (305), die konfiguriert ist, die Anzahl von Extrema, deren Bildpunktwert in einem vorgegebenen Bereich liegt, unter den Extrema, die durch die Extremumdetektionseinheit im Suchbereich detektiert wurden, zu zählen;

eine Bestimmungseinheit (306), die konfiguriert ist, dann, wenn die Anzahl gleich oder größer als ein vorgegebener Schwellenwert ist, zu bestimmen, dass ein Bildpunkt, der einem Zielbildpunktwert entspricht, in einem Bildbereich eines wiederholten Musters des aufgenommenen Bildes (Ia) enthalten ist;

eine Einstelleinheit (304), die konfiguriert ist, einen Schwellenwertbereich anhand des Pixelwertes des Extremums, das durch die Extremumdetektionseinheit (303) außerhalb des Suchbereichs detektiert wurde, als den vorgegebenen Bereich einzustellen, wobei

die Extremumdetektionseinheit (303) Maxima und Minima der Bildpunktwerte anhand der Steigungen detektiert,

die Einstelleinheit (304) einen ersten Bereich anhand des Bildpunktwertes des Maximums, das durch die Extremumdetektionseinheit (303) detektiert wurde, als den Schwellenwertbereich einstellt und einen zweiten Bereich anhand des Bildpunktwertes des Minimums, das durch die Extremumdetektionseinheit (303) im Suchbereich detektiert wurde, als den Schwellenwertbereich einstellt,

die Zähleinheit (305) eine erste Anzahl, die die Anzahl der Maxima ist, deren Bildpunktwert im ersten Bereich liegt, unter den Maxima, die durch die Extremumdetektionseinheit (303) detektiert wurden, zählt und die eine zweite Anzahl, die die Anzahl der Minima ist, deren Bildpunktwert im zweiten Bereich liegt, unter den Minima, die durch die Extremumdetektionseinheit im Suchbereich detektiert wurden, zählt, und

die Bestimmungseinheit (306) anhand der ersten Anzahl und/oder der zweiten Anzahl bestimmt, ob ein Bildpunkt, der dem Zielbildpunktwert entspricht, im Bildbereich des wiederholten Musters enthalten ist.

## Revendications

1. Dispositif de détection comprenant :

    une unité d'acquisition (301) configurée pour acquérir chaque valeur de pixel d'une image capturée (la) acquise par la mise en image d'un objet par une unité d'imagerie (10a), en tant que valeur de pixel cible ;
    une unité de calcule de pente (302) configurée pour calculer chaque pente entre deux points adjacents sur un graphique représentant un changement de valeurs de pixel dans une plage de recherche prédéterminée au niveau d'un pixel correspondant à chaque valeur de pixel cible ;
    une unité de détection d'extremum (303) configurée pour détecter les extremums des valeurs de pixel sur la base des pentes ;
    une unité de comptage (305) configurée pour compter le nombre d'extremums dont la valeur de pixel se trouve dans une plage prédéterminée parmi les extremums détectés par l'unité de détection d'extremum dans la plage de recherche ;
    une unité de détermination (306) configurée pour, lorsque le nombre est supérieur ou égal à un seuil prédéterminé, déterminer qu'un pixel correspondant à la valeur de pixel cible est inclus dans une zone d'image d'un motif répété de l'image capturée (la) ;
    une unité d'établissement (304) configurée pour établir une plage de seuil en tant que plage prédéterminée sur la base de la valeur de pixel de l'extremum détecté par l'unité de détection d'extremum (303) à l'extérieur de la plage de recherche,
    l'unité de détection d'extremum (303) détectant des maximums et des minimums de valeurs de pixel sur la base des pentes,
    l'unité d'établissement (304) établissant une première plage en tant que plage de seuil sur la base de la valeur de pixel des maximums détectés par l'unité de détection d'extremum (303) et établissant une deuxième plage en tant que plage de seuil sur la base de la valeur de pixel des minimums détectés par l'unité de détection d'extremum (303) dans la plage de recherche,
    l'unité de comptage (305) comptant un premier nombre qui est le nombre des maximums dont la valeur de pixel se trouve dans la première plage parmi les maximums détectés par l'unité de détection d'extremum (303) et comptant un deuxième nombre qui est le nombre de minimums dont la valeur de pixel se trouve dans la deuxième plage parmi les minimums détectés par l'unité de détection d'extremum dans la plage de recherche, et
    l'unité de détermination (306) déterminant si un pixel correspondant à la valeur de pixel cible est inclus dans la zone d'image du motif répété sur la base d'au moins l'un du premier nombre et du deuxième nombre.

2. Dispositif de détection selon la revendication 1, comprenant en outre une unité de détection de zone (308) configurée pour détecter une zone d'image (OA1, OA2, OA3) dans laquelle une amplitude du graphique représentant le changement des valeurs de pixel de l'image capturée (la) est inférieure ou égale à une valeur prédéterminée en tant que zone non cible,
   l'unité d'acquisition (301) acquérant la valeur de pixel cible depuis une zone d'image autre que la zone non cible dans l'image capturée (la).

3. Dispositif de détection selon la revendication 1 ou 2, comprenant en outre une unité d'élimination (250) configurée pour éliminer des composantes de fréquence d'une fréquence prédéterminée ou moins par le biais d'un processus de filtrage pour le graphique représentant le changement des valeurs de pixel de l'image capturée (Ia),
   l'unité d'acquisition (301) acquérant les valeurs de pixel cibles de l'image capturée à partir de laquelle le processus de filtrage a été effectué par l'unité d'élimination (250).

4. Dispositif de détection selon l'une quelconque des revendications 1 à 3, comprenant en outre une unité de calcul de période (309) configurée pour calculer une période du graphique représentant le changement des valeurs de pixel de l'image capturée (Ia),

l'unité de calcul de période (309) modifiant la plage de recherche ou le seuil prédéterminé en conformité avec la période calculée.

5. Dispositif de dérivation de valeur de disparité comprenant :

l'unité de détection selon l'une quelconque des revendications 1 à 4 ; et

une unité de calcul de valeur de disparité (350) configurée pour déterminer et produire en sortie une valeur de disparité pour l'objet sur la base de l'image capturée (Ia) acquise par la mise en image de l'objet par l'unité d'imagerie (10a) et d'une autre image capturée (Ib) acquise par la mise en image de l'objet par une autre unité d'imagerie (10b) disposée à une position différente d'une position de l'unité d'imagerie (10a),

le dispositif de détection produisant en sortie un résultat de détermination déterminé par l'unité de détermination (306) indiquant si un pixel correspondant à la valeur de pixel cible est inclus dans une zone d'image d'un motif répété.

6. Dispositif de reconnaissance d'objet comprenant le dispositif de détection selon l'une quelconque des revendications 1 à 4,

le dispositif de détection détectant le fait qu'une zone d'image d'une image cible comprend un motif répété ou non,

le dispositif de reconnaissance d'objet comprenant en outre une unité de détermination de refus (503) configurée pour déterminer un refus de l'image cible dans un cas où le motif répété détecté par le dispositif de détection satisfait une condition prédéterminée.

7. Dispositif de reconnaissance d'objet selon la revendication 6,

dans lequel l'unité d'acquisition (301) acquiert chaque valeur de pixel de l'image cible dans l'image capturée (Ia) en tant que valeur de pixel cible, et

l'unité de détermination de refus (503) détermine si l'image cible à refuser sur la base du nombre de pixels déterminé doit être incluse dans une zone d'image d'un motif répété dans l'image cible par l'unité de détermination (306) et du nombre de pixels dans l'image cible.

8. Dispositif de reconnaissance d'objet selon la revendication 6, dans lequel l'unité de détermination de refus (503) compte le nombre de pixels déterminé à inclure dans une zone d'image d'un motif répété par l'unité de détermination (503) pour chacune des lignes de l'image cible, détermine si chacune des lignes comprend le motif répété sur la base du nombre de pixels compté pour chacune des lignes, et déterminer si l'image cible doit être refusée sur la base du nombre des lignes comprenant le motif répété.

9. Dispositif de reconnaissance d'objet selon la revendication 6, dans lequel l'unité de détermination de refus (503) comprend :

une unité de génération (531) configurée pour générer un histogramme correspondant au nombre de pixels déterminé à inclure dans la zone d'image du motif répété par l'unité de détermination (503) pour chacun des lignes de l'image cible ; et

une unité de comparaison (532) configurée pour comparer l'histogramme à un histogramme de modèle prédéterminé, et

une unité de détermination de refus (503) déterminant si l'image cible doit être refusée sur la base d'un résultat de comparaison acquis par l'unité de comparaison.

10. Dispositif de reconnaissance d'objet selon la revendication 6, dans lequel l'unité de détermination de refus (503) comprend :

une unité de division (541) configurée pour diviser l'image cible en une pluralité de blocs ;

une unité de détermination de bloc (542) configurée pour, pour chaque bloc, dans un cas où le motif répété inclus dans chaque bloc satisfait une condition prédéterminée, déterminer un refus de chaque bloc ; et

une unité de détermination d'image cible (543) configurée pour déterminer si l'image cible doit être refusée sur la base du nombre de blocs déterminés à refuser par l'unité de détermination de bloc.

11. Système de commande de dispositif comprenant :

le dispositif de reconnaissance d'objet selon l'une quelconque des revendications 6 à 10 ; et
un dispositif de commande (6) configuré pour commander une cible de commande sur la base d'un résultat d'un processus de reconnaissance effectué par le dispositif de reconnaissance d'objet.

**12.** Procédé de détection comprenant :

l'acquisition de chaque valeur de pixel d'une image capturée (la) acquise par la mise en image d'un objet par une unité d'imagerie (10a), en tant que valeur de pixel cible ;
le calcul de chaque pente entre deux points adjacents sur un graphique représentant un changement de valeurs de pixel dans une plage de recherche prédéterminée commençant au niveau d'un pixel correspondant à chaque valeur de pixel ;
la détection d'extremums des valeurs de pixel sur la base des pentes ;
le comptage du nombre d'extremums dont la valeur de pixel se trouve dans une plage prédéterminée parmi les extremums détectés dans la plage de recherche ;
la détermination, lorsque le nombre est supérieur ou égal à un seuil prédéterminé, du fait qu'un pixel correspondant à la valeur de pixel cible est inclus dans une zone d'image d'un motif répété de l'image capturée (la) ;
l'établissement d'une plage de seuil en tant que plage prédéterminée sur la base des valeurs de pixel de l'extremum détecté à l'extérieur la plage de recherche,
dans lequel des maximums et des minimums des valeurs de pixel sont détectés sur la base des pentes,
une première plage est établie en tant que plage de seuil sur la base de la valeur de pixel des maximums et une deuxième plage est établie en tant que plage de seuil sur la base de la valeur de pixel des minimums détectés dans la plage de recherche,
un premier nombre qui est le nombre des maximums dont la valeur de pixel se trouve dans la première plage est compté parmi les maximums et un deuxième nombre qui est le nombre des minimums dont la valeur de pixel se trouve dans la deuxième plage est compté parmi les minimums détectés dans la plage de recherche, et
il est déterminé si un pixel correspondant à la valeur de pixel cible est inclus dans la zone d'image du motif répété que la base d'au moins l'un du premier nombre et du deuxième nombre.

**13.** Programme amenant un ordinateur à fonctionner comme :

une unité d'acquisition (301) configurée pour acquérir chaque valeur de pixel d'une image capturée (la) acquise par la mise en image d'un objet par une unité d'imagerie (10a), en tant que valeur de pixel cible ;
une unité de calcule de pente (302) configurée pour calculer chaque pente entre deux points adjacents sur un graphique représentant un changement de valeurs de pixel dans une plage de recherche prédéterminée au niveau d'un pixel correspondant à chaque valeur de pixel cible ;
une unité de détection d'extremum (303) configurée pour détecter les extremums des valeurs de pixel sur la base des pentes ;
une unité de comptage (305) configurée pour compter le nombre d'extremums dont la valeur de pixel se trouve dans une plage prédéterminée parmi les extremums détectés par l'unité de détection d'extremum dans la plage de recherche ;
une unité de détermination (306) configurée pour, lorsque le nombre est supérieur ou égal à un seuil prédéterminé, déterminer qu'un pixel correspondant à la valeur de pixel cible est inclus dans une zone d'image d'un motif répété de l'image capturée (la) ;
une unité d'établissement (304) configurée pour établir une plage de seuil en tant que plage prédéterminée sur la base de la valeur de pixel de l'extremum détecté par l'unité de détection d'extremum (303) à l'extérieur de la plage de recherche,
l'unité de détection d'extremum (303) détectant des maximums et des minimums de valeurs de pixel sur la base des pentes,
l'unité d'établissement (304) établissant une première plage en tant que plage de seuil sur la base de la valeur de pixel des maximums détectés par l'unité de détection d'extremum (303) et établissant une deuxième plage en tant que plage de seuil sur la base de la valeur de pixel des minimums détectés par l'unité de détection d'extremum (303) dans la plage de recherche,
l'unité de comptage (305) comptant un premier nombre qui est le nombre des maximums dont la valeur de pixel se trouve dans la première plage parmi les maximums détectés par l'unité de détection d'extremum (303) et comptant un deuxième nombre qui est le nombre de minimums dont la valeur de pixel se trouve dans la deuxième plage parmi les minimums détectés par l'unité de détection d'extremum dans la plage de recherche, et
l'unité de détermination (306) déterminant si un pixel correspondant à une valeur de pixel cible est inclus dans la zone d'image du motif répété sur la base d'au moins l'un du premier nombre et du deuxième nombre.

# FIG.1

# FIG.2A

# FIG.2B

## FIG.3

## FIG.4

# FIG.5A

# FIG.5B

# FIG.6

# FIG.7

# FIG.8

# FIG.9

PATTERN DETECTING UNIT — 300

PIXEL VALUE ACQUIRING UNIT — 301

SLOPE CALCULATING UNIT — 302

EXTREMUM DETECTING UNIT — 303

THRESHOLD SETTING UNIT — 304

COUNTER UNIT — 305

VALIDITY DETERMINING UNIT — 306

CONTROL UNIT — 307

STORAGE UNIT — 310

PIXEL VALUE REGISTER — 311

SLOPE REGISTER — 312

THRESHOLD REGISTER — 313

MAXIMUM COUNT REGISTER — 314

MINIMUM COUNT REGISTER — 315

# FIG.10

DISPARITY VALUE CALCULATION PROCESSING UNIT

350

REFERENCE
IMAGE

COMPARISON
IMAGE

351
COST
CALCULA-
TING UNIT

COST
VALUE

352
DETERMI-
NING UNIT

DISPARITY
VALUE

353
GENERA-
TION UNIT

DISPARITY
IMAGE

# FIG.11

START

GENERATE ANALOG IMAGE SIGNAL — S1-1

GENERATE ANALOG IMAGE SIGNAL — S1-2

PERFORM CONVERSION INTO DIGITAL IMAGE DATA — S2-1

PERFORM CONVERSION INTO DIGITAL IMAGE DATA — S2-2

OUTPUT DATA OF COMPARISON IMAGE — S3-1

OUTPUT DATA OF REFERENCE IMAGE — S3-2

CALCULATE COST VALUE C — S4

GENERATE DISPARITY IMAGE — S5

END

FIG.12

START

ACQUIRE PIXEL VALUE: data(t)  S11

t?  S12

t=1

t≥2

CALCULATE SLOPE  S21

IS DATA PRESENT IN SLOPE REGISTER AND PIXEL VALUE REGISTER?  S13

NO

YES

CALCULATE SLOPE  S14

HAS SLOPE CHANGED FROM POSITIVE TO NEGATIVE?  S15

NO

YES

HAS SLOPE CHANGED FROM NEGATIVE TO POSITIVE?  S18

NO

YES

DETERMINE PIXEL VALUE (BEFORE data(1)) IN PIXEL VALUE REGISTER TO BE MAXIMUM VALUE  S16

DETERMINE PIXEL VALUE (BEFORE data(1)) IN PIXEL VALUE REGISTER TO BE MINIMUM VALUE  S19

UPDATE MAXIMUM UPPER LIMIT VALUE UU AND MAXIMUM LOWER LIMIT VALUE UL  S17

UPDATE MINIMUM UPPER LIMIT VALUE LU AND MINIMUM LOWER LIMIT VALUE LL  S20

IS DATA PRESENT IN THRESHOLD REGISTER?  S22

NO

YES

HAS SLOPE CHANGED FROM POSITIVE TO NEGATIVE?  S23

NO

YES

HAS SLOPE CHANGED FROM NEGATIVE TO POSITIVE?  S26

NO

YES

UL≤MAXIMUM VALUE≤UU?  S24

NO

YES

LL≤MINIMUM VALUE≤LU?  S27

NO

YES

COUNT UP MAXIMUM COUNT  S25

COUNT UP MINIMUM COUNT  S28

STORE SLOPE  S29

STORE data(t)  S30

IS t FINAL?  S31

NO

YES

INCREMENT t  S32

OUTPUT COUNT VALUE  S33

IS COUNT VALUE PREDETERMINED VALUE OR MORE?  S34

NO

YES

SET DETECTION FLAG OFF  S36

SET DETECTION FLAG ON  S35

RESET COUNT REGISTER  S37

IS LINE LAST LINE?  S38

NO

YES

ERASE DATA OF OTHER REGISTER  S39

END

# FIG.13

# FIG.14

┌300a

**PATTERN DETECTING UNIT**

┌308
**NON-TARGET AREA
DETECTING UNIT**

┌310
**STORAGE UNIT**

┌301
**PIXEL VALUE
ACQUIRING UNIT**

┌311
**PIXEL VALUE
REGISTER**

┌302
**SLOPE
CALCULATING UNIT**

┌312
**SLOPE REGISTER**

┌303
**EXTREMUM
DETECTING UNIT**

┌313
**THRESHOLD
REGISTER**

┌304
**THRESHOLD
SETTING UNIT**

┌314
**MAXIMUM COUNT
REGISTER**

┌305
**COUNTER UNIT**

┌315
**MINIMUM COUNT
REGISTER**

┌306
**VALIDITY
DETERMINING UNIT**

┌307
**CONTROL UNIT**

# FIG.15

# FIG.16

# FIG.17

OBJECT RECOGNIZING DEVICE 1a

DISPARITY VALUE DERIVING UNIT 3a

| IMAGE ACQUIRING UNIT 100 | | CONVERSION UNIT 200 | | FILTER PROCESSING UNIT 250 | | PATTERN DETECTING UNIT 300 | | RECOGNITION PROCESSING UNIT 5 | | VEHICLE CONTROL DEVICE 6 |

LUMINANCE IMAGE

LUMINANCE IMAGE

REFERENCE IMAGE

REFERENCE IMAGE

DETECTION FLAG

COMPARISON IMAGE

DISPARITY VALUE CALCULATION PROCESSING UNIT 350

DISPARITY IMAGE

RECOGNITION INFORMATION

EP 3 115 965 B1

57

FIG.18A  ONE DIMENSION: $\begin{bmatrix} -a & 1+2a & -a \end{bmatrix}$

FIG.18B  TWO DIMENSIONS: $\begin{bmatrix} 0 & -1 & 0 \\ -1 & 5 & -1 \\ 0 & -1 & 0 \end{bmatrix}$

FIG.19A

FIG.19B

FIG.20A ONE DIMENSION: $\begin{bmatrix} -a & 0 & a \end{bmatrix}$

FIG.20B TWO DIMENSIONS: $\begin{bmatrix} 0 & -1 & 0 \\ -1 & 4 & -1 \\ 0 & -1 & 0 \end{bmatrix}\begin{bmatrix} -1 & 0 & 1 \\ -2 & 0 & 2 \\ -1 & 0 & 1 \end{bmatrix}$

LAPLACIAN FILTER    SOBEL FILTER

FIG.21A

FIG.21B

# FIG.22

# FIG.23

EP 3 115 965 B1

# FIG.24

┌300b

PATTERN DETECTING UNIT

┌309
PERIOD
CALCULATING
UNIT

┌310
STORAGE UNIT

┌301
PIXEL VALUE
ACQUIRING UNIT

┌311
PIXEL VALUE
REGISTER

┌302
SLOPE
CALCULATING
UNIT

┌312
SLOPE REGISTER

┌303
EXTREMUM
DETECTING UNIT

┌313
THRESHOLD
REGISTER

┌304
THRESHOLD
SETTING UNIT

┌314
MAXIMUM COUNT
REGISTER

┌305
COUNTER UNIT

┌315
MINIMUM COUNT
REGISTER

┌306
VALIDITY
DETERMINING
UNIT

┌307
CONTROL UNIT

# FIG.25

| AREA A1 | AREA A2 | AREA A3 | AREA A4 | ⋯ | AREA AN |
|---------|---------|---------|---------|---|---------|

# FIG.26

EP 3 115 965 B1

# FIG.27

REJECTION UNIT 500

REFERENCE IMAGE

PARTIAL IMAGE INFORMATION

501
INPUT UNIT

INPUT INFORMATION

502
PATTERN DETECTING UNIT

DETECTION FLAG

503
REJECTION DETERMINATION UNIT

DETERMINATION RESULT

504
OUTPUT UNIT

PARTIAL IMAGE INFORMATION (REJECTION FLAG)

## FIG.28A

## FIG.28B

DISPARITY
VALUE dp

FIG.29A

FIG.29B

FIG.30A

FIG.30B

FIG.30C

FIG.30D

# FIG.31

START

READ PARTIAL IMAGE ~S51

PERFORM REPEATED PATTERN DETECTION PROCESS FOR EACH PIXEL OF PARTIAL IMAGE ~S52

DETERMINE RATIO OF NUMBER OF PIXELS INCLUDED IN REPEATED PATTERN TO TOTAL NUMBER OF PIXELS ~S53

OUTPUT DETERMINATION RESULT ~S54

END

# FIG.32

START

READ PARTIAL IMAGE ~S61

PERFORM REPEATED PATTERN DETECTION PROCESS FOR EACH PIXEL OF PARTIAL IMAGE ~S62

PERFORM REJECTION DETERMINATION BY COUNTING NUMBER OF PIXELS INCLUDED IN REPEATED PATTERN FOR EACH LINE ~S63

OUTPUT DETERMINATION RESULT ~S64

END

# FIG.33

START

READ PARTIAL IMAGE ~S71

PERFORM REPEATED PATTERN
DETECTION PROCESS FOR EACH LINE OF ~S72
PARTIAL IMAGE

PERFORM REJECTION DETERMINATION
BY COUNTING NUMBER OF LINES ~S73
INCLUDING REPEATED PATTERN

OUTPUT DETERMINATION RESULT ~S74

END

FIG.34B

FIG.34D

FIG.34A

FIG.34C

FIG.34E

# FIG.35

REJECTION UNIT ⌐500a

RE-
FERENCE
IMAGE

PARTIAL
IMAGE
INFORMA-
TION

⌐501
INPUT
UNIT

INPUT
INFOR-
MATION

⌐502
PATTERN
DETECT-
ING UNIT

DETEC-
TION
FLAG

⌐503a
REJEC-
TION
DETER-
MINA-
TION
UNIT

DETER
MINA-
TION
RESULT

⌐504
OUTPUT
UNIT

PARTIAL
IMAGE
INFORMA-
TION
(REJEC-
TION
FLAG)

⌐505
MODEL
INPUT
UNIT

MODEL HISTOGRAM

# FIG.36

REJECTION DETERMINATION UNIT ⌐503a

DETECTION
FLAG

⌐531
HISTO-
GRAM
GENERA-
TING UNIT

HISTOGRAM

⌐532
COMPARI-
SON UNIT

COMPARI-
SON
RESULT

⌐533
DETERMI-
NATION
UNIT

DETERMI-
NATION
RESULT

MODEL HISTOGRAM

FIG.37A

FIG.37B

# FIG.38

```
                    ┌──────────┐
                    │  START   │
                    └────┬─────┘
                         ↓
   ┌─────────────────────────────────────────────┐
   │ READ PARTIAL IMAGE AND MODEL HISTOGRAM       │──S81
   └─────────────────────┬───────────────────────┘
                         ↓
   ┌─────────────────────────────────────────────┐
   │ PERFORM REPEATED PATTERN DETECTION           │──S82
   │ PROCESS FOR EACH PIXEL OF PARTIAL IMAGE      │
   └─────────────────────┬───────────────────────┘
                         ↓
   ┌─────────────────────────────────────────────┐
   │           GENERATE HISTOGRAM                 │──S83
   └─────────────────────┬───────────────────────┘
                         ↓
   ┌─────────────────────────────────────────────┐
   │ COMPARE GENERATED HISTOGRAM WITH             │──S84
   │ MODEL HISTOGRAM                              │
   └─────────────────────┬───────────────────────┘
                         ↓
   ┌─────────────────────────────────────────────┐
   │ PERFORM DETERMINATION BASED ON               │──S85
   │ COMPARISON RESULT                            │
   └─────────────────────┬───────────────────────┘
                         ↓
   ┌─────────────────────────────────────────────┐
   │        OUTPUT DETERMINATION RESULT           │──S86
   └─────────────────────┬───────────────────────┘
                         ↓
                    ┌──────────┐
                    │   END    │
                    └──────────┘
```

# FIG.39

# FIG.40

```
        ┌─────────────┐
        │    START    │
        └─────────────┘
               │
               ▼
┌──────────────────────────────────┐
│      READ PARTIAL IMAGE          │──S91
└──────────────────────────────────┘
               │
               ▼
┌──────────────────────────────────┐
│    PERFORM REPEATED PATTERN      │
│  DETECTION PROCESS FOR EACH PIXEL│──S92
│        OF PARTIAL IMAGE          │
└──────────────────────────────────┘
               │
               ▼
┌──────────────────────────────────┐
│   DIVIDE PARTIAL IMAGE INTO BLOCKS│──S93
└──────────────────────────────────┘
               │
               ▼
┌──────────────────────────────────┐
│   PERFORM REJECTION DETERMINATION│──S94
│         FOR EACH BLOCK           │
└──────────────────────────────────┘
               │
               ▼
┌──────────────────────────────────┐
│ PERFORM COMPREHENSIVE REJECTION  │──S95
│        DETERMINATION             │
└──────────────────────────────────┘
               │
               ▼
┌──────────────────────────────────┐
│  OUTPUT DETERMINATION RESULT     │──S96
└──────────────────────────────────┘
               │
               ▼
        ┌─────────────┐
        │     END     │
        └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5409237 B

### Non-patent literature cited in the description

- **MITCHELL et al.** A Max-Min Measure for Image Texture Analysis. *IEEE TRANSACTIONS ON COMPUTERS,* 01 April 1977, vol. C-26 (4), ISSN 0018-9340, 408-414
- Texture coarseness: Further experiments. **HAYES K C JR et al.** IEEE TRANSACTIONS ON SYSTEMS, MAN AND CYBERNETICS. IEEE INC, 01 September 1974, 467-472
- **A. ROSENFELD.** A Note on Automatic Detection of Texture Gradients. *IEEE TRANSACTIONS ON COMPUTERS,* 01 October 1975, vol. C-24 (10), ISSN 0018-9340, 988-991
- IMAGE DATA ACQUISITION, PROCESSING AND OBJECT RECOGNITION OFR USE IN A MACHINE VISION SYSTEM. **BIZHAN NIKRAVAN.** PhD thesis. Department of Mechanical Engineering, 01 August 1987
- VISUAL TEXTURE ANALYSIS. **ROSENFELD AZRIEL et al.** IP.COM JOURNAL. IP. COM INC, 29 March 2007
- **AJAY MITTAL et al.** Obstacle detection by means of stereo feature matching. *IEEE INTERNATIONAL CONFERENCE ON IMAGE PROCESSING,* October 2014